# EUROPEAN PATENT APPLICATION

(11) **EP 4 210 379 A1**
(43) Date of publication of application: **12.07.2023**
(21) Application number: 21871513.4
(22) Date of filing: 23.09.2021
(51) Int. Cl.: H04W 24/10, H04L 5/00

(54) **METHOD AND DEVICE USED IN COMMUNICATION NODE FOR WIRELESS COMMUNICATION**

(30) Priority: 24.09.2020 CN 202011018314; 19.10.2020 CN 202011115558; 06.11.2020 CN 202011226969
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Zhang, Fan
(86) International application number: PCT/CN2021/119743
(87) International publication number: WO 2022/063144

(57) **Abstract**

Disclosed in the present application are a method and device used in a communication node for wireless communication. The method comprises: a communication node receiving a first signaling, and performing measurements for a first reference signal set and a second reference signal set; sending a second signaling when both a first condition and a second condition are satisfied, the second signaling indicating a target reference signal set and comprising a measurement report; and receiving a third signaling, the third signaling carrying information of a second cell, wherein the first signaling indicates the first reference signal set, the second reference signal set, the first condition, and the second condition, the second signaling and the third signaling are signalings of lower layers of an RRC layer, the first reference signal set is associated with a first cell, the second reference signal set is associated with the second cell, the measurement for the first reference signal set is used to determine whether the first condition is satisfied, and the measurement for the second reference signal set is used to determine whether the second condition is satisfied.

## Description

### TECHNICAL FIELD

The present application relates to transmission methods and devices in wireless communication systems, and in particular to L1/L2 Inter-cell mobility.

### BACKGROUND

The traditional Network Controlled mobility comprises cell-level mobility and beam-level mobility, where the cell-level mobility is dependent on Radio Resource Control (RRC) signaling and the beam-level mobility is not joined by RRC signaling. Before the 3rd Generation Partnership Project (3GPP) R16, the beam-level mobility is only for Beam Management within a single cell. It was decided at the 3 GPPRAN #80 conference that a Work Item (WI) of "Further enhancements on MIMO for NR" will be conducted to support multi-beam operation, for enhancements on Layer 1/ Layer 2 (L1/L2)-centric inter-cell mobility.

### SUMMARY

L1/L2 mobility does not involve RRC signaling interaction, so how a User Equipment (UE) reports beams of neighboring cells and how to determine the performance of L1/L2 mobility are required to be studied.

To address the above problem, the present application provides a solution. The description above only took the scenario of access to Licensed Spectrum for example, though; this disclosure is also applicable to scenarios like access to Unlicensed Spectrum, where similar technical effects can be achieved. Additionally, the adoption of a unified solution for various scenarios contributes to the reduction of hardcore complexity and costs.

Beam-based communications will have negative influence on inter-cell handover, such as extra delay and pingpong effect. Then how to reduce the negative impact and go deeper in improving the performance of users at the cell boundary to meet various demands of application scenarios is an issue remaining to be solved.

To address the above problem, the present application provides a solution. The description above only took Massive Multiple Input Multiple Output (MIMO) and beam-based communication scenarios for example; this disclosure is also applicable to scenarios with Long Term Evolution (LTE) multi-antenna system, where technical effects similar to those in Massive MIMO and beam-based communications can be achieved. Additionally, the adoption of a unified solution for various scenarios contributes to the reduction of hardcore complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The present application provides a method in a first node for wireless communications, comprising:
receiving a first signaling; and performing measurements on a first reference signal set and a second reference signal set; and
transmitting a second signaling when a first condition and a second condition are both satisfied; the second signaling indicating a target reference signal set, the target reference signal set being a subset in the second reference signal set;
receiving a third signaling; the third signaling carrying information for accessing to a second cell;
herein, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, a problem to be solved in the present application includes: how to perform L1/L2 inter-cell mobility.

In one subembodiment, the L1 includes a physical layer.

In one subembodiment, the L2 includes a Medium Access Control (MAC) layer.

In one subembodiment, the L2 includes a Packet Data Convergence Protocol (PDCP) layer.

In one subembodiment, the L2 includes a Radio Link Control (RLC).

In one subembodiment, L1/L2 inter-cell mobility comprises inter-cell beam management.

In one subembodiment, L1/L2 inter-cell mobility comprises inter-cell beam switching.

In one subembodiment, the performing of L1/L2 inter-cell mobility is only dependent upon the physical layer and MAC layer, rather than an RRC layer.

In one subembodiment, configuration of L1/L2 inter-cell mobility is configured in advance by RRC.

In one embodiment, a problem to be solved in the present application includes: for L1/L2 inter-cell mobility, how to perform measurements and how to perform measurement reports.

In one embodiment, characteristics of the above method include: reporting a measurement result via a MAC Control Element (CE) in a MAC layer.

In one embodiment, characteristics of the above method include: determining whether a first condition is satisfied according to a number of indications reported to L2 by L1.

In one embodiment, characteristics of the above method include: determining whether a second condition is satisfied according to a number of indications reported to L2 by L1.

In one embodiment, characteristics of the above method include: when a measurement on a first reference signal set satisfies the first condition, and a measurement on a second reference signal set satisfies the second condition, triggering a measurement report of the MAC layer.

In one embodiment, an advantage of the above method includes: controlling L1/L2 inter-cell mobility according to L1/L2 measurements and measurement reports.

According to one aspect of the present application, characterized in comprising:
receiving a fourth signaling, the fourth signaling being used to determine at least one of a first counting threshold or a second counting threshold of a first counter; a relative magnitude of a result of the measurement on the first reference signal set and a first measurement threshold is used for generating a first indication, the first indication being used to determine an update of the first counter;
when the first counter reaches the second counting threshold, determining that a beam failure occurs in the first cell; and as a response to the action of determining that a beam failure occurs in the first cell, transmitting a first radio signal;
herein, the first condition is related to the first counter satisfying the first counting threshold; the first radio signal is used for initiating a random access procedure; the first counting threshold is not greater than the second counting threshold.

In one embodiment, characteristics of the above method include: when the first counter reaches the first counting threshold, the first condition is satisfied.

In one embodiment, characteristics of the above method include: reusing a counter BFI_COUNTER, by adding a first counting threshold lower than triggering Beam Failure Recovery (BFR) as a threshold that triggers inter-cell beam switching.

In one embodiment, characteristics of the above method include: a first counter being used to determine beam quality of a serving cell.

In one embodiment, an advantage of the above method includes: a same measurement quantity is used for triggering BFR and triggering inter-cell mobility.

In one embodiment, receiving a fourth signaling, the fourth signaling being used to determine a second counting threshold of a first counter; a relative magnitude of a result of the measurement on the first reference signal set and a first measurement threshold is used for generating a first indication, the first indication being used to determine an update of the first counter; when the first counter reaches the second counting threshold, determining that a beam failure occurs in the first cell; and as a response to the action of determining that a beam failure occurs in the first cell, transmitting a first radio signal; the first radio signal is used for initiating a random access procedure.

According to one aspect of the present application, characterized in comprising:
receiving a fifth signaling; the fifth signaling is used to determine a third counting threshold of a second counter; a relative magnitude of a result of the measurement on the second reference signal set and a second measurement threshold is used for generating a second indication, the second indication being used to determine an update of the second counter;
herein, the second condition is related to the second counter satisfying the third counting threshold.

In one embodiment, characteristics of the above method include: when the second counter reaches the third counting threshold, the second condition is satisfied.

In one embodiment, characteristics of the above method include: introducing a second counter, to determine beam quality of a neighboring cell.

In one embodiment, characteristics of the above method include: a third counter being used to determine beam quality of a neighboring cell.

According to one aspect of the present application, characterized in comprising:
as a response to receiving the third signaling, transmitting a second radio signal on the second cell;
herein, the second radio signal is used for initiating a random access procedure, the second radio signal comprising a preamble sequence.

According to one aspect of the present application, characterized in comprising:
receiving a sixth signaling; and as a response to receiving the third signaling, starting a first timer; and/or, when the first timer reaches a first expiration value, determining that a random access procedure performed on the second cell is failed; and/or, after completing the random access procedure on the second cell, and when the first timer is smaller than the first expiration value, stopping the first timer;
herein, the sixth signaling indicates the first expiration value of the first timer.

In one embodiment, characteristics of the above method include: the first timer is a specific timer based on L1/L2 inter-cell mobility.

In one embodiment, characteristics of the above method include: the first timer being expired triggers failure of L1/L2 inter-cell mobility.

According to one aspect of the present application, characterized in comprising:
when a Beam Failure Recovery (BFR) failure occurs in the first cell, dropping determining that a first connection failure occurs if the first timer is running; and/or when the first timer is expired, returning to the first cell if the BFR failure does not occur in the first cell; and/or when the first timer is expired, determining that a second connection failure occurs if the BFR failure occurs in the first cell.

In one embodiment, characteristics of the above method include: the first node maintains connection with the first cell and the second cell simultaneously through Dual Active Protocol Stack (DAPS).

In one embodiment, characteristics of the above method include: when a Beam Failure Recovery (BFR) failure occurs in the first cell, if configured with DAPS, and L1/L2 inter-cell mobility is being performed, not indicating to an upper layer the occurrence of a random access problem, and not triggering a Radio Link Failure (RLF).

In one embodiment, characteristics of the above method include: avoiding triggering of an RLF too early.

According to one aspect of the present application, characterized in that the fourth signaling indicates a first offset and the second counting threshold, the first offset and the second counting threshold being used to determine the first counting threshold.

The present application provides a method in a second node for wireless communications, comprising:
transmitting a first signaling; and performing measurements on a first reference signal set and a second reference signal set; and
receiving a second signaling; the second signaling indicating a target reference signal set, the target reference signal set being a subset in the second reference signal set;
transmitting a third signaling; the third signaling carrying information for accessing to a second cell;
herein, a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

According to one aspect of the present application, characterized in comprising:
transmitting a fourth signaling, the fourth signaling being used to determine at least one of a first counting threshold or a second counting threshold of a first counter;
when the first counter reaches the second counting threshold, it is determined that a beam failure occurs in the first cell; as a response to the phrase that it is determined that a beam failure occurs in the first cell, receiving a first radio signal;
herein, a relative magnitude of a result of the measurement on the first reference signal set and a first measurement threshold is used for generating a first indication, the first indication being used to determine an update of the first counter; the first condition is related to the first counter satisfying the first counting threshold; the first radio signal is used for initiating a random access procedure; the first counting threshold is not greater than the second counting threshold.

In one embodiment, transmitting a fourth signaling, the fourth signaling being used to determine a second counting threshold of a first counter; a relative magnitude of a result of the measurement on the first reference signal set and a first measurement threshold is used for generating a first indication, the first indication being used to determine an update of the first counter; when the first counter reaches the second counting threshold, it is determined that a beam failure occurs in the first cell; and as a response to the action of determining that a beam failure occurs in the first cell, receiving a first radio signal; the first radio signal is used for initiating a random access procedure.

According to one aspect of the present application, characterized in comprising:
transmitting a fifth signaling; the fifth signaling is used to determine a third counting threshold of a second counter;
herein, a relative magnitude of a result of the measurement on the second reference signal set and a second measurement threshold is used for generating a second indication, the second indication being used to determine an update of the second counter; the second condition is related to the second counter satisfying the third counting threshold.

According to one aspect of the present application, characterized in that as a response to receiving the third signaling, a second radio signal is received on the second cell; herein, the second radio signal is used for initiating a random access procedure, the second radio signal comprising a preamble sequence.

According to one aspect of the present application, characterized in comprising:
transmitting a sixth signaling;
herein, the sixth signaling indicates a first expiration value of a first timer; and as a response to receiving the third signaling, the first timer is started; when the first timer reaches the first expiration value, a random access procedure performed on the second cell is determined to be failed; and after completing the random access procedure on the second cell, and when the first timer is smaller than the first expiration value, the first timer is stopped.

According to one aspect of the present application, characterized in that when a Beam Failure Recovery (BFR) failure occurs in the first cell, determining an occurrence of a first connection failure is dropped if the first timer is running; or when the first timer is expired, the first cell is returned if the BFR failure does not occur in the first cell; or when the first timer is expired, an occurrence of a second connection failure is determined if the BFR failure occurs in the first cell.

According to one aspect of the present application, characterized in that the fourth signaling indicates a first offset and the second counting threshold, the first offset and the second counting threshold being used to determine the first counting threshold.

The present application provides a first node for wireless communications, comprising:
a first receiver, receiving a first signaling; and receiving a third signaling; the third signaling carrying information for accessing to a second cell; and performing measurements on a first reference signal set and a second reference signal set; and
a first transmitter, transmitting a second signaling when a first condition and a second condition are both satisfied; the second signaling indicating a target reference signal set, the target reference signal set being a subset in the second reference signal set;
herein, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

The present application provides a second node for wireless communications, comprising:
a second transmitter, transmitting a first signaling; transmitting a third signaling; the third signaling carrying information for accessing to a second cell; and performing measurements on a first reference signal set and a second reference signal set; and
a second receiver, receiving a second signaling; the second signaling indicating a target reference signal set, the target reference signal set being a subset in the second reference signal set;
herein, a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, compared with the prior art, the present application is advantageous in the following aspects:
- introducing a second counting threshold lower than the triggering BFR for BFI_COUNTER, as one of the principles of triggering inter-cell beam switching;
- introducing the second counter to count an average quality of beams on the second cell, avoiding an early triggering of inter-cell beam switching;
- when a BFR failure occurs, not triggering an RLF if a first timer is running, thus reducing the probability of RLF triggering;
- reusing a BFR MAC CE, modifying a field's value to indicate a beam of a neighboring cell, and reporting a measurement result of the neighboring cell via a Physical Uplink Shared Channel (PUSCH) /UpLink Shared Channel (UL-SCH);
- introducing a new MAC CE for reporting measurement result(s) of a neighboring cell;
- introducing a new MAC CE to indicate a target beam of a target cell.

The present application provides a method in a first node for wireless communications, comprising:
when a first counter reaches a first value, initiating a first random access procedure, and transmitting a first signal; when the first random access procedure is not successfully completed, updating a second counter;
as a response to each condition in a first condition set being satisfied, generating a second-type indication to be conveyed to an upper layer;
herein, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

In one embodiment, a problem to be solved in the present application includes: how to achieve L1/L2 inter-cell link mobility.

In one embodiment, a problem to be solved in the present application includes: how to achieve L1/L2 inter-cell link mobility.

In one embodiment, a problem to be solved in the present application includes: how to avoid triggering of a Radio Link Failure (RLF).

In one embodiment, characteristics of the above method include: whether to trigger an RLF is related not only to the second counter reaching a second value but also to other conditions.

In one embodiment, characteristics of the above method include: whether to trigger an RLF is related to the second counter reaching a second value.

In one embodiment, an advantage of the above method includes: avoiding triggering of an RLF, thus achieving quick L1/L2 inter-cell mobility.

According to one aspect of the present application, characterized in comprising:
when a third counter reaches a third value, initiating a second random access procedure, and transmitting a second signal; when the second random access procedure is not successfully completed, updating the second counter;
herein, the third counter indicates a number of times that third-type indication(s) from lower layer(s) is(are) received; the second signal is used for random access; the third value is a positive integer.

In one embodiment, characteristics of the above method include: the second counter is related to both the first random access procedure and the second random access procedure.

In one embodiment, characteristics of the above method include: whether to trigger an RLF is related to both the first random access procedure and the second random access procedure.

In one embodiment, an advantage of the above method includes: performing the first random access procedure and the second random access procedure simultaneously, thus enhancing the success rate of random access.

According to one aspect of the present application, characterized in that the first signal is transmitted before the second signal; when the first random access procedure is ongoing and the second counter hasn't reached a fourth value yet, the second random access procedure is initiated, where the fourth value is a positive integer not greater than the second value.

In one embodiment, characteristics of the above method include: not initiating the second random access procedure when the second counter reaches the fourth value.

In one embodiment, characteristics of the above method include: enhancing the success rate of Random Access (RA).

In one embodiment, an advantage of the above method includes: avoiding unneeded random access.

According to one aspect of the present application, characterized in that another condition in the first condition set comprises that neither of the first random access procedure and the second random access procedure is being performed.

In one embodiment, characteristics of the above method include: when the second counter reaches the second value, if the first random access procedure or the second random access procedure is being performed, dropping generation of the second-type indication.

In one embodiment, characteristics of the above method include: when the second counter reaches the second value, if the first random access procedure or the second random access procedure is being performed, proceeding with the random access procedure and only when the random access procedure is failed will the second-type indication be generated.

In one embodiment, an advantage of the above method includes: further enhancing the success rate of random access.

According to one aspect of the present application, characterized in comprising:
as a response to the action of generating a second-type indication to be conveyed to an upper layer, transmitting a first signaling;
herein, the first signaling is used for an update of radio connection; the first signaling comprises an RRC message.

According to one aspect of the present application, characterized in comprising:
receiving a second signaling;
as a response to a given condition in the first condition set not being satisfied, dropping generating the second-type indication, and transmitting a third signaling; and as a response to the third signaling being transmitted, starting a first timer;
receiving a fourth signaling; and as a response to receiving the fourth signaling, stopping the first timer; when the first timer reaches a first expiration value, determining that a first-type radio connection failure occurs;
herein, the second signaling indicates the first expiration value of the first timer; the first expiration value is used to determine a maximum time interval of a first-type beam recovery; the third signaling indicates a target reference signal set; the target reference signal set is related to the first-type beam recovery; the fourth signaling carries configuration information of the target reference signal set.

In one embodiment, characteristics of the above method include: when the second counter reaches the second value, if there exists the target reference signal set, performing the first-type beam recovery rather than generating the second-type indication on the cell.

In one embodiment, characteristics of the above method include: the given condition comprises that the target reference signal set does not exist.

According to one aspect of the present application, characterized in comprising:
receiving a fifth signaling;
herein, the fifth signaling indicates a second expiration value of a second timer; the second expiration value is used to determine a maximum time interval of inter-cell mobility; the second timer reaching the second expiration value is used to determine that the inter-cell mobility is failed; another condition in the first condition set is: the second timer not being running.

In one embodiment, characteristics of the above method include: determining that whether the second-type indication is generated is related to whether the second timer is running.

According to one aspect of the present application, characterized in comprising:
when each first-type received quality in a first-type received quality set is poorer than a first threshold, receiving the first-type indication(s) from a lower layer; and as a response to the action of receiving the first-type indication(s) from a lower layer, updating the first counter;
herein, the first-type indication(s) comprises(comprise) an indication of a beam failure instance; a measurement on a first reference signal set is used to determine the first-type received quality set.

According to one aspect of the present application, characterized in comprising:
when each second-type received quality in a second-type received quality set is poorer than a second threshold, receiving the third-type indication(s) from a lower layer; and as a response to the action of receiving the third-type indication(s) from a lower layer, updating the third counter;
herein, the third-type indication(s) comprises(comprise) an indication of a beam failure instance; a measurement on a second reference signal set is used to determine the second-type received quality set.

According to one aspect of the present application, characterized in comprising:
when one condition in the first condition set is satisfied and another one condition in the first condition set is not satisfied, initiating a third random access procedure, and transmitting a third signal; when the third random access procedure is not successfully completed, updating a fourth counter;
herein, the other one condition comprises that a first resource set does not exist, the first resource set being related to the third random access procedure; the third signal is used for random access; the fourth value is a positive integer.

The present application provides a method in a second node for wireless communications, comprising:
receiving a first signal;
herein, when a first counter reaches a first value, a first random access procedure is initiated; when the first random access procedure is not successfully completed, a second counter is updated; as a response to each condition in a first condition set being satisfied, a second-type indication is generated and conveyed to an upper layer; the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

According to one aspect of the present application, characterized in that a second signal is received; when a third counter reaches a third value, a second random access procedure is initiated; when the second random access procedure is not successfully completed, the second counter is updated; the third counter indicates a number of times that third-type indication(s) from lower layer(s) is(are) received; the second signal is used for random access; the third value is a positive integer.

According to one aspect of the present application, characterized in that the first signal is transmitted before the second signal; when the first random access procedure is ongoing and the second counter hasn't reached a fourth value yet, the second random access procedure is initiated, where the fourth value is a positive integer not greater than the second value.

According to one aspect of the present application, characterized in that another condition in the first condition set comprises that neither of the first random access procedure and the second random access procedure is being performed.

According to one aspect of the present application, characterized in that a first signaling is received; as a response to the action that a second-type indication is generated and conveyed to an upper layer, the first signaling is transmitted; the first signaling is used for an update of radio connection; the first signaling comprises an RRC message.

According to one aspect of the present application, characterized in comprising:
transmitting a second signaling;
herein, a third signaling is transmitted; a fourth signaling is received; as a response to a given condition in the first condition set not being satisfied, generation of the second-type indication is dropped; and as a response to the third signaling being transmitted, a first timer is started; and/or, as a response to the fourth signaling being received, the first timer is stopped; and/or, when the first timer reaches a first expiration value, an occurrence of a first-type radio connection failure is determined; the second signaling indicates the first expiration value of the first timer; the first expiration value is used to determine a maximum time interval of a first-type beam recovery; the third signaling indicates a target reference signal set; the target reference signal set is related to the first-type beam recovery; the fourth signaling carries configuration information of the target reference signal set.

According to one aspect of the present application, characterized in comprising:
transmitting a fifth signaling;
herein, the fifth signaling indicates a second expiration value of a second timer; the second expiration value is used to determine a maximum time interval of inter-cell mobility; the second timer reaching the second expiration value is used to determine that the inter-cell mobility is failed; another condition in the first condition set is: the second timer not being running.

According to one aspect of the present application, characterized in that when each first-type received quality in a first-type received quality set is poorer than a first threshold, the first-type indication(s) from a lower layer is(are) received; and as a response to the action of receiving the first-type indication(s) from a lower layer, the first counter is updated; herein, the first-type indication(s) comprises(comprise) an indication of a beam failure instance; a measurement on a first reference signal set is used to determine the first-type received quality set.

According to one aspect of the present application, characterized in that when each second-type received quality in a second-type received quality set is poorer than a second threshold, the third-type indication(s) from a lower layer is(are) received; and as a response to the action of receiving the third-type indication(s) from a lower layer, the third counter is updated; herein, the third-type indication(s) comprises(comprise) an indication of a beam failure instance; a measurement on a second reference signal set is used to determine the second-type received quality set.

According to one aspect of the present application, characterized in that when one condition in the first condition set is satisfied and another one condition in the first condition set is not satisfied, a third random access procedure is initiated, and a third signal is transmitted; when the third random access procedure is not successfully completed, a fourth counter is updated; herein, the other one condition comprises that a first resource set does not exist, the first resource set being related to the third random access procedure; the third signal is used for random access; the fourth value is a positive integer.

The present application provides a first node for wireless communications, comprising:
a first transmitter, when a first counter reaches a first value, initiating a first random access procedure, and transmitting a first signal; when the first random access procedure is not successfully completed, updating a second counter;
a first receiver, as a response to each condition in a first condition set being satisfied, generating a second-type indication to be conveyed to an upper layer;
herein, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

The present application provides a second node for wireless communications, comprising:
a second receiver, receiving a first signal;
herein, when a first counter reaches a first value, a first random access procedure is initiated; when the first random access procedure is not successfully completed, a second counter is updated; as a response to each condition in a first condition set being satisfied, a second-type indication is generated and conveyed to an upper layer; the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

In one embodiment, compared with the prior art, the present application is advantageous in the following aspects:
- enhancing the robustness of radio link;
- reducing the probability of triggering RRC layer RLF;
- achieving L1/L2 inter-cell link recovery;
- achieving L1/L2 inter-cell link mobility.

### BRIEF DESCRIPTION OF THE DRAWINGS

Other features, objects and advantages of the present application will become more apparent from the detailed description of non-restrictive embodiments taken in conjunction with the following drawings:
FIG. 1A illustrates a flowchart of transmissions of a first signaling, a second signaling and a third signaling according to one embodiment of the present application.
FIG. 1B illustrates a flowchart of transmissions of a first signal and a second-type indication according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5A illustrates a flowchart of radio signal transmission according to one embodiment of the present application.
FIG. 5B illustrates a flowchart of radio signal transmission according to one embodiment of the present application.
FIG. 6A illustrates a flowchart of radio signal transmission according to another embodiment of the present application.
FIG. 6B illustrates a flowchart of radio signal transmission according to another embodiment of the present application.
FIG. 7A illustrates a schematic diagram of a first node's behavior after a first timer is started according to one embodiment of the present application.
FIG. 7B illustrates a flowchart of radio signal transmission according to another embodiment of the present application.
FIG. 8A illustrates a schematic diagram of operating procedures of a first node according to one embodiment of the present application.
FIG. 8B illustrates a flowchart of radio signal transmission according to a third embodiment of the present application.
FIG. 9A illustrates a schematic diagram of structure of a second signaling according to one embodiment of the present application.
FIG. 9B illustrates a schematic diagram of a first-type indication being used to determine an update of a first counter according to one embodiment of the present application.
FIG. 10A illustrates a schematic diagram of structure of a third signaling according to one embodiment of the present application.
FIG. 10B illustrates a schematic diagram of a third-type indication being used to determine an update of a third counter according to one embodiment of the present application.
FIG. 11A illustrates a schematic diagram of a first offset and a second counting threshold being used to determine a first counting threshold according to one embodiment of the present application.
FIG. 11B illustrates a schematic diagram of a second counter relating to a first random access procedure and a second random access procedure according to one embodiment of the present application.
FIG. 12A illustrates a structure block diagram of a processing device used in a first node according to one embodiment of the present application.
FIG. 12B illustrates a structure block diagram of a processing device used in a first node according to one embodiment of the present application.
FIG. 13A illustrates a structure block diagram of a processing device used in a second node according to one embodiment of the present application.
FIG. 13B illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1A

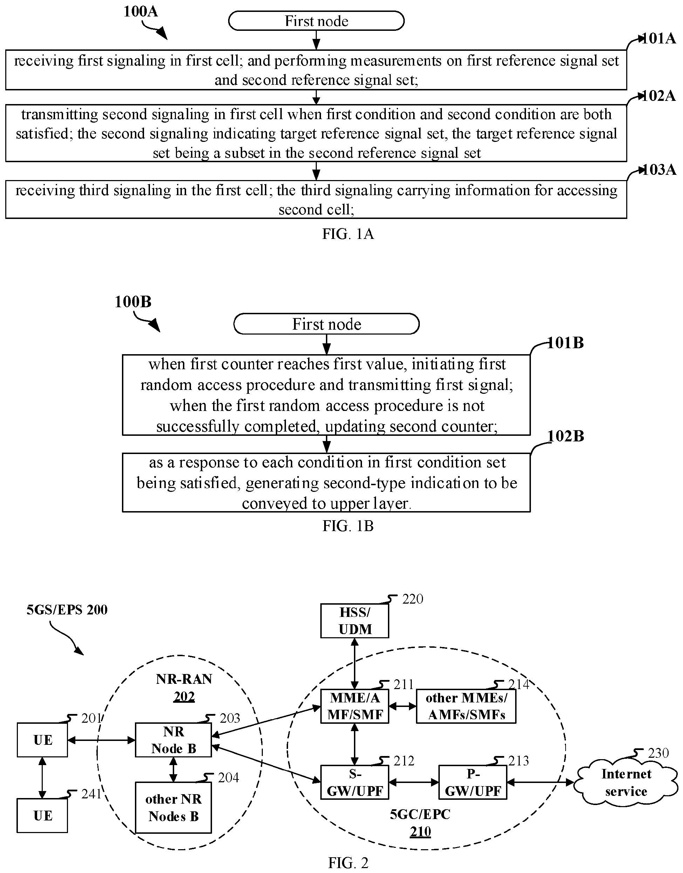

Embodiment 1A illustrates a flowchart of transmissions of a first signaling, a second signaling and a third signaling according to one embodiment of the present application, as shown in FIG. 1A. In FIG. 1A, each step represents a step, it should be particularly noted that the sequence order of each box herein does not imply a chronological order of steps marked respectively by these boxes.

In Embodiment 1A, the first node in the present application receives a first signaling in step 101A; and performs measurements on a first reference signal set and a second reference signal set; and in step 102A, transmits a second signaling when a first condition and a second condition are both satisfied; the second signaling indicating a target reference signal set, the target reference signal set being a subset in the second reference signal set; receives a third signaling in step 103A; the third signaling carrying information for accessing to a second cell; herein, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the first signaling is received in the first cell.

In one embodiment, the second signaling is transmitted in the first cell.

In one embodiment, the third signaling is received in the first cell.

In one embodiment, the first signaling is received in a physical cell to which the first cell and the second cell belong.

In one embodiment, the second signaling is transmitted in a physical cell to which the first cell and the second cell belong.

In one embodiment, the third signaling is received in a physical cell to which the first cell and the second cell belong.

In one embodiment, the first cell comprises one or more beams in a first TRP.

In one embodiment, the second cell comprises one or more beams in a second TRP.

In one embodiment, the first cell is associated with a first TRP.

In one embodiment, the second cell is associated with a second TRP.

In one embodiment, the first TRP and the second TRP belong to a same physical cell.

In one embodiment, the first TRP and the second TRP belong to different physical cells.

In one embodiment, the first TRP and the second TRP have a same Physical Cell Identity (PCI).

In one embodiment, the first TRP and the second TRP have different PCIs.

In one embodiment, the first TRP and the second TRP belong to different sites.

In one embodiment, a beam in the first TRP and a beam in the second TRP belong to a same CORESET.

In one embodiment, a beam in the first TRP and a beam in the second TRP belong to two different CORESETs.

In one embodiment, the first cell comprises a serving cell of the first node, while the second cell comprises a non-serving cell of the first node.

In one embodiment, the first cell comprises a serving cell of the first node, while the second cell comprises a neighboring cell of the first cell.

In one embodiment, the first node has an RRC connection to the first cell, and the first node has no RRC connection to the second cell.

In one embodiment, the first cell comprises a Special Cell (SpCell).

In one subembodiment, the SpCell comprises a Primary Cell (PCell).

In one subembodiment, the SpCell comprises a Primary SCG Cell (PSCell).

In one embodiment, the first cell is associated with 0 or a positive integer number of Secondary Cell(s) (SCell(s)).

In one embodiment, the second cell is associated with 0 or a positive integer number of SCell(s).

In one embodiment, a transmitter of the first signaling includes a maintenance base station for the first cell.

In one embodiment, the first signaling is transmitted via an air interface.

In one embodiment, the first signaling is transmitted via an antenna port.

In one embodiment, the first signaling is transmitted via an upper layer signaling.

In one embodiment, the first signaling is transmitted via a higher layer signaling.

In one embodiment, the first signaling comprises a Downlink (DL) signal.

In one embodiment, the first signaling comprises all or part of an upper layer signaling.

In one embodiment, the first signaling comprises all or part of a higher layer signaling.

In one embodiment, the first signaling comprises an RRC message.

In one embodiment, the first signaling comprises all or partial Information Elements (IEs) in an RRC message.

In one embodiment, the first signaling comprises all or partial fields in an IE in an RRC message.

In one embodiment, the first signaling comprises a RRCReconfiguration message.

In one embodiment, the first signaling comprises a RRCResume message.

In one embodiment, the first signaling comprises a RRCSetup message.

In one embodiment, the first signaling comprises a SIB1.

In one embodiment, the first signaling comprises one or more IE(s) in an RRC message.

In one subembodiment, one of the IE(s) in the RRC message is used for configuring for parameters related to L1/L2 inter-cell mobility.

In one subembodiment, names of one of the IE(s) in the RRC message include RadioLinkMonitoringConfig.

In one subembodiment, names of one of the IE(s) in the RRC message include BeamF ailureRecovery Config.

In one subembodiment, names of one of the IE(s) in the RRC message include BeamFailureRecoverySCellConfig.

In one subembodiment, names of one of the IE(s) in the RRC message include DownlinkConfigCommonSIB.

In one subembodiment, names of one of the IE(s) in the RRC message include DownlinkConfigCommon.

In one subembodiment, names of one of the IE(s) in the RRC message include BWP-DownlinkDedicated.

In one subembodiment, names of one of the IE(s) in the RRC message include BWP-Downlink.

In one subembodiment, names of one of the IE(s) in the RRC message include BWP-UplinkDedicated.

In one subembodiment, names of one of the IE(s) in the RRC message include RACH-ConfigCommon.

In one subembodiment, names of one of the IE(s) in the RRC message include BWP-Uplink.

In one subembodiment, names of one of the IE(s) in the RRC message include ServingCellConfig.

In one subembodiment, names of one of the IE(s) in the RRC message include ServingCellConfigCommon.

In one subembodiment, names of one of the IE(s) in the RRC message include ServingCellConfigCommonSIB.

In one subembodiment, names of one of the IE(s) in the RRC message include Cell Group Config.

In one embodiment, the phrase that the first signaling comprises a measurement configuration comprises: the first signaling indicating the measurement configuration.

In one embodiment, the phrase that the first signaling comprises a measurement configuration comprises: the measurement configuration being configured through the first signaling.

In one embodiment, the phrase that the first signaling comprises a measurement configuration comprises: the first signaling is used for configuring for L1/L2 measurements.

In one embodiment, the phrase that the first signaling comprises a measurement configuration comprises: the first signaling comprises the first reference signal set, the second reference signal set, a triggering threshold of the first condition and a triggering threshold of the second condition.

In one embodiment, the measurement configuration comprises at least one of a measurement quantity, or a measurement resource configuration, or a measurement periodicity configuration, or a measurement report triggering threshold configuration.

In one embodiment, the action of performing measurements on a first reference signal set and a second reference signal set comprises: receiving one or multiple first-type reference signals in the first reference signal set and one or multiple second-type reference signals in the second reference signal set.

In one embodiment, the action of performing measurements on a first reference signal set and a second reference signal set comprises: monitoring one or multiple first-type reference signals in the first reference signal set and one or multiple second-type reference signals in the second reference signal set.

In one embodiment, the action of performing measurements on a first reference signal set and a second reference signal set comprises: calculating receiving power value(s) of one or multiple first-type reference signals in the first reference signal set and receiving power value(s) of one or multiple second-type reference signals in the second reference signal set.

In one embodiment, the action of performing measurements on a first reference signal set and a second reference signal set comprises: receiving one or multiple first-type reference signals in the first reference signal set and one or multiple second-type reference signals in the second reference signal set, and determining whether the first condition and the second condition are satisfied respectively.

In one embodiment, a transmitter of the third signaling includes a maintenance base station for the first cell.

In one embodiment, the third signaling is transmitted via an air interface.

In one embodiment, the third signaling is transmitted via an antenna port.

In one embodiment, the third signaling is transmitted via an upper layer signaling.

In one embodiment, the third signaling is transmitted via a higher layer signaling.

In one embodiment, the third signaling comprises a Downlink (DL) signal.

In one embodiment, the third signaling comprises a MAC layer signaling.

In one embodiment, the third signaling comprises all or partial fields in a MAC layer signaling.

In one embodiment, the third signaling comprises a MAC Protocol Data Unit (PDU).

In one embodiment, the third signaling comprises a MAC CE.

In one embodiment, the third signaling comprises a Physical Downlink Control Channel (PDCCH).

In one embodiment, the phrase of the third signaling carrying information for accessing to a second cell comprises: the third signaling carrying information of a random access to the second cell.

In one embodiment, the phrase of the third signaling carrying information for accessing to a second cell comprises: the third signaling carrying DRB configuration of the second cell.

In one embodiment, the phrase of the third signaling carrying information for accessing to a second cell comprises: the third signaling indicating information needed for L1/L2 inter-cell mobility.

In one embodiment, the phrase of the third signaling carrying information for accessing to a second cell comprises: the third signaling carrying a cell identifier of the second cell.

In one embodiment, the phrase of the third signaling carrying information for accessing to a second cell comprises: the third signaling carrying resource configuration for accessing the second cell.

In one embodiment, the sentence that "the first signaling indicates the first reference signal set, the second reference signal set, the first condition and the second condition" comprises: the first reference signal set, the second reference signal set, the first condition and the second condition being configured via the first signaling.

In one embodiment, the sentence that "the first signaling indicates the first reference signal set, the second reference signal set, the first condition and the second condition" comprises: the first reference signal set, the second reference signal set, the first condition and the second condition being configured via the first signaling.

In one embodiment, the sentence that "the first signaling indicates the first reference signal set, the second reference signal set, the first condition and the second condition" comprises: the first reference signal set, the second reference signal set, the first condition and the second condition being multiple fields in one or more IEs in the first signaling.

In one embodiment, the sentence of "transmitting a second signaling when a first condition and a second condition are both satisfied" comprises that: the first condition and the second condition being both satisfied is used to trigger the second signaling.

In one embodiment, the sentence of "transmitting a second signaling when a first condition and a second condition are both satisfied" comprises that: the second signaling is a response to the first condition and the second condition being both satisfied.

In one embodiment, the sentence of "transmitting a second signaling when a first condition and a second condition are both satisfied" comprises that: the first condition being satisfied and the second condition being satisfied are used to determine to transmit the second signaling.

In one embodiment, the sentence of "transmitting a second signaling when a first condition and a second condition are both satisfied" comprises that: when one of the first condition or the second condition is not satisfied, the second signaling is not transmitted.

In one embodiment, a receiver of the second signaling includes a maintenance base station for the first cell.

In one embodiment, the second signaling is transmitted via an air interface.

In one embodiment, the second signaling is transmitted via an antenna port.

In one embodiment, the second signaling is transmitted via an upper layer signaling.

In one embodiment, the second signaling is transmitted via a higher layer signaling.

In one embodiment, the second signaling comprises an Uplink (LTL) signal.

In one embodiment, the second signaling comprises all or part of an upper layer signaling.

In one embodiment, the second signaling comprises all or part of a higher layer signaling.

In one embodiment, the second signaling comprises a MAC layer signaling.

In one embodiment, the second signaling comprises all or partial fields in a MAC layer signaling.

In one embodiment, the second signaling is a MAC CE.

In one embodiment, the second signaling is a MAC PDU.

In one embodiment, the phrase of "the second signaling indicating a target reference signal set" comprises: the second signaling explicitly indicating the target reference signal set.

In one embodiment, the phrase of "the second signaling indicating a target reference signal set" comprises: the second signaling implicitly indicating the target reference signal set.

In one embodiment, the phrase of "the second signaling indicating a target reference signal set" comprises: the target reference signal set being indicated through one or more fields in the second signaling.

In one embodiment, the phrase of "the second signaling indicating a target reference signal set" comprises: the second signaling comprising identifier(s) of reference signal(s) in the target reference signal set.

In one embodiment, the phrase of "the target reference signal set being a subset in the second reference signal set" comprises that: a reference signal in the target reference signal set and a reference signal in the second reference signal set have a same identifier.

In one embodiment, the phrase of "the target reference signal set being a subset in the second reference signal set" comprises that: a reference signal in the target reference signal set and a reference signal in the second reference signal set are the same.

In one embodiment, the phrase of "the target reference signal set being a subset in the second reference signal set" comprises that: the target reference signal set is no larger than the second reference signal set.

In one embodiment, the phrase of "the target reference signal set being a subset in the second reference signal set" comprises that: any reference signal in the target reference signal set belongs to the second reference signal set.

In one embodiment, the phrase of "the target reference signal set being a subset in the second reference signal set" comprises that:

In one embodiment, the target reference signal set comprises K3 second-type reference signal(s), K3 being a positive integer not greater than K2.

In one embodiment, each reference signal in the target reference signal set satisfies the second condition.

In one embodiment, the target reference signal set satisfies the second condition.

In one embodiment, the phrase that the second signaling comprises a measurement report comprises that: the measurement report is one or more fields in the second signaling.

In one embodiment, the phrase that the second signaling comprises a measurement report comprises that: the second signaling indicates the measurement report.

In one embodiment, the phrase that the second signaling comprises a measurement report comprises that: the second signaling is used for carrying the measurement report.

In one embodiment, the measurement report comprises a measurement result.

In one embodiment, the measurement report comprises a measurement result for the first reference signal set.

In one embodiment, the measurement report comprises a measurement result for the second reference signal set.

In one embodiment, the measurement report comprises a beam identifier.

In one embodiment, the measurement report comprises a cell identifier.

In one embodiment, the measurement report comprises identifier(s) of the K3 second-type reference signal(s) in a target reference signal set.

In one embodiment, the measurement report comprises identifier(s) of reference signal(s) satisfying the second condition in the second cell determined by performing a measurement on the second reference signal set.

In one embodiment, the phrase that the second signaling and the third signaling are signalings of a layer below an RRC layer comprises: the second signaling and the third signaling being MAC layer signalings.

In one embodiment, the phrase that the second signaling and the third signaling are signalings of a layer below an RRC layer comprises: the second signaling and the third signaling being physical layer signalings.

In one embodiment, the phrase that the second signaling and the third signaling are signalings of a layer below an RRC layer comprises: the second signaling being a physical layer signaling, and the third signaling being a MAC layer signaling.

In one embodiment, the phrase that the second signaling and the third signaling are signalings of a layer below an RRC layer comprises: the second signaling and the third signaling not being RRC signalings.

In one embodiment, the first reference signal set comprises K1 first-type reference signal(s), K1 being a positive.

In one subembodiment, one of the K1 first-type reference signal(s) comprises a Synchronization Signal Block (SSB).

In one subembodiment, one of the K1 first-type reference signal(s) comprises a Channel State Information Reference Signal (CSI-RS).

In one subembodiment, one of the K1 first-type reference signal(s) is a physical layer signal.

In one subembodiment, one of the K1 first-type reference signal(s) is cell-specific.

In one subembodiment, one of the K1 first-type reference signal(s) is beam-specific.

In one subembodiment, one of the K1 first-type reference signal(s) is a periodic signal.

In one subembodiment, one of the K1 first-type reference signal(s) is antenna port-specific.

In one subembodiment, K1 is configurable.

In one subembodiment, K1 is pre-configured.

In one subembodiment, one of the K1 first-type reference signal(s) is associated with one beam.

In one subembodiment, one of the K1 first-type reference signal(s) is associated with one beam of the first cell.

In one embodiment, the second reference signal set comprises K2 second-type reference signal(s), K2 being a positive

In one subembodiment, one of the K2 second-type reference signal(s) comprises an SSB.

In one subembodiment, one of the K2 second-type reference signal(s) comprises a CSI-RS.

In one subembodiment, one of the K2 second-type reference signal(s) is associated with a Physical Random Access Channel (PRACH) resource.

In one subsidiary embodiment of the above subembodiment, the PRACH resource being associated with the second-type reference signal comprises a Preamble Index (i.e., ra-PreambleIndex).

In one subsidiary embodiment of the above subembodiment, the PRACH resource being associated with the second-type reference signal comprises a random access (RA) Occasion.

In one subsidiary embodiment of the above subembodiment, the PRACH resource being associated with the second-type reference signal is configured via a field in the first signaling, where the name of the field in the first signaling includes at least one of ra-PreambleIndex, or ra-OccasionList.

In one subembodiment, one of the K2 second-type reference signal(s) is not associated with a PRACH resource.

In one subembodiment, one of the K2 second-type reference signal(s) is a physical layer signal.

In one subembodiment, one of the K2 second-type reference signal(s) is beam-specific.

In one subembodiment, one of the K2 second-type reference signal(s) is cell-specific.

In one subembodiment, one of the K2 second-type reference signal(s) is antenna port-specific.

In one subembodiment, K2 is configurable.

In one subembodiment, K2 is pre-configured.

In one subembodiment, one of the K2 second-type reference signal(s) is associated with one beam.

In one subembodiment, one of the K2 second-type reference signal(s) is associated with one beam of the second cell.

In one subembodiment, one of the K2 second-type reference signal(s) is associated with one beam of the first cell.

In one embodiment, the phrase that the first reference signal set is associated with the first cell comprises: the first reference signal set being configured for the first cell.

In one embodiment, the phrase that the first reference signal set is associated with the first cell comprises: the first reference signal set being associated with a cell identifier of the first cell.

In one embodiment, the phrase that the first reference signal set is associated with the first cell comprises: the first reference signal set being specific to the first cell.

In one embodiment, the phrase that the second reference signal set is associated with the second cell comprises: the second reference signal set being configured for the second cell.

In one embodiment, the phrase that the second reference signal set is associated with the second cell comprises: the second reference signal set being associated with a cell identifier of the second cell.

In one embodiment, the phrase that the second reference signal set is associated with the second cell comprises: the second reference signal set being specific to the second cell.

In one embodiment, the phrase that the measurement on the first reference signal set is used to determine whether the first condition is satisfied comprises that: whether the first condition is satisfied is related to a result of the measurement on the first reference signal set.

In one embodiment, the phrase that the measurement on the first reference signal set is used to determine whether the first condition is satisfied comprises that: the measurement on the first reference signal set is used to directly determine whether the first condition is satisfied.

In one subembodiment, a measurement result on one of the K1 first-type reference signal(s) in the first reference signal set being no higher than a first given threshold is used to determine that the first condition is satisfied; otherwise, the first condition is not satisfied; the first given threshold is configured by RRC, the first given threshold being configurable.

In one subembodiment, each measurement result on each of the K1 first-type reference signal(s) in the first reference signal set being no higher than a first given threshold is used to determine that the first condition is satisfied; otherwise, the first condition is not satisfied; the first given threshold is configured by RRC, the first given threshold being configurable.

In one subembodiment, measurement result(s) on at least one of the K1 first-type reference signal(s) in the first reference signal set being no higher than a first given threshold is used to determine that the first condition is satisfied; otherwise, the first condition is not satisfied; the first given threshold is configured by RRC, the first given threshold being configurable.

In one embodiment, the phrase that the measurement on the first reference signal set is used to determine whether the first condition is satisfied comprises: the measurement on the first reference signal set is used to indirectly determine whether the first condition is satisfied.

In one subembodiment, a statistic value of a measurement on the first reference signal set is used to determine whether the first condition is satisfied.

In one subembodiment, a value calculated according to a measurement on the first reference signal set is used to determine whether the first condition is satisfied.

In one subembodiment, a measurement on the first reference signal set is used to determine whether a first indication is generated, and a number of times the first indication is received within a given time is used to determine whether the first condition is satisfied, the given time being configurable.

In one embodiment, the phrase that the measurement on the second reference signal set is used to determine whether the second condition is satisfied comprises that: whether the second condition is satisfied is related to a result of the measurement on the second reference signal set.

In one embodiment, the phrase that the measurement on the second reference signal set is used to determine whether the second condition is satisfied comprises that: the measurement on the second reference signal set is used to directly determine whether the second condition is satisfied.

In one subembodiment, a measurement result on one of the K2 second-type reference signal(s) in the second reference signal set being no lower than a second given threshold is used to determine that the second condition is satisfied; otherwise, the second condition is not satisfied; the second given threshold is configured by RRC, and the second given threshold is configurable.

In one subembodiment, each measurement result on each of the K2 second-type reference signal(s) in the second reference signal set being no lower than a second given threshold is used to determine that the second condition is satisfied; otherwise, the second condition is not satisfied; the second given threshold is configured by RRC, and the second given threshold is configurable.

In one subembodiment, measurement result(s) on at least one of the K2 second-type reference signal(s) in the second reference signal set being no lower than a second given threshold is used to determine that the second condition is satisfied; otherwise, the second condition is not satisfied; the second given threshold is configured by RRC, and the second given threshold is configurable.

In one embodiment, the phrase that the measurement on the second reference signal set is used to determine whether the second condition is satisfied comprises that: the measurement on the second reference signal set is used to indirectly determine whether the second condition is satisfied.

In one subembodiment, a statistic value of a measurement on the second reference signal set is used to determine whether the second condition is satisfied.

In one subembodiment, a value calculated according to a measurement on the second reference signal set is used to determine whether the second condition is satisfied.

In one subembodiment, a measurement on the second reference signal set is used to determine whether a second indication is generated, and a number of times the second indication is received within a given time is used to determine whether the second condition is satisfied, the given time being configurable.

In one embodiment, the xxx in the present application indicates that the IE or the field is used for L1/L2 inter-cell mobility; the embodiments for the xxx do not limit the usage of other names, and thus are applicable to both uppercase and lowercase letters.

In one subembodiment, xxx includes l1/l2InterCellMobility.

In one subembodiment, xxx includes l1/l2CentricInterCellMobility.

In one subembodiment, xxx includes CentricInterCellMobility.

In one subembodiment, xxx includes interCelll1/l2Mobility.

In one subembodiment, xxx includes beamLevelInterCellMobility.

In one subembodiment, xxx includes interCellBeamLevelMobility.

In one subembodiment, xxx includes interCellBeamSwitching.

In one subembodiment, xxx includes interCellBeamManagement.

In one subembodiment, xxx includes interCellCentricBeamManagement.

### Embodiment 1B

Embodiment 1B illustrates a flowchart of transmissions of a first signal and a second-type indication according to one embodiment of the present application, as shown in FIG. 1B. In FIG. 1B, each step represents a step, it should be particularly noted that the sequence order of each box herein does not imply a chronological order of steps marked respectively by these boxes.

In Embodiment 1B, a first node in the present application initiates a first random access procedure and transmits a first signal when a first counter reaches a first value in step 101B; when the first random access procedure is not successfully completed, updating a second counter; and in step 102B, as a response to each condition in a first condition set being satisfied, generates a second-type indication to be conveyed to an upper layer; herein, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

In one embodiment, updating a counter comprises: the counter being incremented by a first step-size.

In one embodiment, updating a counter comprises: the counter being decremented by a first step-size.

In one embodiment, updating a counter comprises: when the counter is determined to be updated, adjusting the counter by a first step-size.

In one embodiment, the first step-size is a non-negative integer.

In one embodiment, the first step-size is equal to 0.

In one embodiment, the first step-size is equal to 1.

In one embodiment, the first step-size is larger than 1.

In one embodiment, a counter reaching a value comprises: the counter being equal to the value.

In one embodiment, a counter reaching a value comprises: the counter being greater than the value.

In one embodiment, a counter reaching a value comprises: the counter being no smaller than (that is, greater than or equal to) the value.

In one embodiment, the counter includes the first counter in the present application.

In one embodiment, the counter includes the second counter in the present application.

In one embodiment, the counter includes the third counter in the present application.

In one embodiment, the counter includes the fourth counter in the present application.

In one embodiment, the value includes the first value in the present application.

In one embodiment, the value includes the second value in the present application.

In one embodiment, the value includes the third value in the present application.

In one embodiment, the value includes the fourth value in the present application.

In one embodiment, the value includes the fifth value in the present application.

In one embodiment, the positive integer in the present application is not greater than 4096.

In one embodiment, initiating a random access procedure comprises: preparing to perform the random access procedure.

In one embodiment, initiating a random access procedure comprises: performing initialization for the random access procedure.

In one embodiment, initiating a random access procedure comprises: transmitting a preamble sequence.

In one embodiment, initiating a random access procedure comprises: starting to perform the random access procedure.

In one embodiment, the random access procedure includes the first random access procedure in the present application.

In one embodiment, the random access procedure includes the second random access procedure in the present application.

In one embodiment, the random access procedure includes the third random access procedure in the present application.

In one embodiment, the meaning of initiating includes to initiate.

In one embodiment, the meaning of maintaining includes to start to perform.

In one embodiment, a random access procedure not being completed in success comprises that: it is assumed that the random access procedure is not successfully completed.

In one embodiment, a random access procedure not being completed in success comprises that: it is determined that the random access procedure is not successfully completed.

In one embodiment, a random access procedure not being completed in success comprises that: the random access procedure associated with a given signal is not successfully completed.

In one embodiment, after a given signal is transmitted, if not any Physical Downlink Control Channel (PDCCH) associated with the given signal is received, it is determined that a random access procedure is not successfully completed.

In one embodiment, after a given signal is transmitted, an RAR is received and an Msg3 is transmitted, the Msg3 comprising a C-RNTI MAC Control Element (CE), if no PDCCH is received after the Msg3 is transmitted, it is determined that a random access procedure is not successfully completed.

In one embodiment, after a given signal is transmitted, a PDCCH is received, if the PDCCH is not addressed to a C_RNTI of the first node, it is determined that a random access procedure is not successfully completed.

In one embodiment, a given signal comprises a C-RNTI MAC CE, after the given signal is transmitted, a PDCCH is received, and the PDCCH is not addressed to a C_RNTI, it is then determined that a random access procedure is not successfully completed.

In one embodiment, after a given signal is transmitted, an RAR is received and an Msg3 is transmitted, the Msg3 comprising a C-RNTI MAC CE, a PDCCH is received after the Msg3 is transmitted and the PDCCH is not addressed to a C_RNTI of the first node, it is then determined that a random access procedure is not successfully completed.

In one embodiment, after a given signal is transmitted, a PDCCH is received in a search space indicated by a recoverySearchSpaceId, if the PDCCH is not addressed to a C_RNTI, it is then determined that a random access procedure is not successfully completed.

In one embodiment, the given signal comprises the first signal in the present application.

In one embodiment, the given signal comprises the second signal in the present application.

In one embodiment, the given signal comprises the third signal in the present application.

In one embodiment, the given signal comprises one of the K1 first-type signal(s) in the present application.

In one embodiment, the given signal comprises one of the K2 second-type signal(s) in the present application.

In one embodiment, a signal being used for random access comprises: the signal being a signal in the random access procedure.

In one embodiment, a signal being used for random access comprises: the signal being transmitted in the random access procedure.

In one embodiment, a signal being used for random access comprises: the signal being a first signal in the random access procedure.

In one embodiment, a signal being used for random access comprises: the signal comprising a preamble sequence.

In one embodiment, a signal being used for random access comprises: the signal being any uplink signal in the random access procedure.

In one embodiment, the signal comprises the first signal in the present application.

In one embodiment, the signal comprises the second signal in the present application.

In one embodiment, the signal comprises the third signal in the present application.

In one embodiment, the signal comprises the given signal in the present application.

In one embodiment, the first cell in the present application comprises a Primary Cell (PCell) in a Master Cell Group (MCG).

In one embodiment, the first cell in the present application comprises a Primary SCG Cell (PSCell) in a Secondary Cell Group (SCG).

In one embodiment, the first cell in the present application comprises a serving cell.

In one embodiment, the sentence of "when a first counter reaches a first value, initiating a first random access procedure, and transmitting a first signal" comprises: the fact that a first counter reaches a first value triggering the first random access procedure, and in the first random access procedure, transmitting the first signal.

In one embodiment, the sentence of "when a first counter reaches a first value, initiating a first random access procedure, and transmitting a first signal" comprises: when a first counter reaches a first value, initiating a first random access procedure, and as a part of the action of initiating the random access procedure, transmitting a first signal.

In one embodiment, the first counter comprises a dynamic value.

In one embodiment, the first counter comprises a counting value of the first counter.

In one embodiment, the first counter comprises a BFI_COUNTER.

In one embodiment, the first counter comprises an LBT_COUNTER.

In one embodiment, the first counter is for a first cell.

In one embodiment, the first counter is specific to a first cell.

In one embodiment, an initial value of the first counter equals 0.

In one embodiment, the first counter comprises a beam failure instance indicating counter.

In one embodiment, the first counter comprises a LBT failure indicating counter.

In one embodiment, the first counter comprises a counter determining link quality.

In one embodiment, the first counter indicates a number of times that third-type indication(s) from lower layer(s) is(are) received in the first cell.

In one embodiment, when a lbt-FailureDetectionTimer or a beamFailureDetectionTimer, or the first value, or any reference signal in the first reference signal set in the present application is reconfigured, or when switching a Bandwidth Part (BWP), the first counter is set to 0.

In one embodiment, when the first random access procedure is completed, the first counter is set to 0.

In one embodiment, when MAC is reconfigured, the first counter is set to 0.

In one embodiment, the first value is configurable.

In one embodiment, the first value is pre-configured.

In one embodiment, the first value is a positive integer.

In one embodiment, the first value comprises beamFailureInstanceMaxCount.

In one embodiment, the first value comprises Ibt-FailureInstanceMaxCount.

In one embodiment, the first value is configured via an RRC signaling.

In one embodiment, the first value is configured via one of an RRCReconfiguration message, or an RRCResume message, or an RRCSetup message, or a SIB1 message.

In one embodiment, the first value is configured via an RRC message, where names of an Information Element (IE) in the RRC message include RadioLinkMonitoringConfig.

In one embodiment, the first value is used to determine how many of the first-type indications being received will satisfy a condition for triggering L1/L2 inter-cell mobility.

In one embodiment, the phrase that the first counter indicates a number of times that first-type indication(s) from lower layer(s) is(are) received comprises that: the first counter is used for counting a number of times that first-type indication(s) from lower layer(s) is(are) received.

In one embodiment, the phrase that the first counter indicates a number of times that first-type indication(s) from lower layer(s) is(are) received comprises that: a value of the first counter is equal to a number of times that first-type indication(s) from lower layer(s) is(are) received.

In one embodiment, the phrase that the first counter indicates a number of times that first-type indication(s) from lower layer(s) is(are) received comprises that: the first counter indicates a number of times that first-type indication(s) from lower layer(s) is(are) received in a MAC layer.

In one embodiment, the number of times refers to quantity.

In one embodiment, the number of times refers to frequency.

In one embodiment, the lower layer refers to a Physical Layer (i.e., PHY).

In one embodiment, the lower layer refers to Layer 1 (L1).

In one embodiment, the lower layer is below a MAC layer.

In one embodiment, the first-type indication comprises a beam failure instance indication.

In one embodiment, the phrase that the first-type indication comprises a beam failure instance indication comprises: the first-type indication comprising a beam failure instance indication.

In one embodiment, the phrase that the first-type indication comprises a beam failure instance indication comprises: the first-type indication comprising a LBT failure indication.

In one embodiment, the phrase that the first-type indication comprises a beam failure instance indication comprises: the first-type indication being used to indicate a beam failure instance.

In one embodiment, the phrase that the first-type indication comprises a beam failure instance indication comprises: the first-type indication being used to indicate a LBT failure.

In one embodiment, the first-type indication(s) is(are) transmitted to a MAC layer of the first node by the lower layer of the first node, the first node comprising a transmitter of the first signal.

In one embodiment, the first-type indication(s) is(are) for the first cell.

In one embodiment, the first-type indication(s) is(are) indication(s) of the occurrence of beam failure instance in the first cell.

In one embodiment, the first-type indication(s) carries(carry) cell identifier(s).

In one embodiment, the first-type indication(s) carries(carry) TRP identifier(s).

In one embodiment, the first-type indication(s) carries(carry) no cell identifier(s).

In one embodiment, the first random access procedure refers to a random access procedure triggered by the first counter reaching the first value.

In one embodiment, the first random access procedure is used for Beam Failure Recovery (BFR).

In one embodiment, the first random access procedure is used for BFR for the first cell.

In one embodiment, the first random access procedure comprises 4-stepRA.

In one embodiment, the first random access procedure comprises 2-stepRA.

In one embodiment, the first random access procedure comprises Contention Based Random Access (CBRA).

In one embodiment, the first random access procedure comprises Contention Free Random Access (CFRA).

In one embodiment, the first random access procedure is performed on the first cell.

In one embodiment, the first signal is transmitted via an air interface.

In one embodiment, the first signal is transmitted via an antenna port.

In one embodiment, the first signal is transmitted via a physical layer signaling.

In one embodiment, the first signal is transmitted via a higher layer signaling.

In one embodiment, the first signal comprises an Uplink (UL) signal.

In one embodiment, the first signal comprises a Preamble.

In one embodiment, the first signal carries the preamble sequence.

In one embodiment, the first signal is transmitted on a Physical Uplink Shared Channel (PUSCH).

In one embodiment, the first signal is transmitted on a Physical Random Access Channel (PRACH).

In one embodiment, the first signal comprises a Preamble and a PUSCH.

In one embodiment, the first signal comprises at least one of a PRACH or a PUSCH.

In one embodiment, the first signal is transmitted in a first cell.

In one embodiment, the first signal is transmitted in the first random access procedure.

In one embodiment, the first signal comprises K1 first sub-signal(s), K1 being a positive integer.

In one subembodiment, any one of the K1 first sub-signal(s) comprises an Msg1.

In one subembodiment, any one of the K1 first sub-signal(s) comprises an MsgA.

In one subembodiment, one of the K1 first sub-signals comprises an Msg1, and the other one of the K1 first sub-signals comprises an MsgA.

In one subembodiment, K1 is equal to the second value.

In one subembodiment, K1 is no greater than the second value.

In one subembodiment, K1 is no less than the second value.

In one subembodiment, each of the K1 first sub-signal(s) belongs to a same random access procedure.

In one subembodiment, each of the K1 first sub-signal(s) is for a same random access procedure.

In one subembodiment, each of the K1 first sub-signal(s) is for the first cell.

In one subembodiment, as a response to the action of initiating a first random access procedure, transmitting a first sub-signal; when the first random access procedure is not successfully completed, updating a second counter; when the second counter does not reach the second value, transmitting another first sub-signal; when the second counter reaches the second value, determining that a condition in the first condition set is satisfied.

In one subsidiary embodiment of the above subembodiment, the first sub-signal and the other first sub-signal are respectively two signals of the K1 first sub-signals.

In one subsidiary embodiment of the above subembodiment, the phrase of transmitting a first signal includes transmitting a first sub-signal.

In one subsidiary embodiment of the above subembodiment, the first sub-signal is a first one of the first sub-signals in the first random access procedure.

In one subsidiary embodiment of the above subembodiment, the first sub-signal is any one of the first sub-signals in the first random access procedure.

In one subsidiary embodiment of the above subembodiment, the other first sub-signal is any one of the first sub-signals in the first random access procedure.

In one subsidiary embodiment of the above subembodiment, a transmission time of the other first sub-signal is later than the first sub-signal.

In one subsidiary embodiment of the above subembodiment, the first sub-signal and the other first sub-signal are two consecutive first sub-signals, where the word consecutive means that there isn't any first sub-signal being transmitted between two signals.

In one subsidiary embodiment of the above subembodiment, the first sub-signal and the other first sub-signal are two non-consecutive first sub-signals, where the word non-consecutive means that there is another first sub-signal being transmitted between two signals.

In one embodiment, the sentence of "when the first random access procedure is not successfully completed, updating a second counter" comprises that: the first random access procedure not being successfully completed triggers updating of the second counter.

In one embodiment, the sentence of "when the first random access procedure is not successfully completed, updating a second counter" comprises that: the first random access procedure not being successfully completed is used to determine updating of the second counter.

In one embodiment, the phrase that the second counter indicates a number of transmissions of a preamble sequence comprises: a value of the second counter being equal to a number of times that a preamble sequence is transmitted.

In one embodiment, the phrase that the second counter indicates a number of transmissions of a preamble sequence comprises: the second counter being used for counting a number of times that a preamble sequence is transmitted.

In one embodiment, an initial value of the second counter equals zero.

In one embodiment, an initial value of the second counter is greater than zero.

In one embodiment, the second counter is for the first cell.

In one embodiment, the second counter is for the first cell and the second cell.

In one embodiment, the second counter is associated with the first cell and the second cell.

In one embodiment, the second counter is associated with the first random access procedure and the second random access procedure.

In one embodiment, the second counter comprises a PREAMBLE_TRANSMISSION_COUNTER.

In one embodiment, the preamble sequence comprises a Preamble.

In one embodiment, the preamble sequence comprises a positive integer.

In one embodiment, the preamble sequence comprises a bit string.

In one embodiment, the preamble sequence is transmitted on a PRACH.

In one embodiment, when the preamble sequence is transmitted and the first random access procedure is not successfully completed, the second counter is incremented by 1.

In one embodiment, a condition in the first condition set is that the second counter reaches a second value, and the first condition set does not comprise other conditions, when the second counter reaches the second value, a second-type indication is generated and conveyed to an upper layer.

In one subembodiment, the second counter is associated with the first random access procedure.

In one subembodiment, the second counter is associated with the first random access procedure and the second random access procedure.

In one embodiment, the sentence of "as a response to each condition in a first condition set being satisfied" comprises: when each condition in the first condition set is satisfied.

In one embodiment, the sentence of "as a response to each condition in a first condition set being satisfied" comprises: when any condition in the first condition set is satisfied.

In one embodiment, the sentence of "as a response to each condition in a first condition set being satisfied" comprises: when all conditions in the first condition set are satisfied.

In one embodiment, the sentence of "as a response to each condition in a first condition set being satisfied" comprises: if each condition in the first condition set is satisfied.

In one embodiment, the first condition set comprises Q1 first-type condition(s), Q1 being a positive integer.

In one subembodiment, Q1 is equal to 1.

In one subembodiment, Q1 is greater than 1.

In one subembodiment, when each of the Q1 first-type condition(s) is satisfied, the second-type indication is generated and conveyed to an upper layer.

In one subembodiment, when at least one of the Q1 first-type condition(s) is unsatisfied, the second-type indication being generated and conveyed to an upper layer is dropped.

In one embodiment, the second-type indication comprises an indication of a random access problem.

In one embodiment, the second-type indication is used to indicate a random access problem to the upper layer.

In one embodiment, the second-type indication is used to trigger a Radio Link Failure (RLF).

In one embodiment, the second-type indication is used to trigger a handover failure.

In one embodiment, the second-type indication is generated on a MAC layer.

In one embodiment, the action of generating a second-type indication and conveying to an upper layer comprises: generating a said second-type indication and transmitting it to the upper layer.

In one embodiment, the action of generating a second-type indication and conveying to an upper layer comprises: indicating the second-type indication to the upper layer (which means indicating a Random Access problem to upper layers).

In one embodiment, a said second-type indication is indicated to an upper layer.

In one embodiment, the second-type indication is transmitted to an upper layer of the first node by a MAC layer of the first node in the present application.

In one embodiment, the upper layer is above a MAC layer.

In one embodiment, the upper layer includes Layer 3 (L3).

In one embodiment, the upper layer includes an RRC layer.

In one subembodiment, the phrase that a condition in the first condition set is that the second counter reaches a second value comprises that: the second counter reaching the second value is a prerequisite for each condition in the first condition set being satisfied.

In one subembodiment, the phrase that a condition in the first condition set is that the second counter reaches a second value comprises that: the second counter reaching the second value is a condition among multiple conditions in the first condition set.

In one subembodiment, the phrase that a condition in the first condition set is that the second counter reaches a second value comprises that: the first condition set comprises the second counter reaching the second value.

In one subembodiment, the phrase that a condition in the first condition set is that the second counter reaches a second value comprises that: the first condition set refers to the second counter reaching the second value.

In one embodiment, when any condition in a first condition set is unsatisfied, no second-type indication will be generated.

In one embodiment, the second value is configurable.

In one embodiment, the second value is pre-configured.

In one embodiment, the second value is configured via an RRC signaling.

In one embodiment, the second value comprises preambleTransMax.

In one embodiment, the second value comprises (preambleTransMax + 1).

In one embodiment, the second value is a positive integer.

In one embodiment, the second value is greater than 0.

In one embodiment, the second value is configured via an IE in an RRC signaling, where names of the IE in the RRC signaling include RACH-ConfigGeneric, or RACH-ConfigGenericTwoStepRA, or RACH-ConfigDedicated.

In one embodiment, the xxx in the present application indicates that the IE or the field is used for L1/L2 inter-cell mobility; the embodiments for the xxx do not limit the usage of other names, and thus are applicable to both uppercase and lowercase letters.

In one subembodiment, xxx includes l1/l2InterCellMobility.

In one subembodiment, xxx includes l1/l2CentricInterCellMobility.

In one subembodiment, xxx includes CentricInterCellMobility.

In one subembodiment, xxx includes interCelll1/l2Mobility.

In one subembodiment, xxx includes beamLevelInterCellMobility.

In one subembodiment, xxx includes interCellBeamLevelMobility.

In one subembodiment, xxx includes interCellBeamSwitching.

In one subembodiment, xxx includes interCellBeamManagement.

In one subembodiment, xxx includes interCellCentricBeamManagement.

### Embodiment 2

Embodiment 2 illustrates a schematic diagram of a network architecture according to one embodiment of the present application, as shown in FIG. 2. FIG. 2 is a diagram illustrating a network architecture 200 of 5G New Radio (NR), Long-Term Evolution (LTE) and Long-Term Evolution Advanced (LTE-A) systems. The 5G NR or LTE network architecture 200 may be called 5G System/Evolved Packet System (5GS/EPS) 200 or other appropriate terms. The 5GS/EPS 200 may comprise one or more UEs 201, an NG-RAN 202, a 5G-Core Network/Evolved Packet Core (5GC/EPC) 210, a Home Subscriber Server/ Unified Data Management(HSS/LTDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5 GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected with the 5G-CN/EPC 210 via an S1/NG interface. The 5G-CN/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/LTPF 213. The MME/ AMF/ SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/LTPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 supports transmissions in Non-Terrestrial Network (NTN).

In one embodiment, the UE 201 supports transmissions in large-delay-difference networks.

In one embodiment, the UE 201 supports transmissions in Terrestrial Network (TN).

In one embodiment, the UE 201 is a UE.

In one embodiment, the UE 201 is an aircraft.

In one embodiment, the UE 201 is a vehicle-mounted terminal.

In one embodiment, the UE 201 is a relay.

In one embodiment, the UE 201 is a vessel.

In one embodiment, the UE 201 is an IoT terminal.

In one embodiment, the UE 201 is an IIoT terminal.

In one embodiment, the UE 201 is a piece of equipment supporting transmissions with low delay and high reliability.

In one embodiment, the gNB203 corresponds to the second node in the present application.

In one embodiment, the gNB203 corresponds to the third node in the present application.

In one embodiment, the gNB203 supports transmissions in NTN.

In one embodiment, the gNB203 supports transmissions in large-delay-difference networks.

In one embodiment, the gNB203 supports transmissions in TN.

In one embodiment, the gNB 203 is a MacroCellular base station.

In one embodiment, the gNB203 is a Micro Cell base station.

In one embodiment, the gNB203 is a Pico Cell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the gNB203 is a UE.

In one embodiment, the gNB203 is a Gateway.

### Embodiment 3

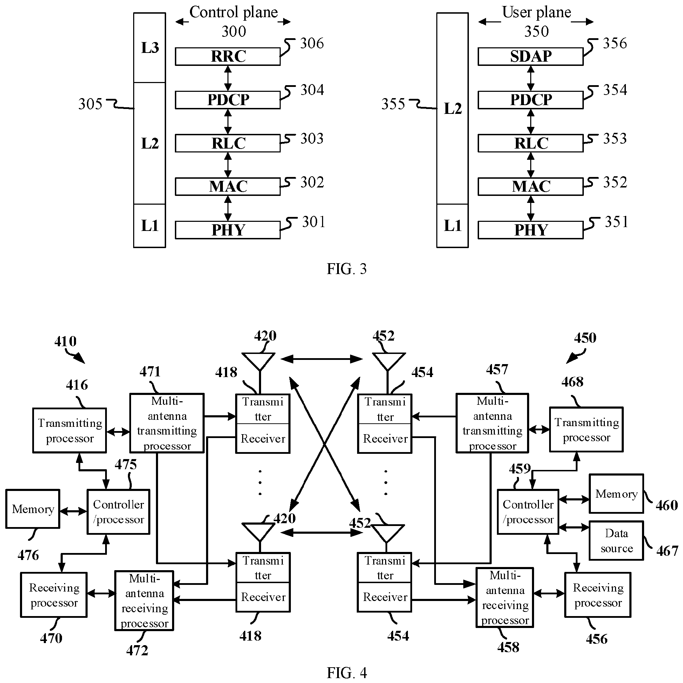

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 is represented by three layers, which are a layer 1, a layer 2 and a layer 3, respectively. The layer 1 (L1) is the lowest layer which performs signal processing functions of various PHY layers. The L1 is called PHY 301 in the present application. The layer 2 (L2) 305 is above the PHY 301, which comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a packet and provides support for inter-cell handover. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating various radio resources (i.e., resource block) in a cell, as well as for HARQ operation. In the control plane 300, The RRC sublayer 306 in the L3 layer is responsible for acquiring radio resources (i.e., radio bearer) and configuring the lower layer using an RRC signaling. The radio protocol architecture in the user plane 350 comprises the L1 layer and the L2 layer. In the user plane 350, the radio protocol architecture used for a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics.

In one embodiment, the radio protocol architecture in FIG. 3 is applicable to the first node in the present application.

In one embodiment, the radio protocol architecture in FIG. 3 is applicable to the second node in the present application.

In one embodiment, the radio protocol architecture in FIG. 3 is applicable to the third node in the present application.

In one embodiment, the first signaling in the present application is generated by the RRC 306.

In one embodiment, the first signaling in the present application is generated by the MAC302 or the MAC352.

In one embodiment, the first signaling in the present application is generated by the PHY301 or the PHY351.

In one embodiment, the second signaling in the present application is generated by the RRC306.

In one embodiment, the second signaling in the present application is generated by the MAC302 or the MAC352.

In one embodiment, the second signaling in the present application is generated by the PHY301 or the PHY351.

In one embodiment, the third signaling in the present application is generated by the RRC306.

In one embodiment, the third signaling in the present application is generated by the MAC302 or the MAC352.

In one embodiment, the third signaling in the present application is generated by the PHY301 or the PHY351.

In one embodiment, the fourth signaling in the present application is generated by the RRC 306.

In one embodiment, the fourth signaling in the present application is generated by the MAC302 or the MAC352.

In one embodiment, the fourth signaling in the present application is generated by the PHY301 or the PHY351.

In one embodiment, the fifth signaling in the present application is generated by the RRC306.

In one embodiment, the fifth signaling in the present application is generated by the MAC302 or the MAC352.

In one embodiment, the fifth signaling in the present application is generated by the PHY301 or the PHY351.

In one embodiment, the sixth signaling in the present application is generated by the RRC306.

In one embodiment, the sixth signaling in the present application is generated by the MAC302 or the MAC352.

In one embodiment, the sixth signaling in the present application is generated by the PHY301 or the PHY351.

In one embodiment, the first radio signal in the present application is generated by the RRC306.

In one embodiment, the first radio signal in the present application is generated by the MAC302 or the MAC352.

In one embodiment, the first radio signal in the present application is generated by the PHY301 or the PHY351.

In one embodiment, the second radio signal in the present application is generated by the RRC306.

In one embodiment, the second radio signal in the present application is generated by the MAC302 or the MAC352.

In one embodiment, the second radio signal in the present application is generated by the PHY301 or the PHY351.

### Embodiment 4

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of HARQ operation, a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping of signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with a memory 460 that stores program code and data. The memory 460 can be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 first converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication node 450 comprises at least one processor and at least one memory, the at least one memory comprises computer program codes; the at least one memory and the computer program codes are configured to be used in collaboration with the at least one processor. the first communication device 450 at least: receives a first signaling; and performs measurements on a first reference signal set and a second reference signal set; and transmits a second signaling when a first condition and a second condition are both satisfied; the second signaling indicating a target reference signal set, the target reference signal set being a subset in the second reference signal set; receives a third signaling; the third signaling carrying information for accessing to a second cell; herein, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the first communication node 450 comprises a memory that stores a computer readable instruction program, the computer readable instruction program generates actions when executed by at least one processor, which include: receiving a first signaling; and performing measurements on a first reference signal set and a second reference signal set; and transmitting a second signaling when a first condition and a second condition are both satisfied; the second signaling indicating a target reference signal set, the target reference signal set being a subset in the second reference signal set; receiving a third signaling; the third signaling carrying information for accessing to a second cell; herein, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the second communication node 410 comprises at least one processor and at least one memory, the at least one memory comprises computer program codes; the at least one memory and the computer program codes are configured to be used in collaboration with the at least one processor. The second communication device 410 at least: transmits a first signaling; and performs measurements on a first reference signal set and a second reference signal set; and receives a second signaling; the second signaling indicating a target reference signal set, the target reference signal set being a subset in the second reference signal set; transmits a third signaling; the third signaling carrying information for accessing to a second cell; herein, a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the second communication node 410 comprises a memory that stores a computer readable instruction program, the computer readable instruction program generates actions when executed by at least one processor, which include: transmitting a first signaling; and performing measurements on a first reference signal set and a second reference signal set; and receiving a second signaling; the second signaling indicating a target reference signal set, the target reference signal set being a subset in the second reference signal set; transmitting a third signaling; the third signaling carrying information for accessing to a second cell; herein, a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the antenna 452, the receiver 454, the receiving processor 456, and the controller/processor 459 are used for receiving a first signaling; at least one of the antenna 420, the transmitter 418, the transmitting processor 416 or the controller/processor 475 is used for transmitting a first signaling.

In one embodiment, the antenna 452, the receiver 454, the receiving processor 456, and the controller/processor 459 are used for receiving a third signaling; at least one of the antenna 420, the transmitter 418, the transmitting processor 416 or the controller/processor 475 is used for transmitting a third signaling.

In one embodiment, the antenna 452, the receiver 454, the receiving processor 456, and the controller/processor 459 are used for receiving a fourth signaling; at least one of the antenna 420, the transmitter 418, the transmitting processor 416 or the controller/processor 475 is used for transmitting a fourth signaling.

In one embodiment, the antenna 452, the receiver 454, the receiving processor 456, and the controller/processor 459 are used for receiving a fifth signaling; at least one of the antenna 420, the transmitter 418, the transmitting processor 416 or the controller/processor 475 is used for transmitting a fifth signaling.

In one embodiment, the antenna 452, the receiver 454, the receiving processor 456, and the controller/processor 459 are used for receiving a sixth signaling; at least one of the antenna 420, the transmitter 418, the transmitting processor 416 or the controller/processor 475 is used for transmitting a sixth signaling.

In one embodiment, the antenna 452, the transmitter 454, the transmitting processor 468 and the controller/processor 459 are used for transmitting a first radio signal; at least one of the antenna 420, the receiver 418, the receiving processor 470 or the controller/processor 475 is used for receiving a first radio signal.

In one embodiment, the antenna 452, the transmitter 454, the transmitting processor 468 and the controller/processor 459 are used for transmitting a second radio signal; at least one of the antenna 420, the receiver 418, the receiving processor 470 or the controller/processor 475 is used for receiving a second radio signal.

In one embodiment, the antenna 452, the transmitter 454, the transmitting processor 468 and the controller/processor 459 are used for transmitting a second signaling; at least one of the antenna 420, the receiver 418, the receiving processor 470 or the controller/processor 475 is used for receiving a second signaling.

In one embodiment, the first communication device 450 corresponds to the first node in the present application.

In one embodiment, the second communication device 410 corresponds to the second node in the present application.

In one embodiment, the second communication device 410 corresponds to the third node in the present application.

In one embodiment, the second node and the third node are the same.

In one embodiment, the second node and the third node are different.

In one embodiment, the first communication device 450 is a UE.

In one embodiment, the first communication device 450 is a UE supporting large delay difference.

In one embodiment, the first communication device 450 is a UE supporting NTN.

In one embodiment, the first communication device 450 is an aircraft.

In one embodiment, the first communication device 450 is capable of positioning.

In one embodiment, the first communication device 450 is incapable of positioning.

In one embodiment, the first communication device 450 is a UE supporting TN.

In one embodiment, the second communication device 410 is a base station (gNB/eNB/ng-eNB).

In one embodiment, the second communication device 410 is a base station supporting large delay difference.

In one embodiment, the second communication device 410 is a base station supporting NTN.

In one embodiment, the second communication device 410 is satellite equipment.

In one embodiment, the second communication device 410 is a flight platform.

In one embodiment, the second communication device 410 is a base station supporting TN.

### Embodiment 5A

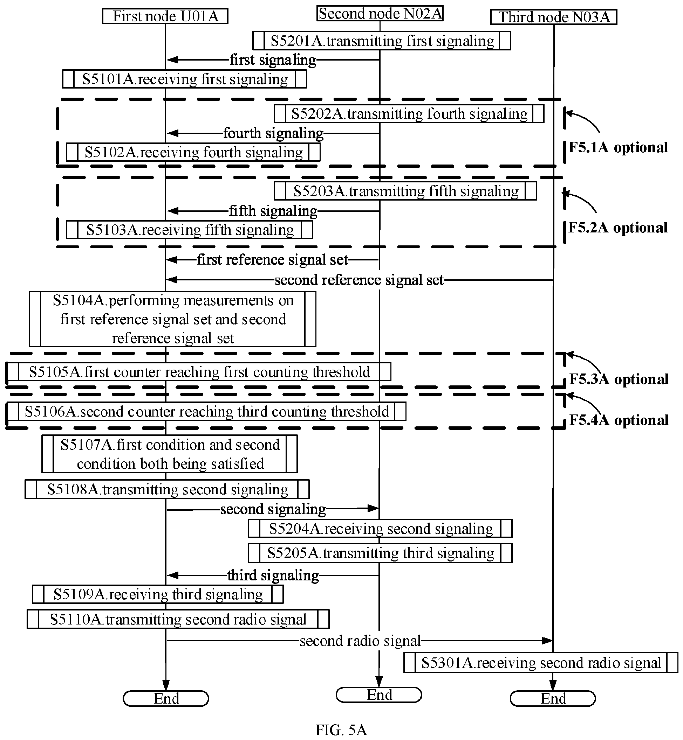

Embodiment 5A illustrates a flowchart of radio signal transmission according to one embodiment of the present application, as shown in FIG. 5A. The first node U01A is a UE; the second node N02A is a maintenance base station for a first cell; the third node N03A is a maintenance base station for a second cell; It should be particularly noted that the sequence illustrated herein does not set any limit to the signal transmission order or implementation order in the present application.

The first node U01A receives a first signaling in step S5 101A; receives a fourth signaling in step S5102A; receives a fifth signaling in step S5103A; and performs measurements on a first reference signal set and a second reference signal set in step S5104A; and in step S5105A, a first counter reaches a first counting threshold; in step S5106A, a second counter reaches a third counting threshold; and in step S5107A, both a first condition and a second condition are satisfied; in step S5108A, transmits a second signaling when a first condition and a second condition are both satisfied; receives a third signaling in step S5109A; and as a response to receiving the third signaling, transmits a second radio signal on the second cell in step S5110A.

The **second node N02A** transmits the first signaling in step S5201A; transmits the fourth signaling in step S5202A; transmits the fifth signaling in step S5203A; receives the second signaling in step S5204A; and transmits the third signaling in step S5205A.

The **third node N03A** receives the second radio signal in step S5301A.

In Embodiment 5A, the second signaling indicates a target reference signal set, the target reference signal set being a subset in the second reference signal set; the third signaling carrying information for accessing to a second cell; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied; the fourth signaling is used to determine at least one of a first counting threshold or a second counting threshold of a first counter; a relative magnitude of a result of the measurement on the first reference signal set and a first measurement threshold is used for generating a first indication, the first indication being used to determine an update of the first counter; the first radio signal is used for initiating a random access procedure; the first counting threshold is not greater than the second counting threshold; the fifth signaling is used to determine a third counting threshold of a second counter; a relative magnitude of a result of the measurement on the second reference signal set and a second measurement threshold is used for generating a second indication, the second indication being used to determine an update of the second counter; the second radio signal is used for initiating a random access procedure, the second radio signal comprising a preamble sequence.

In one embodiment, the first node U01A receives a fourth signaling, the fourth signaling being used to determine a second counting threshold of a first counter; a relative magnitude of a result of the measurement on the first reference signal set and a first measurement threshold is used for generating a first indication, the first indication being used to determine an update of the first counter; when the first counter reaches the second counting threshold, determining that a beam failure occurs in the first cell; and as a response to the action of determining that a beam failure occurs in the first cell, transmitting a first radio signal; the first radio signal is used for initiating a random access procedure.

In one embodiment, the second node N02A comprises the first TRP in the present application.

In one embodiment, the third node N03A comprises the second TRP in the present application.

In one embodiment, a transmitter of the fourth signaling includes a maintenance base station for the first cell.

In one embodiment, the fourth signaling is transmitted via an air interface.

In one embodiment, the fourth signaling is transmitted via an antenna port.

In one embodiment, the fourth signaling is transmitted via an upper layer signaling.

In one embodiment, the fourth signaling is transmitted via a higher layer signaling.

In one embodiment, the fourth signaling comprises a Downlink (DL) signal.

In one embodiment, the fourth signaling comprises all or part of an upper layer signaling.

In one embodiment, the fourth signaling comprises all or part of a higher layer signaling.

In one embodiment, the fourth signaling comprises an RRC message.

In one embodiment, the fourth signaling comprises all or partial Information Elements (IEs) in an RRC message.

In one embodiment, the fourth signaling comprises all or partial fields in an IE in an RRC message.

In one embodiment, the fourth signaling comprises a RRCReconfiguration message.

In one embodiment, the fourth signaling comprises a RRCResume message.

In one embodiment, the fourth signaling comprises a RRCSetup message.

In one embodiment, the fourth signaling comprises a SIB1.

In one embodiment, the fourth signaling comprises an IE in an RRC message, where names of the IE include BWP-DownlinkDedicated.

In one embodiment, the fourth signaling comprises an IE in an RRC message, where names of the IE include ServingCellConfig or BWP-Downlink.

In one embodiment, the fourth signaling and the first signaling belong to a same RRC message.

In one embodiment, the fourth signaling and the first signaling belong to different RRC messages.

In one embodiment, the phrase of the fourth signaling being used to determine at least one of a first counting threshold or a second counting threshold of a first counter comprises: the fourth signaling indicating the first counting threshold and the second counting threshold of the first counter.

In one embodiment, the phrase of the fourth signaling being used to determine at least one of a first counting threshold or a second counting threshold of a first counter comprises: the first counting threshold and the second counting threshold being two fields in a first IE in the fourth signaling.

In one subembodiment, names of the first IE include RadioLinkMonitoringConfig.

In one embodiment, the phrase of the fourth signaling being used to determine at least one of a first counting threshold or a second counting threshold of a first counter comprises: the first counting threshold and the second counting threshold respectively being a field in a first IE and a field in a second IE in the fourth signaling.

In one subembodiment, names of the first IE include RadioLinkMonitoringConfig.

In one subembodiment, a name of the second IE is different from a name of the first IE.

In one subembodiment, the second IE is used for L1/L2 inter-cell mobility.

In one subembodiment, names of the second IE include xxxRadioLinkMonitoringConfig.

In one subembodiment, names of the second IE include xxxMonitoringConfig.

In one subembodiment, names of the second IE include xxxMeasurementConfig.

In one subembodiment, the first IE indicates the second counting threshold, while the second IE indicates the first counting threshold.

In one embodiment, the phrase of the fourth signaling being used to determine at least one of a first counting threshold or a second counting threshold of a first counter comprises: the fourth signaling indicating the first counting threshold of the first counter, rather than the second counting threshold, where the first counting threshold is a field in a second IE in the fourth signaling.

In one embodiment, the phrase of the fourth signaling being used to determine at least one of a first counting threshold or a second counting threshold of a first counter comprises: the fourth signaling indicating the second counting threshold of the first counter, rather than the first counting threshold, where the second counting threshold is a field in a first IE in the fourth signaling.

In one embodiment, the first counter is for the first cell.

In one embodiment, the first counter is specific to the first cell.

In one embodiment, the first counter is used for counting a number of times that the first indication is received.

In one embodiment, the first counter comprises a BFI_COUNTER.

In one embodiment, an initial value of the first counter equals 0.

In one embodiment, the first counting threshold is used to determine how many of the first indications being received will satisfy a condition for triggering L1/L2 inter-cell mobility.

In one embodiment, the first counting threshold is configurable.

In one embodiment, the first counting threshold is pre-configured.

In one embodiment, the first counting threshold is a positive integer.

In one embodiment, the first counting threshold comprises xxxInstanceMaxCount.

In one embodiment, the second counting threshold is used to determine how many of the first indications being received will trigger a BFR.

In one embodiment, the second counting threshold is configurable.

In one embodiment, the second counting threshold is pre-configured.

In one embodiment, the second counting threshold is a positive integer.

In one embodiment, the second counting threshold comprises beamFailureInstanceMaxCount.

In one embodiment, when the first counter reaches the first counting threshold, a random access signal used for BFR is not triggered in the first cell; In one embodiment, when the first counter reaches the second counting threshold, a random access signal used for BFR is triggered in the first cell.

In one embodiment, the phrase that a relative magnitude of a result of the measurement on the first reference signal set and a first measurement threshold is used for generating a first indication comprises that: when any one of the K1 first-type reference signal(s) in the first reference signal set is not greater than the first measurement threshold, it is determined that the first indication is generated.

In one embodiment, the phrase that a relative magnitude of a result of the measurement on the first reference signal set and a first measurement threshold is used for generating a first indication comprises that: when each first-type reference signal in the first reference signal set is not greater than the first measurement threshold, it is determined that the first indication is generated.

In one embodiment, the first indication being generated comprises: transmitting the first indication to an upper layer of the first node U01A.

In one embodiment, the first indication being generated comprises: notifying a MAC layer of the first node U01A of the first indication.

In one embodiment, the first indication being generated comprises: receiving the first indication from Lower Layers.

In one embodiment, the first indication comprises: a Beam Failure Instance Indication.

In one embodiment, the first indication is reported to a MAC layer of the first node U01A by a physical layer of the first node U01A.

In one embodiment, the first indication is used to indicate that none of the K1 first-type reference signal(s) in the first reference signal set on the first cell is greater than the first measurement threshold.

In one embodiment, the first indication is used to indicate that each beam for link monitoring configured on the first cell is failed.

In one embodiment, the first measurement threshold comprises Q_{out,LR}.

In one embodiment, the first measurement threshold is configurable.

In one embodiment, the first measurement threshold is pre-configured.

In one embodiment, the first measurement threshold is configured via an RRC message.

In one embodiment, the first measurement threshold comprises a BLER threshold.

In one embodiment, the first measurement threshold comprises an RSRP threshold.

In one embodiment, the first measurement threshold is indicated by a field in an RRC message.

In one subembodiment, names of the field include rlmInSyncOutOfSyncThreshold.

In one subembodiment, names of the field include rsrp-ThresholdSSB.

In one subembodiment, names of the field include rsrp-ThresholdBFR.

In one embodiment, the phrase "not greater than" includes "less than".

In one embodiment, the phrase "not greater than" includes "less than" or "equal to".

In one embodiment, the result of the measurement on the first reference signal set comprises: at least one of a Reference Signal Received Power (RSRP), or a Reference Signal Received Quality (RSRQ), or a Received Signal Strength Indicator (RSSI), or a Signal to Noise and Interference Ratio (SINR), or a Channel Status Information reference signal resource indicator (CRI).

In one embodiment, the phrase of the first indication being used to determine an update of the first counter comprises: upon reception of the first indication from a lower layer, updating the first counter.

In one embodiment, the phrase of the first indication being used to determine an update of the first counter comprises: a reception of the first indication being used to trigger an update of the first counter.

In one embodiment, the phrase of the first indication being used to determine an update of the first counter comprises: a detection of the first indication in a MAC layer being used to trigger an update of the first counter.

In one embodiment, the update of the first counter comprises: the first counter being incremented by 1.

In one embodiment, the update of the first counter comprises: the first counter being decremented by 1.

In one embodiment, the phrase that the first counter reaches a second counting threshold comprises that: the first counter is equal to the second counting threshold.

In one embodiment, the phrase that the first counter reaches a second counting threshold comprises that: the first counter is larger than the second counting threshold.

In one embodiment, the phrase of determining that a beam failure occurs in the first cell comprises that: it is assumed that all beams corresponding to the first reference signal set on the first cell are failed.

In one embodiment, the phrase of determining that a beam failure occurs in the first cell comprises that: it is determined that beams on the first cell cannot continue to maintain connection.

In one embodiment, the phrase of determining that a beam failure occurs in the first cell comprises that: it is determined that a beam failure occurs on the first cell.

In one embodiment, the phrase that as a response to the action of determining that a beam failure occurs in the first cell comprises: when the beam failure occurs in the first cell.

In one embodiment, the phrase that as a response to the action of determining that a beam failure occurs in the first cell comprises: as a next step following the determination that a beam failure occurs in the first cell.

In one embodiment, the phrase that as a response to the action of determining that a beam failure occurs in the first cell comprises: when the first counter reaches the second counting threshold.

In one embodiment, the first radio signal is transmitted via an air interface.

In one embodiment, the first radio signal is transmitted via an antenna port.

In one embodiment, the first radio signal is transmitted via a physical layer signaling.

In one embodiment, the first radio signal is transmitted via a higher layer signaling.

In one embodiment, the first radio signal comprises an Uplink (UL) signal.

In one embodiment, the first radio signal comprises a Preamble.

In one embodiment, the first radio signal comprises a Preamble and a PUSCH.

In one embodiment, the first radio signal is transmitted on a Physical Random Access Channel (PRACH).

In one embodiment, the first radio signal is transmitted on a PUSCH.

In one embodiment, the first radio signal comprises at least one of a PRACH or a PUSCH.

In one embodiment, a receiver of the first radio signal includes a maintenance base station for the first cell.

In one embodiment, the first radio signal comprises all or part of the third signaling.

In one embodiment, the phrase that the first radio signal is used for initiating a random access procedure comprises that: the first radio signal is a first message in the random access procedure.

In one embodiment, the phrase that the first radio signal is used for initiating a random access procedure comprises that: the first radio signal is a message in the random access procedure.

In one embodiment, the phrase that the first radio signal is used for initiating a random access procedure comprises that: the first radio signal is used for performing 2-stepRA.

In one embodiment, the phrase that the first radio signal is used for initiating a random access procedure comprises that: the first radio signal is used for performing 4-stepRA.

In one embodiment, the phrase that the first radio signal is used for initiating a random access procedure comprises that: the first radio signal is used for a procedure of Contention Based Random Access (CBRA).

In one embodiment, the phrase that the first radio signal is used for initiating a random access procedure comprises that: the first radio signal is used for a procedure of Contention Free Random Access (CFRA).

In one embodiment, the phrase that the first condition is related to a first counter satisfying the first counting threshold comprises that: the first condition comprises that the first counter satisfies the first counting threshold.

In one embodiment, the phrase that the first condition is related to a first counter satisfying the first counting threshold comprises that: the first counter satisfying the first counting threshold is a prerequisite for the first condition being satisfied.

In one embodiment, the phrase that the first condition is related to a first counter satisfying the first counting threshold comprises that: when the first counter satisfies the first counting threshold, the first condition is satisfied; otherwise, the first condition is not satisfied.

In one embodiment, the phrase of a first counter satisfying the first counting threshold comprises: the first counter being no smaller than the first counting threshold.

In one embodiment, the phrase of a first counter satisfying the first counting threshold comprises: the first counter being equal to the first counting threshold.

In one embodiment, the phrase of a first counter satisfying the first counting threshold comprises: the first counter being larger than the first counting threshold.

In one embodiment, the phrase that the first counting threshold is not greater than the second counting threshold comprises: the first counting threshold being equal to the second counting threshold.

In one embodiment, the phrase that the first counting threshold is not greater than the second counting threshold comprises: the first counting threshold being less than the second counting threshold.

In one embodiment, a transmitter of the fifth signaling includes a maintenance base station for the first cell.

In one embodiment, the fifth signaling is transmitted via an air interface.

In one embodiment, the fifth signaling is transmitted via an antenna port.

In one embodiment, the fifth signaling is transmitted via an upper layer signaling.

In one embodiment, the fifth signaling is transmitted via a higher layer signaling.

In one embodiment, the fifth signaling comprises a Downlink (DL) signal.

In one embodiment, the fifth signaling comprises all or part of an upper layer signaling.

In one embodiment, the fifth signaling comprises all or part of a higher layer signaling.

In one embodiment, the fifth signaling comprises an RRC message.

In one embodiment, the fifth signaling comprises a RRCReconfiguration message.

In one embodiment, the fifth signaling comprises a RRCResume message.

In one embodiment, the fifth signaling comprises a RRCSetup message.

In one embodiment, the fifth signaling comprises a SIB1.

In one embodiment, the fifth signaling comprises all or partial Information Elements (IEs) in an RRC message.

In one embodiment, the fifth signaling comprises all or partial fields in an IE in an RRC message.

In one embodiment, the fifth signaling comprises an IE in an RRC message, where names of the IE include RadioLinkMonitoringConfig.

In one embodiment, the fifth signaling comprises an IE in an RRC message, the IE being used for radio link monitoring configuration.

In one embodiment, the fifth signaling comprises an IE in an RRC message, the IE being used for L1/L2 inter-cell mobility.

In one embodiment, the fifth signaling comprises an IE in an RRC message, the IE being used for configuring for L1/L2 inter-cell mobility.

In one embodiment, the fifth signaling comprises an IE in an RRC message, where names of the IE include xxxRadioLinkMonitoringConfig.

In one embodiment, the fifth signaling comprises an IE in an RRC message, where names of the IE include xxxMonitoringConfig.

In one embodiment, the fifth signaling comprises an IE in an RRC message, where names of the IE include xxxMeasurementConfig.

In one embodiment, the fifth signaling comprises an IE in an RRC message, where names of the IE include xxxConfig.

In one embodiment, the phrase that the fifth signaling is used to determine a third counting threshold of a second counter comprises that: the third counting threshold of the second counter is configured via the fifth signaling.

In one embodiment, the phrase that the fifth signaling is used to determine a third counting threshold of a second counter comprises that: the third counting threshold of the second counter is a field in the fifth signaling.

In one embodiment, the second counter is for the second cell.

In one embodiment, the second counter is specific to the second cell.

In one embodiment, the second counter is used for counting a number of times that the second indication is received.

In one embodiment, the second counter comprises a xxx_COUNTER.

In one embodiment, the second counter comprises a BFI_COUNTER for the second cell.

In one embodiment, an initial value of the second counter equals 0.

In one embodiment, the third counting threshold is used to determine how many of the second indications being received will satisfy a condition for triggering L1/L2 inter-cell mobility.

In one embodiment, the third counting threshold is configurable.

In one embodiment, the third counting threshold is pre-configured.

In one embodiment, the third counting threshold is a positive integer.

In one embodiment, the third counting threshold comprises xxxInstanceMaxCount.

In one embodiment, the third counting threshold comprises beamFailureInstanceMaxCount for the second cell.

In one embodiment, the phrase that a relative magnitude of a result of the measurement on the second reference signal set and a second measurement threshold is used for generating a second indication comprises that: any one of the K2 second-type reference signal(s) in the second reference signal set is not greater than the second measurement threshold, it is determined that the second indication is generated.

In one embodiment, the phrase that a relative magnitude of a result of the measurement on the second reference signal set and a second measurement threshold is used for generating a second indication comprises that: when each second-type reference signal in the second reference signal set is not greater than the second measurement threshold, it is determined that the second indication is generated.

In one embodiment, the phrase that a relative magnitude of a result of the measurement on the second reference signal set and a second measurement threshold is used for generating a second indication comprises that: any one of the K2 second-type reference signal(s) in the second reference signal set is no less than the second measurement threshold, it is determined that the second indication is generated.

In one embodiment, the phrase that a relative magnitude of a result of the measurement on the second reference signal set and a second measurement threshold is used for generating a second indication comprises that: when each one of K4 second-type reference signal(s) of the K2 second-type reference signal(s) in the second reference signal set is no less than the second measurement threshold, it is determined that the second indication is generated.

In one subembodiment, K4 is a positive integer no greater than K2.

In one subembodiment, K4 is configurable.

In one subembodiment, K4 is pre-configured.

In one embodiment, the phrase that a relative magnitude of a result of the measurement on the second reference signal set and a second measurement threshold is used for generating a second indication comprises that: when each second-type reference signal in the second reference signal set is no less than the second measurement threshold, it is determined that the second indication is generated.

In one embodiment, the second indication being generated comprises: transmitting the second indication to an upper layer of the first node U01A.

In one embodiment, the second indication being generated comprises: notifying a MAC layer of the first node U01A of the second indication.

In one embodiment, the second indication being generated comprises: receiving the second indication from Lower Layers.

In one embodiment, the second indication comprises: a Beam Failure Instance Indication.

In one embodiment, the second indication comprises: a Beam Success Instance Indication.

In one embodiment, the second indication is reported to a MAC layer of the first node U01A by a physical layer of the first node U01A.

In one embodiment, the second indication is used to indicate that each result of measurement(s) on the K2 second-type reference signal(s) in the second reference signal set on the second cell is not greater than the second measurement threshold.

In one embodiment, the second indication is used to indicate that each result of measurement(s) on the K2 second-type reference signal(s) in the second reference signal set on the second cell is no less than the second measurement threshold.

In one embodiment, the second indication is used to indicate that each beam for link monitoring configured on the second cell is failed.

In one embodiment, the second indication is used to indicate that each beam for link monitoring configured on the second cell is successful.

In one embodiment, the second indication is used to indicate that beams for link monitoring configured on the second cell are partially successful.

In one embodiment, the second measurement threshold comprises Q_{in,LR}.

In one embodiment, the second measurement threshold comprises Q_{out,LR}.

In one embodiment, the second measurement threshold is configurable.

In one embodiment, the second measurement threshold is pre-configured.

In one embodiment, the second measurement threshold is configured via an RRC message.

In one embodiment, the second measurement threshold comprises a BLER threshold.

In one embodiment, the second measurement threshold is indicated by a field in an RRC message.

In one subembodiment, names of the field include rlmInSyncOutOfSyncThreshold.

In one subembodiment, names of the field include rsrp-ThresholdSSB.

In one subembodiment, names of the field include rsrp-ThresholdBFR.

In one subembodiment, names of the field include rsrp-Thresholdxxx.

In one embodiment, the phrase "no less than" includes "greater than" or "equal to".

In one embodiment, the phrase "no less than" includes "greater than".

In one embodiment, the result of the measurement on the second reference signal set comprises: at least one of a Reference Signal Received Power (RSRP), or a Reference Signal Received Quality (RSRQ), or a Received Signal Strength Indicator (RSSI), or a Signal to Noise and Interference Ratio (SINR), or a Channel Status Information reference signal resource indicator (CRI).

In one embodiment, the phrase of the second indication being used to determine an update of the second counter comprises: upon reception of the second indication from a lower layer, updating the second counter.

In one embodiment, the phrase of the second indication being used to determine an update of the second counter comprises: a reception of the second indication being used to trigger an update of the second counter.

In one embodiment, the phrase of the second indication being used to determine an update of the second counter comprises: a detection of the second indication in a MAC layer being used to trigger an update of the second counter.

In one embodiment, the update of the second counter comprises: the second counter being incremented by 1.

In one embodiment, the update of the second counter comprises: the second counter being decremented by 1.

In one embodiment, the phrase that the second condition is related to the second counter satisfying the third counting threshold comprises that: the second condition comprises the second counter satisfying the third counting threshold.

In one embodiment, the phrase that the second condition is related to the second counter satisfying the third counting threshold comprises that: the second counter satisfying the third counting threshold is a prerequisite for the second condition being satisfied.

In one embodiment, the phrase that the second condition is related to the second counter satisfying the third counting threshold comprises that: when the second counter satisfies the third counting threshold, the second condition is satisfied; otherwise, the second condition is not satisfied.

In one embodiment, the phrase of the second counter satisfying the third counting threshold comprises: the second counter being no larger than the third counting threshold.

In one embodiment, the phrase of the second counter satisfying the third counting threshold comprises: the second counter being no smaller than the third counting threshold.

In one embodiment, the phrase that as a response to receiving the third signaling comprises: when receiving the third signaling.

In one embodiment, the phrase that as a response to receiving the third signaling comprises: as a next step following reception of the third signaling.

In one embodiment, the second radio signal is transmitted via an air interface.

In one embodiment, the second radio signal is transmitted via an antenna port.

In one embodiment, the second radio signal is transmitted via a physical layer signaling.

In one embodiment, the second radio signal is transmitted via a higher layer signaling.

In one embodiment, the second radio signal comprises an Uplink (UL) signal.

In one embodiment, the second radio signal comprises a Preamble.

In one embodiment, the second radio signal comprises a Preamble and a PUSCH.

In one embodiment, the second radio signal is transmitted on a Physical Random Access Channel (PRACH).

In one embodiment, the second radio signal is transmitted on a PUSCH.

In one embodiment, the second radio signal comprises at least one of a PRACH or a PUSCH.

In one embodiment, a receiver of the second radio signal includes a maintenance base station for the second cell.

In one embodiment, the phrase of the second radio signal comprising a preamble sequence comprises: the second radio signal comprising a Preamble.

In one embodiment, the phrase of the second radio signal comprising a preamble sequence comprises: the second radio signal being used for initiating a random access procedure.

In one embodiment, the phrase that the second radio signal is used for initiating a random access procedure comprises that: the second radio signal is a first message in the random access procedure.

In one embodiment, the phrase that the second radio signal is used for initiating a random access procedure comprises that: the second radio signal is a message in the random access procedure.

In one embodiment, the phrase that the second radio signal is used for initiating a random access procedure comprises that: the second radio signal is used for performing 2-stepRA.

In one embodiment, the phrase that the second radio signal is used for initiating a random access procedure comprises that: the second radio signal is used for performing 4-stepRA.

In one embodiment, the phrase that the second radio signal is used for initiating a random access procedure comprises that: the second radio signal is used for a procedure of Contention Based Random Access (CBRA).

In one embodiment, the phrase that the second radio signal is used for initiating a random access procedure comprises that: the second radio signal is used for a procedure of Contention Free Random Access (CFRA).

In one embodiment, the first signaling configures resources of the second radio signal.

In one embodiment, the first signaling does not configure resources of the second radio signal.

In one embodiment, the first condition is related to the first counter satisfying the first counting threshold.

In one embodiment, the second condition is related to the second counter satisfying the third counting threshold.

In one embodiment, the first condition is unrelated to the first counter satisfying the first counting threshold.

In one embodiment, the second condition is unrelated to the second counter satisfying the third counting threshold.

In one embodiment, the first condition is related to the first counter satisfying the first counting threshold, and the second condition is related to the second counter satisfying the third counting threshold.

In one subembodiment, when the first counter is no smaller than the first counting threshold and the second counter is no smaller than the third counting threshold, the second signaling is transmitted.

In one subembodiment, when the first counter is no smaller than the first counting threshold and the second counter is no larger than the third counting threshold, the second signaling is transmitted.

In one embodiment, the first condition is related to the first counter satisfying the first counting threshold, and the second condition is unrelated to the second counter satisfying the third counting threshold.

In one subembodiment, when the first counter is no smaller than the first counting threshold, and a measurement on the second reference signal set satisfies the second condition, the second signaling is transmitted.

In one embodiment, the first condition is unrelated to the first counter satisfying the first counting threshold, and the second condition is related to the second counter satisfying the third counting threshold.

In one subembodiment, when a measurement on the first reference signal set satisfies the first condition, and the second counter is no smaller than the third counting threshold, the second signaling is transmitted.

In one subembodiment, when a measurement on the first reference signal set satisfies the first condition, and the second counter is no larger than the third counting threshold, the second signaling is transmitted.

In one embodiment, the first condition is unrelated to the first counter satisfying the first counting threshold, and the second condition is unrelated to the second counter satisfying the third counting threshold.

In one subembodiment, when a measurement on the first reference signal set satisfies the first condition, and a measurement on the second reference signal set satisfies the second condition, the second signaling is transmitted.

In one embodiment, the dotted-line box F5.1A is optional.

In one embodiment, the dotted-line box F5.2A is optional.

In one embodiment, the dotted-line box F5.3A is optional.

In one embodiment, the dotted-line box F5.4A is optional.

In one embodiment, both of the dotted-line box F5.1A and the dotted-line box F5.3A exist.

In one embodiment, the dotted-line box F5.1A exists, while the dotted-line box F5.3A does not exist.

In one embodiment, neither of the dotted-line box F5.1A and the dotted-line box F5.3A exists.

In one embodiment, both of the dotted-line box F5.2A and the dotted-line box F5.4A exist.

In one embodiment, neither of the dotted-line box F5.2A and the dotted-line box F5.4A exists.

### Embodiment 5B

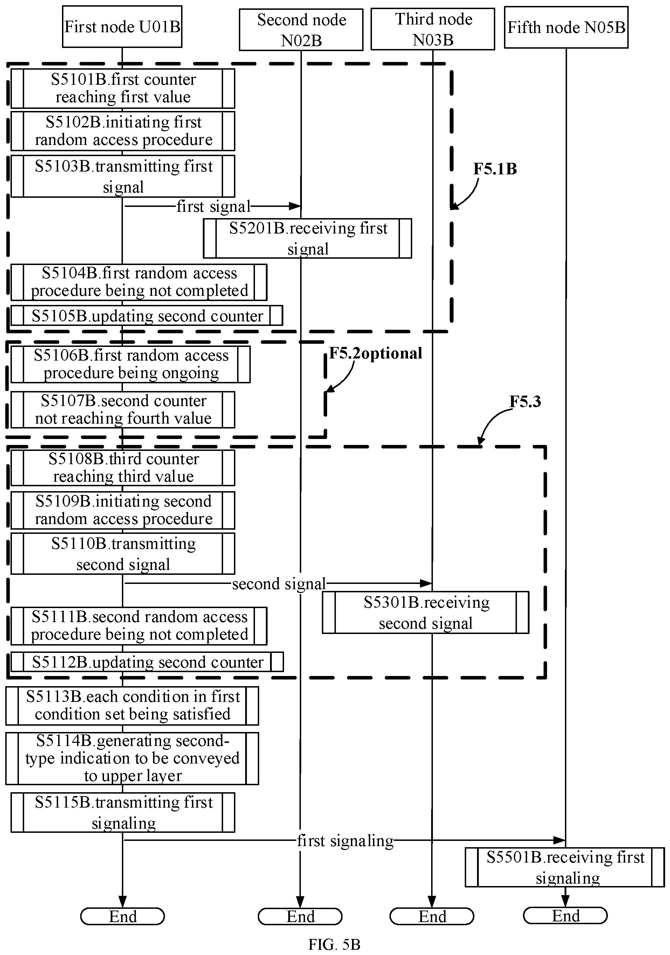

Embodiment 5B illustrates a flowchart of radio signal transmission according to one embodiment of the present application, as shown in FIG. 5B. It should be particularly noted that the sequence illustrated herein does not set any limit to the signal transmission order or implementation order in the present application.

The **first node U01B** determines that a first counter reaches a first value in step S5101B; and in step S5102B, initiates a first random access procedure when the first counter reaches the first value; transmits a first signal in step S5103B; determines that the first random access procedure is not successfully completed in step S5104B; and in step S5105B, when the first random access procedure is not successfully completed, updates a second counter; determines that the first random access procedure is ongoing in step S5106B; and in step S5107B, when the first random access procedure is ongoing, determines that the second counter does not reach the fourth value; determines that a third counter reaches a third value in step S5108B; and in step S5109B, when the third counter reaches the third value, initiates a second random access procedure; transmits a second signal in step SS 110B; determines that the second random access procedure is not successfully completed in step S5111B; and in step S5112B, when the second random access procedure is not successfully completed, updates the second counter; determines that each condition in a first condition set is satisfied in step S5113B; and in step S5114B, as a response to each condition in a first condition set being satisfied, generates a second-type indication to be conveyed to an upper layer; and in step S5115B, as a response to the action of generating a second-type indication to be conveyed to an upper layer, transmits a first signaling.

The **second node N02B** receives the first signal in step S5201B.

The **third node N03B** receives the second signal in step S5301B.

The **fifth node N05B** receives the first signaling in step S5501B.

In Embodiment 5B, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer; the third counter indicates a number of times that third-type indication(s) from lower layer(s) is(are) received; the second signal is used for random access; the third value is a positive integer; another condition in the first condition set comprises that neither of the first random access procedure and the second random access procedure is being performed.

In one embodiment, the first node U01B is a UE.

In one embodiment, the second node N02B is a base station.

In one embodiment, the second node N02B is a maintenance base station for the first cell.

In one embodiment, the third node N03B is a base station.

In one embodiment, the third node N03B is a maintenance base station for the second cell.

In one embodiment, the second node N02B and the third node N03B are the same.

In one embodiment, the second node N02B and the third node N03B are different.

In one embodiment, the second node N02B and the third node N03B belong to a same cell.

In one embodiment, the second node N02B and the third node N03B belong to different cells.

In one embodiment, the second node N02B and the third node N03B are respectively two different TRPs in the first cell.

In one embodiment, the first cell is a serving cell of the first node U01B.

In one subembodiment, the first cell comprises a PCell.

In one subembodiment, the first cell comprises a PSCell.

In one embodiment, the first cell comprises a physical cell.

In one embodiment, the first cell comprises one or more beams of a TRP.

In one embodiment, the first cell comprises multiple beams of multiple TRPs.

In one embodiment, the second cell is a neighboring cell of the first node U01B.

In one embodiment, the second cell is not a serving cell of the first node U01B.

In one embodiment, the first cell and the second cell have a same PCI.

In one embodiment, the first cell and the second cell have different PCIs.

In one embodiment, the first cell and the second cell belong to a same CU.

In one embodiment, the first cell and the second cell belong to different CUs.

In one embodiment, the first cell and the second cell belong to a same DU.

In one embodiment, the first cell and the second cell belong to different DUs.

In one embodiment, the first cell and the second cell belong to different TRPs of a same physical cell.

In one embodiment, the first cell and the second cell belong to two different TRPs.

In one embodiment, before initiating the second random access procedure, the first node U01B has not established any RRC connection with the second cell.

In one embodiment, the third counter is for the second cell.

In one embodiment, the third counter is for the first cell.

In one embodiment, the third counter is specific to a second cell.

In one embodiment, the third counter comprises a dynamic value.

In one embodiment, the third counter comprises a counting value of the first counter.

In one embodiment, the third counter comprises a BFI_COUNTER.

In one embodiment, an initial value of the third counter equals 0.

In one embodiment, the third counter comprises an LBT_COUNTER.

In one embodiment, the third counter comprises a LBT failure indicating counter.

In one embodiment, the third counter comprises a counter determining link quality.

In one embodiment, when a lbt-FailureDetectionTimer, or a beamFailureDetectionTimer, or the third value, or any reference signal in the second reference signal set in the present application is re-configured, or when switching a BWP, the third counter is set to 0.

In one embodiment, when the second random access procedure is completed, the third counter is set to 0.

In one embodiment, when MAC is reconfigured, the third counter is set to 0.

In one embodiment, the third value is configurable.

In one embodiment, the third value is pre-configured.

In one embodiment, the third value is a positive integer.

In one embodiment, the third value comprises beamFailureInstanceMaxCount.

In one embodiment, the third value comprises Ibt-FailureInstanceMaxCount.

In one embodiment, the third value is configured via an RRC signaling.

In one embodiment, the third value is configured via one of an RRCReconfiguration message, or an RRCResume message, or an RRCSetup message, or a SIB1 message.

In one embodiment, the third value is configured via an RRC message, where names of an IE in the RRC message include RadioLinkMonitoringConfig.

In one embodiment, the third value is used to determine how many of the third-type indications being received will satisfy a condition for triggering L1/L2 inter-cell mobility.

In one embodiment, the second random access procedure is for the first cell.

In one embodiment, the second random access procedure is for the second cell.

In one embodiment, the first random access procedure and the second random access procedure are for a same cell.

In one embodiment, the first random access procedure and the second random access procedure are for different cells.

In one embodiment, the first random access procedure is for the first cell, while the second random access procedure is for the second cell.

In one embodiment, the first random access procedure and the second random access procedure are performed simultaneously.

In one embodiment, the first random access procedure and the second random access procedure are not performed simultaneously.

In one embodiment, a time when the first random access procedure is initiated is earlier than a time when the second random access procedure is initiated.

In one embodiment, a time when the first random access procedure is initiated is later than a time when the second random access procedure is initiated.

In one embodiment, a receiver of the first signal includes the second node N02B, and a receiver of the second signal includes the second node N02B.

In one embodiment, a receiver of the first signal includes the second node N02B, and a receiver of the second signal includes the third node N03B.

In one embodiment, a receiver of the second signal includes a maintenance base station for a serving cell of the first node U01B.

In one embodiment, a receiver of the second signal includes a maintenance base station for the first cell.

In one embodiment, the second signal is transmitted via an air interface.

In one embodiment, the second signal is transmitted via an antenna port.

In one embodiment, the second signal is transmitted via a physical layer signaling.

In one embodiment, the second signal is transmitted via a higher layer signaling.

In one embodiment, the second signal comprises an Uplink (UL) signal.

In one embodiment, the second signal comprises a Preamble.

In one embodiment, the second signal comprises a Preamble and a PUSCH.

In one embodiment, the second signal is transmitted on a Physical Random Access Channel (PRACH).

In one embodiment, the second signal is transmitted on a PUSCH.

In one embodiment, the second signal comprises at least one of a PRACH or a PUSCH.

In one embodiment, the second signal is transmitted on the first cell.

In one embodiment, the second signal is transmitted on the second cell.

In one embodiment, the second signal is transmitted in the second random access procedure.

In one embodiment, the second signal comprises K2 second sub-signal(s), K2 being a positive integer.

In one subembodiment, any one of the K2 second sub-signal(s) comprises an Msg1.

In one subembodiment, any one of the K2 second sub-signal(s) comprises an MsgA.

In one subembodiment, one of the K2 second sub-signals comprises an Msg1, and the other one of the K2 second sub-signals comprises an MsgA.

In one subembodiment, K2 is equal to the second value.

In one subembodiment, K2 is no greater than the second value.

In one subembodiment, K2 is no less than the second value.

In one subembodiment, each of the K2 second sub-signal(s) belongs to a same random access procedure.

In one subembodiment, each of the K2 second sub-signal(s) is for a same random access procedure.

In one subembodiment, each of the K2 second sub-signal(s) is for the first cell.

In one subembodiment, each of the K2 second sub-signal(s) is for the second cell.

In one subembodiment, as a response to the action of initiating a second random access procedure, transmitting a second sub-signal; when the second random access procedure is not successfully completed, updating a second counter; when the second counter does not reach the second value, transmitting another second sub-signal; when the second counter reaches the second value, determining that a condition in the first condition set is satisfied.

In one subsidiary embodiment of the above subembodiment, the second sub-signal and the other second sub-signal are respectively two signals of the K2 second sub-signals.

In one subsidiary embodiment of the above subembodiment, the phrase of transmitting a second signal includes transmitting a second sub-signal.

In one subsidiary embodiment of the above subembodiment, the second sub-signal is a first one of the second sub-signals in the second random access procedure.

In one subsidiary embodiment of the above subembodiment, the second sub-signal is any one of the second sub-signals in the second random access procedure.

In one subsidiary embodiment of the above subembodiment, the other second sub-signal is any one of the second sub-signals in the second random access procedure.

In one subsidiary embodiment of the above subembodiment, a transmission time of the other second sub-signal is later than the second sub-signal.

In one subsidiary embodiment of the above subembodiment, the second sub-signal and the other second sub-signal are two consecutive second sub-signals, where the word consecutive means that there isn't any second sub-signal being transmitted between two signals.

In one subsidiary embodiment of the above subembodiment, the second sub-signal and the other second sub-signal are two non-consecutive second sub-signals, where the word non-consecutive means that there is another second sub-signal being transmitted between two signals.

In one embodiment, the second counter is for the first random access procedure and the second random access procedure, and the first random access procedure and the second random access procedure are for the first cell.

In one embodiment, the second counter is for the first random access procedure and the second random access procedure, and the first random access procedure and the second random access procedure are respectively for the first cell and the second cell.

In one embodiment, the second counter is specific to the first random access procedure and the second random access procedure.

In one embodiment, when the first random access procedure and the second random access procedure are simultaneously performed, the second counter is used by these procedures collectively.

In one embodiment, the first random access procedure and the second random access procedure collectively use the second counter.

In one embodiment, when the preamble sequence is transmitted and the second random access procedure is not successfully completed, the second counter is incremented by 1.

In one embodiment, the first condition set consists of the condition.

In one embodiment, the first condition set at least comprises the condition.

In one embodiment, the first condition set comprises the condition as well as one or more other conditions.

In one embodiment, the first condition set consists of the condition and the other condition.

In one embodiment, the first condition set at least comprises the condition and the other condition.

In one embodiment, the first condition set comprises the condition and the other condition as well as one or more other conditions.

In one embodiment, when a first counter reaches a first value, initiating a first random access procedure, and transmitting a first signal; when a third counter reaches a third value, initiating a second random access procedure, and transmitting a second signal; when the first random access procedure is not successfully completed, updating a second counter; when the second random access procedure is not successfully completed, updating the second counter; as a response to each condition in a first condition set being satisfied, generating a second-type indication to be conveyed to an upper layer; a condition in the first condition set is that the second counter reaches a second value.

In one embodiment, the phrase that the third counter indicates a number of times that third-type indication(s) from lower layer(s) is(are) received comprises that: the third counter is used for counting a number of times that third-type indication(s) from lower layer(s) is(are) received.

In one embodiment, the phrase that the third counter indicates a number of times that third-type indication(s) from lower layer(s) is(are) received comprises that: a value of the third counter is equal to a number of times that third-type indication(s) from lower layer(s) is(are) received.

In one embodiment, the phrase that the third counter indicates a number of times that third-type indication(s) from lower layer(s) is(are) received comprises that: the third counter indicates a number of times that third-type indication(s) from lower layer(s) is(are) received in a MAC layer.

In one embodiment, the third counter indicates a number of times that third-type indication(s) from lower layer(s) is(are) received in the second cell.

In one embodiment, the third-type indication(s) is(are) for the second cell.

In one embodiment, the third-type indication(s) is(are) indication(s) of the occurrence of beam failure instance in the second cell.

In one embodiment, the third-type indication(s) carries(carry) cell identifier(s).

In one embodiment, the third-type indication(s) carries(carry) TRP identifier(s).

In one embodiment, the third-type indication is transmitted to a MAC layer of the first node U01B by the lower layer of the first node U01B.

In one embodiment, the third-type indication comprises a beam failure instance indication.

In one embodiment, the phrase that the third-type indication comprises a beam failure instance indication comprises: the third-type indication comprising a beam failure instance indication.

In one embodiment, the phrase that the third-type indication comprises a beam failure instance indication comprises: the third-type indication being used to indicate a beam failure instance.

In one embodiment, the phrase that the first-type indication comprises a beam failure instance indication comprises: the first-type indication comprising a LBT failure indication.

In one embodiment, the phrase that the first-type indication comprises a beam failure instance indication comprises: the first-type indication being used to indicate a LBT failure.

In one embodiment, the first-type indication(s) and the third-type indication(s) are transmitted in the first cell.

In one embodiment, the first-type indication(s) and the third-type indication(s) are respectively transmitted in the first cell and the second cell.

In one embodiment, the phrase that there isn't a beam failure instance belonging to both the first-type indication(s) and the third-type indication(s) comprises that: a beam failure instance used for triggering the first-type indication(s) and a beam failure instance used for triggering the third-type indication(s) are different.

In one embodiment, the phrase that there isn't a beam failure instance belonging to both the first-type indication(s) and the third-type indication(s) comprises that: when receiving a beam failure instance, the beam failure instance belongs to the first-type indication(s), or the beam failure instance belongs to the third-type indication.

In one embodiment, the phrase that there isn't a beam failure instance belonging to both the first-type indication(s) and the third-type indication(s) comprises that: a beam failure instance is received in the first cell, the beam failure instance being the first-type indication or the third-type indication.

In one embodiment, the beam failure instance implicitly indicates the first-type indication(s) or the third-type indication(s).

In one embodiment, the beam failure instance explicitly indicates the first-type indication(s) or the third-type indication(s).

In one embodiment, when receiving a beam failure instance, if the beam failure instance belongs to the first-type indication, updating the first counter; if the beam failure instance belongs to the third-type indication, updating the third counter.

In one embodiment, upon reception of a beam failure instance, the first counter or the third counter is updated.

In one embodiment, upon reception of a beam failure instance, the first counter and the third counter are not simultaneously updated.

In one embodiment, the first signal and the second signal are transmitted simultaneously.

In one embodiment, the first signal is transmitted after the second signal.

In one embodiment, transmission times of the first signal and the second signal are decided upon UE implementation.

In one embodiment, the phrase that as a response to the action of generating a second-type indication to be conveyed to an upper layer comprises that: when the second-type indication is generated, and the second-type indication is conveyed to the upper layer.

In one embodiment, the phrase that as a response to the action of generating a second-type indication to be conveyed to an upper layer comprises that: when the upper layer receives the second-type indication.

In one embodiment, the phrase that as a response to the action of generating a second-type indication to be conveyed to an upper layer comprises that: as a next step after the second-type indication is received by the upper layer.

In one embodiment, the phrase that the first signaling is used for an update of radio connection comprises: the first signaling being used for RRC connection re-configuration.

In one embodiment, the phrase that the first signaling is used for an update of radio connection comprises: the first signaling being used for RRC connection re-establishment.

In one embodiment, the phrase that the first signaling is used for an update of radio connection comprises: the first signaling being used for RRC connection resume.

In one embodiment, the phrase that the first signaling is used for an update of radio connection comprises: the first signaling being used for RRC connection establishment.

In one embodiment, the phrase that the first signaling is used for an update of radio connection comprises: the first signaling being used for an MCG Failure Information procedure.

In one embodiment, the phrase that the first signaling comprises an RRC message comprises: the first signaling being an RRC message.

In one embodiment, the phrase that the first signaling comprises an RRC message comprises: the first signaling comprising all or partial fields in an IE in an RRC message.

In one embodiment, the phrase that the first signaling comprises an RRC message comprises: the first signaling comprising all or partial Information Elements (IEs) in an RRC message.

In one embodiment, the phrase that the first signaling comprises an RRC message comprises: the first signaling carrying an RRC message.

In one embodiment, a receiver of the first signaling includes a maintenance base station for a cell other than the first cell.

In one embodiment, a receiver of the first signaling includes a maintenance base station for the first cell.

In one embodiment, a receiver of the first signaling includes the fifth node N05B in the present application.

In one embodiment, the first signaling is transmitted via an air interface.

In one embodiment, the first signaling is transmitted via an antenna port.

In one embodiment, the first signaling is transmitted via an upper layer signaling.

In one embodiment, the first signaling is transmitted via a higher layer signaling.

In one embodiment, the first signaling comprises an Uplink (UL) signal.

In one embodiment, the first signaling comprises all or part of an upper layer signaling.

In one embodiment, the first signaling comprises all or part of a higher layer signaling.

In one embodiment, the first signaling comprises a RRCReconfigurationComplete message.

In one embodiment, the first signaling comprises a RRCReestablishmentRequest message.

In one embodiment, the first signaling comprises a MCGFailureInformation message.

In one embodiment, the first signaling comprises a ULInformationTransferMRDC message.

In one embodiment, the first signaling comprises a RRCSetupRequest message.

In one embodiment, the first signal is transmitted before the second signal; when the first random access procedure is ongoing and the second counter hasn't reached a fourth value yet, the second random access procedure is initiated, where the fourth value is a positive integer not greater than the second value.

In one subembodiment, the phrase that the first signal is transmitted before the second signal comprises that: a time of initiating the first random access procedure is earlier than a time of initiating the second random access procedure.

In one subembodiment, the phrase that the first signal is transmitted before the second signal comprises that: only after the first signal is transmitted will the second signal be transmitted.

In one subembodiment, the phrase that the first signal is transmitted before the second signal comprises that: a time when the first signal is transmitted is earlier than a time when the second signal is transmitted.

In one subembodiment, the phrase that the first signal is transmitted before the second signal comprises that: only after being through a time interval after the first signal is transmitted will the second signal be transmitted.

In one subembodiment, the phrase that the first random access procedure is ongoing comprises that a given time window in the first random access procedure still being running.

In one subsidiary embodiment of the above subembodiment, the given time window comprises a ra-Response Window.

In one subsidiary embodiment of the above subembodiment, the given time window comprises a ra-ContentionResolutionTimer.

In one subsidiary embodiment of the above subembodiment, the given time window comprises a msgB-ResponseWindow.

In one subembodiment, the phrase that the first random access procedure is ongoing comprises that the second counter does not reach the second value.

In one subembodiment, the phrase that the first random access procedure is ongoing comprises that the random access procedure does not end.

In one subembodiment, the phrase that the first random access procedure is ongoing comprises that the second counter hasn't reached the second value yet.

In one subembodiment, the phrase that the first random access procedure is ongoing comprises that the second counter hasn't reached the fourth value yet.

In one subembodiment, the phrase that the second counter hasn't reached a fourth value yet comprises that the second counter is smaller than the fourth value.

In one subembodiment, the phrase that the second counter hasn't reached a fourth value yet comprises that the second counter is no larger than the fourth value.

In one subembodiment, the phrase that the second counter hasn't reached a fourth value yet comprises that the second counter is equal to the fourth value.

In one subembodiment, the sentence that "when the first random access procedure is ongoing and the second counter hasn't reached a fourth value yet, the second random access procedure is initiated" comprises that: when factors that the first random access procedure is ongoing and the second counter hasn't reached a fourth value yet are both satisfied, it is determined that the second random access procedure is initiated.

In one subembodiment, the sentence that "when the first random access procedure is ongoing and the second counter hasn't reached a fourth value yet, the second random access procedure is initiated" comprises that: when at least one of factors that the first random access procedure is ongoing and the second counter hasn't reached a fourth value yet is not satisfied, the second random access procedure is not initiated.

In one subembodiment, even if the second counter reaches the fourth value, the first signal is transmitted.

In one subembodiment, the fourth value is configurable.

In one subembodiment, the fourth value is pre-configured.

In one subembodiment, the fourth value is a positive integer.

In one subembodiment, the fourth value is a positive integer not greater than the second value.

In one subembodiment, the fourth value is no less than the second value.

In one subembodiment, the fourth value is equal to the second value.

In one embodiment, the phrase that another condition in the first condition set comprises that neither of the first random access procedure and the second random access procedure is being performed comprises that: both the first random access procedure and the second random access procedure not being performed is another condition said-above in the first condition set.

In one embodiment, the phrase that another condition in the first condition set comprises that neither of the first random access procedure and the second random access procedure is being performed comprises that: another condition in the first condition set comprises that the first random access procedure is not being performed, and the second random access is not being performed.

In one embodiment, the first condition set comprises the condition.

In one embodiment, the first condition set comprises the condition and the other condition.

In one embodiment, the other condition exists.

In one embodiment, the other condition does not exist.

In one embodiment, when the second counter reaches the second value, it is determined that each condition in a first condition set is satisfied.

In one embodiment, when the second counter reaches the second value, and both the first random access procedure and the second random access procedure are not being performed, it is determined that each condition in a first condition set is satisfied.

In one embodiment, when the second counter reaches the second value, if the first random access procedure or the second random access procedure is being performed, dropping generation of the second-type indication.

In one subembodiment, as a response to dropping generation of the second-type indication, when the first random access procedure or the second random access procedure is successfully completed, dropping generating the second-type indication.

In one subembodiment, as a response to dropping generation of the second-type indication, when neither the first random access procedure nor the second random access procedure is successfully completed, updating the second counter, and as a response to the second counter reaching a second value, generating a second-type indication to be conveyed to an upper layer.

In one subembodiment, as a response to dropping generation of the second-type indication, when neither the first random access procedure nor the second random access procedure is successfully completed, generating a second-type indication to be conveyed to an upper layer.

In one embodiment, the first random access procedure and the second random access procedure are both being performed; when the first random access procedure is not successfully completed, updating a second counter, when the second counter reaches the second value, if the second random access procedure is being performed, dropping generation of the second-type indication, and continuing to perform the second random access procedure; if the second random access procedure is not successfully completed, generating a second-type indication to be conveyed to an upper layer; if the second random access procedure is successfully completed, assuming that the random access procedure is successfully completed and dropping generation of the second-type indication.

In one embodiment, the dotted-line box F5.2B exists.

In one embodiment, the dotted-line box F5.2B does not exist.

In one embodiment, the dotted-line box F5.2B is before the step S5104B.

In one embodiment, the dotted-line box F5.2B is after the step S5104B.

In one embodiment, there is no limit set on an order of the dotted-line box F5.1B and the dotted-line box F5.2B.

In one embodiment, the step marked by the dotted-line box F5.1B and the step marked by the dotted-line box F5.2B can be implemented simultaneously.

### Embodiment 6A

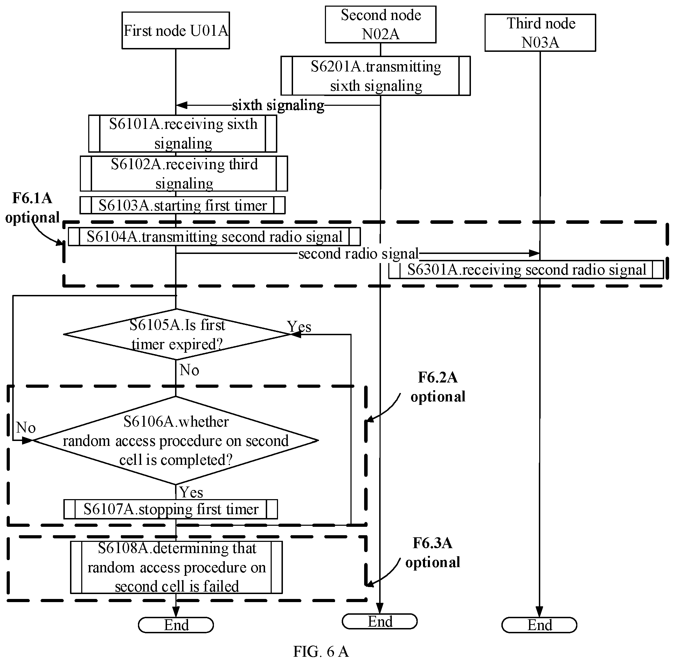

Embodiment 6A illustrates a flowchart of signal transmission according to another embodiment of the present application, as shown in FIG. 6A. The first node U01A is a UE; the second node N02A is a maintenance base station for a first cell; the third node N03A is a maintenance base station for a second cell; It should be particularly noted that the sequence illustrated herein does not set any limit to the signal transmission order or implementation order in the present application.

The **first node U01A** receives a sixth signaling in step S6101A; and receives a third signaling in step S6102A; and in step S6103A, as a response to receiving the third signaling, starts a first timer; transmits a second radio signal on a second cell in step S6104A; determines whether the first timer is expired in step S6105A; determines whether a random access procedure on the second cell is completed in step S6106A; and after completing the random access procedure on the second cell, and when the first timer is smaller than a first expiration value, stops the first timer in step S6107A; and in step S6108A, when the first timer reaches the first expiration value, determines that a random access procedure performed on the second cell is failed.

The **second node N02A** transmits the sixth signaling in step S6201A.

The **third node N03A** receives the second radio signal in step S6301A.

In Embodiment 6A, the sixth signaling indicates the first expiration value of the first timer; the third signaling carrying information of a random access to the second cell; the third signaling being a signaling of a layer below an RRC layer; the second radio signal is used for initiating a random access procedure, the second radio signal comprising a preamble sequence.

In one embodiment, the third signaling is triggered by the second signaling; when a first condition and a second condition are both satisfied, the second signaling is transmitted; the second signaling indicating a target reference signal set, the target reference signal set being a subset in the second reference signal set; the second signaling comprises a measurement report; the second signaling being a signaling of a layer below an RRC layer.

In one embodiment, the phrase of determining whether a first timer is expired comprises: determining whether the first timer is smaller than the first expiration value.

In one embodiment, the phrase of determining whether a first timer is expired comprises: determining whether the first timer has reached the first expiration value.

In one embodiment, the phrase that the first timer is smaller than the first expiration value comprises that the first timer is not expired.

In one embodiment, the phrase that the first timer is smaller than the first expiration value comprises that the first timer does not reach the first expiration value.

In one embodiment, a transmitter of the sixth signaling includes a maintenance base station for the first cell.

In one embodiment, the sixth signaling is transmitted via an air interface.

In one embodiment, the sixth signaling is transmitted via an antenna port.

In one embodiment, the sixth signaling is transmitted via an upper layer signaling.

In one embodiment, the sixth signaling is transmitted via a higher layer signaling.

In one embodiment, the sixth signaling comprises a Downlink (DL) signal.

In one embodiment, the sixth signaling comprises all or part of an upper layer signaling.

In one embodiment, the sixth signaling comprises all or part of a higher layer signaling.

In one embodiment, the sixth signaling comprises an RRC message.

In one embodiment, the sixth signaling comprises all or partial Information Elements (IEs) in an RRC message.

In one embodiment, the sixth signaling comprises all or partial fields in an IE in an RRC message.

In one embodiment, the sixth signaling and the first signaling belong to a same RRC message.

In one embodiment, the sixth signaling comprises a RRCReconfiguration message.

In one embodiment, the sixth signaling comprises a RRCResume message.

In one embodiment, the sixth signaling comprises a RRCSetup message.

In one embodiment, the sixth signaling comprises a SIB1.

In one embodiment, the sixth signaling comprises an IE in an RRC message, where names of the IE include BeamFailureRecoveryConfig.

In one embodiment, the sixth signaling comprises an IE in an RRC message, the IE being used for configuring for parameters relating to L1/L2 inter-cell mobility.

In one embodiment, the sixth signaling comprises an IE in an RRC message, where names of the IE include xxxConfig.

In one embodiment, the phrase that the sixth signaling indicates the first expiration value of the first timer comprises: the first expiration value of the first timer being a field in the sixth signaling.

In one embodiment, the phrase that the sixth signaling indicates the first expiration value of the first timer comprises: the first expiration value of the first timer being configured via the sixth signaling.

In one embodiment, the first timer is used to determine a maximum time interval of performing L1/L2 inter-cell mobility.

In one embodiment, the first timer is a MAC layer timer.

In one embodiment, the first timer is an RRC layer timer.

In one embodiment, the first timer includes T304.

In one embodiment, the first timer includes a beamFailureRecoveryTimer.

In one embodiment, the first timer includes a xxxTimer.

In one embodiment, the first timer reaching the first expiration value is used to determine that the first timer expires.

In one embodiment, the first expiration value comprises a positive integer number of slot(s), where the slot comprises at least one of slot(s), or subframe(s), or Radio Frame(s), or multiple Orthogonal Frequency Division Multiplexing (OFDM) symbols, or multiple Single Carrier Frequency Division Multiple Access (SC-FDMA) symbols.

In one embodiment, the first expiration value is configurable.

In one embodiment, the first expiration value is pre-configured.

In one embodiment, the first expiration value is used to determine a maximum time-count of the first timer.

In one embodiment, the first expiration value is used to determine a maximum running time of the first timer.

In one embodiment, the phrase that as a response to receiving the third signaling comprises: when the third signaling is received.

In one embodiment, the phrase that as a response to receiving the third signaling comprises: a certain time interval after the third signaling is received.

In one embodiment, the phrase that as a response to receiving the third signaling comprises: upon reception of the third signaling and ready to transmit the second radio signal.

In one embodiment, the phrase that as a response to receiving the third signaling comprises: upon reception of the third signaling and ready to initiate a random access procedure.

In one embodiment, firstly start the first timer and then transmit the second radio signal.

In one embodiment, starting the first timer and transmitting the second radio signal are synchronous.

In one embodiment, the action of starting a first timer comprises that the first timer begins to count time.

In one embodiment, the action of starting a first timer comprises that the first timer begins to count time from 0.

In one embodiment, the phrase that the first timer reaches a first expiration value comprises that the timing of the first timer is equal to the first expiration value.

In one embodiment, the phrase that the first timer reaches a first expiration value comprises that the value of the first timer reaches the first expiration value.

In one embodiment, the phrase that the first timer reaches a first expiration value comprises that the first timer is expired.

In one embodiment, the phrase that the first timer is smaller than the first expiration value comprises that the first timer is running.

In one embodiment, the phrase that the first timer reaches a first expiration value can be replaced with a phrase that the first timer is expired.

In one embodiment, the phrase that the first timer is smaller than the first expiration value can be replaced with a phrase that the first timer is running.

In one embodiment, the phrase of determining that a random access procedure performed on the second cell is failed comprises: assuming that the random access procedure on the second cell is not successfully completed.

In one embodiment, the phrase of determining that a random access procedure performed on the second cell is failed comprises: determining that the random access procedure on the second cell is failed.

In one embodiment, the phrase of determining that a random access procedure performed on the second cell is failed comprises: assuming that an uplink synchronization with the second cell is not completed.

In one embodiment, the phrase of determining that a random access procedure performed on the second cell is failed comprises: determining that L1/L2 mobility from the first cell to the second cell is failed.

In one embodiment, the phrase of determining that a random access procedure performed on the second cell is failed comprises: not a PDCCH being received after the second radio signal is transmitted.

In one embodiment, the phrase of determining that a random access procedure performed on the second cell is failed comprises: after the second radio signal is transmitted, receiving an RAR and transmitting an Msg3, the Msg3 comprising a C-RNTI MAC CE, and after the Msg3 is transmitted, not a PDCCH being received.

In one embodiment, the phrase of determining that a random access procedure performed on the second cell is failed comprises: receiving a PDCCH after the second radio signal is transmitted, the PDCCH not being addressed to a C_RNTI.

In one embodiment, the phrase of determining that a random access procedure performed on the second cell is failed comprises: the second radio signal comprising a C-RNTI MAC CE, receiving a PDCCH after the second radio signal is transmitted, the PDCCH not being addressed to a C_RNTI.

In one embodiment, the phrase of determining that a random access procedure performed on the second cell is failed comprises: after the second radio signal is transmitted, receiving an RAR and transmitting an Msg3, the Msg3 comprising a C-RNTI MAC CE, and after the Msg3 is transmitted, receiving a PDCCH, the PDCCH not being addressed to a C_RNTI.

In one embodiment, the phrase of completing the random access procedure on the second cell comprises: a random access procedure for the second cell being completed in success.

In one embodiment, the phrase of completing the random access procedure on the second cell comprises: assuming that the random access procedure on the second cell is successfully completed.

In one embodiment, the phrase of completing the random access procedure on the second cell comprises: acquiring an uplink synchronization with the second cell.

In one embodiment, the phrase of completing the random access procedure on the second cell comprises: receiving a PDCCH after the second radio signal is transmitted, the PDCCH being addressed to a C_RNTI.

In one embodiment, the phrase of completing the random access procedure on the second cell comprises: the second radio signal comprising a C-RNTI MAC CE, receiving a PDCCH after the second radio signal is transmitted, the PDCCH being addressed to a C_RNTI.

In one embodiment, the phrase of completing the random access procedure on the second cell comprises: after the second radio signal is transmitted, receiving an RAR and transmitting an Msg3, the Msg3 comprising a C-RNTI MAC CE, and after the Msg3 is transmitted, receiving a PDCCH, the PDCCH being addressed to a C_RNTI.

In one embodiment, the phrase that the first timer is smaller than the first expiration value comprises that the first timer is not expired.

In one embodiment, the phrase that the first timer is smaller than the first expiration value comprises that the value of the first timer is not greater than the first expiration value.

In one embodiment, the phrase that the first timer is smaller than the first expiration value comprises that the value of the first timer does not reach the first expiration value.

In one embodiment, the action of stopping the first timer comprises that: the first timer does not continue to count time.

In one embodiment, the action of stopping the first timer comprises that: the first timer is suspended.

In one embodiment, the action of stopping the first timer comprises that: the value of the first timer does not continue increasing.

In one embodiment, performing the random access procedure on the second cell has no impact on a Beam Failure Recovery (BFR) procedure on the first cell.

In one embodiment, performing the random access procedure on the second cell has an impact on a Beam Failure Recovery (BFR) procedure on the first cell.

In one embodiment, while performing the random access procedure on the second cell, the first counter continues counting.

In one embodiment, while performing the random access procedure on the second cell, the first counter stops counting.

In one embodiment, during the time while the first timer is running, the first counter continues counting.

In one embodiment, during the time while the first timer is running, the first counter stops counting.

In one embodiment, the first timer is configured with a DAPS bearer during the running time.

In one embodiment, the first timer is not configured with a DAPS bearer during the running time.

In one embodiment, the dotted-line box F6. 1A is optional.

In one embodiment, the dotted-line box F6.2A is optional.

In one embodiment, the dotted-line box F6.3A is optional.

In one embodiment, the dotted-line box F6.1A exists.

In one embodiment, the dotted-line box F6.1A does not exist.

In one embodiment, the dotted-line box F6.2A exists, while the dotted-line box F6.3A does not exist.

In one embodiment, the dotted-line box F6.2A does not exist, while the dotted-line box F6.3A exists.

### Embodiment 6B

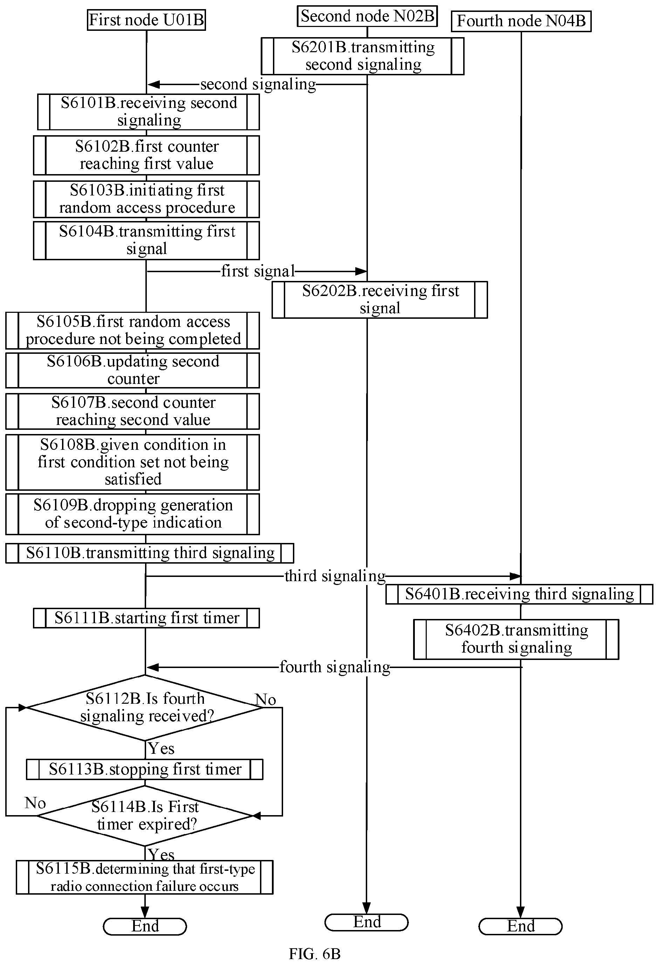

Embodiment 6B illustrates a flowchart of radio signal transmission according to another embodiment of the present application, as shown in FIG. 6B. It should be particularly noted that the sequence illustrated herein does not set any limit to the signal transmission order or implementation order in the present application.

The **first node U01B** receives a second signaling in step S6101B; in step S6102B, a first counter reaching a first value; and in step S6103B, initiates a first random access procedure when the first counter reaches the first value; transmits a first signal in step S6104B; determines that the first random access procedure is not successfully completed in step S6105B; and in step S6106B, when the first random access procedure is not successfully completed, updates a second counter; determines that a second counter reaches a second value in step S6107B; in step S6108B, a given condition in a first condition set not being satisfied; in step S6109B, drops generating a second-type indication as a response to the given condition in the first condition set not being satisfied; transmits a third signaling in step S6110B; and in step S6111B, as a response to the third signaling being transmitted, starts a first timer; determines whether a fourth signaling is received in step S6112B; and in step S6113B, as a response to receiving the fourth signaling, stops the first timer; determines whether the first timer is expired in step S6114B; and in step S6115B, when the first timer reaches a first expiration value, determines that a first-type radio connection failure occurs.

The **second node N02B** transmits the second signaling in step S6201B; and receives the first signal in step S6202B.

The **fourth node N04B** receives the third signaling in step S6401B; and transmits the fourth signaling in step S6402B.

In Embodiment 6B, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer; the second signaling indicates the first expiration value of the first timer; the first expiration value is used to determine a maximum time interval of a first-type beam recovery; the third signaling indicates a target reference signal set; the target reference signal set is related to the first-type beam recovery; the fourth signaling carries configuration information of the target reference signal set.

In one embodiment, the fourth node N04B comprises a base station.

In one embodiment, the fourth node N04B is the same as the second node N02B.

In one embodiment, the fourth node N04B is different from the second node N02B.

In one embodiment, the fourth node N04B is a maintenance base station for the second cell.

In one embodiment, the fourth node N04B is a maintenance base station for the first cell.

In one embodiment, the fourth node N04B comprises a SCell.

In one embodiment, the first cell and the second cell have different PCIs.

In one embodiment, the first cell and the second cell have a same PCI.

In one embodiment, the second cell is a neighboring cell of the first cell.

In one embodiment, the first node U01B configures information of a measurement of the second cell in the first cell.

In one embodiment, the first node U01B configures information of a random access to the second cell in the first cell.

In one embodiment, the first node U01B determines the second cell through measurement.

In one embodiment, the phrase that the second signaling indicates the first expiration value of the first timer comprises: the second signaling being used to determine the first expiration value of the first timer.

In one embodiment, the phrase that the second signaling indicates the first expiration value of the first timer comprises: the first expiration value of the first timer being a field in the second signaling.

In one embodiment, the phrase that the second signaling indicates the first expiration value of the first timer comprises: the first expiration value of the first timer being an IE in the second signaling.

In one embodiment, the phrase that the second signaling indicates the first expiration value of the first timer comprises: the first expiration value of the first timer being configured via the second signaling.

In one embodiment, a transmitter of the second signaling includes a maintenance base station for the first cell.

In one embodiment, the second signaling is transmitted via an air interface.

In one embodiment, the second signaling is transmitted via an antenna port.

In one embodiment, the second signaling is transmitted via an upper layer signaling.

In one embodiment, the second signaling is transmitted via a higher layer signaling.

In one embodiment, the second signaling comprises a Downlink (DL) signal.

In one embodiment, the second signaling comprises an RRC message.

In one embodiment, the second signaling comprises all or partial Information Elements (IEs) in an RRC message.

In one embodiment, the second signaling comprises all or partial fields in an IE in an RRC message.

In one embodiment, the second signaling comprises a RRCReconfiguration message.

In one embodiment, the second signaling comprises a RRCResume message.

In one embodiment, the second signaling comprises a RRCSetup message.

In one embodiment, the second signaling comprises a SIB1.

In one embodiment, the second signaling comprises an IE in an RRC message, where names of the IE include BeamFailureRecoveryConfig.

In one embodiment, the second signaling comprises an IE in an RRC message, the IE being used for configuring for parameters relating to L1/L2 inter-cell mobility.

In one embodiment, the second signaling comprises an IE in an RRC message, where names of the IE include xxxConfig.

In one embodiment, the first timer is used to determine a maximum time interval of performing L1/L2 inter-cell mobility.

In one embodiment, the first timer is used for L1/L2 inter-cell link recovery after failing a beam failure recovery.

In one embodiment, the first timer is a MAC layer timer.

In one embodiment, the first timer is an RRC layer timer.

In one embodiment, the first timer includes T304.

In one embodiment, the first timer includes a beamFailureRecoveryTimer.

In one embodiment, the first timer includes a xxxTimer.

In one embodiment, the sentence of "as a response to the third signaling being transmitted, starting a first timer" comprises: when the third signaling is transmitted, starting the first timer.

In one embodiment, the sentence of "as a response to the third signaling being transmitted, starting a first timer" comprises: the third signaling being transmitted being a triggering condition for the first timer being started.

In one embodiment, the phrase that each condition in a first condition set is satisfied means that the condition and the given condition are both satisfied.

In one embodiment, when the second counter reaches the second value, if the given condition is unsatisfied, dropping generation of the second-type indication.

In one embodiment, as a response to a given condition in the first condition set not being satisfied, dropping generation of the second-type indication.

In one subembodiment, the word dropping means no.

In one subembodiment, the word dropping means not.

In one subembodiment, the given condition includes one or more conditions in the first condition set.

In one subembodiment, the given condition is related to a second cell.

In one subembodiment, the given condition is related to multiple TRPs.

In one subembodiment, the given condition comprises that there is not any cell configured with random access resources.

In one subembodiment, the given condition comprises that the first timer is not configured.

In one subembodiment, the given condition comprises that L1/L2 inter-cell link recovery is not configured.

In one subembodiment, the given condition comprises that when the second counter reaches the second value, it is not allowed to initiate a random access procedure in the second cell.

In one subembodiment, the given condition comprises that the target reference signal set does not exist.

In one embodiment, the phrase that as a response to a given condition in the first condition set not being satisfied comprises: when the given condition in the first condition set is not satisfied.

In one embodiment, the phrase that as a response to a given condition in the first condition set not being satisfied comprises: as a next step after the given condition in the first condition set is not satisfied.

In one embodiment, the phrase that as a response to a given condition in the first condition set not being satisfied means that the given condition in the first condition set is not satisfied, while any other condition in the first condition set is satisfied.

In one embodiment, the phrase that as a response to a given condition in the first condition set not being satisfied means that the given condition in the first condition set is not satisfied, while the said condition in the first condition set is satisfied.

In one embodiment, the phrase that as a response to a given condition in the first condition set not being satisfied means that any condition in the first condition set other than the given condition is satisfied.

In one embodiment, the third signaling is transmitted via an air interface.

In one embodiment, the third signaling is transmitted via an antenna port.

In one embodiment, the third signaling is transmitted via an upper layer signaling.

In one embodiment, the third signaling is transmitted via a higher layer signaling.

In one embodiment, the third signaling comprises an Uplink (UL) signal.

In one embodiment, the third signaling comprises all or part of an upper layer signaling.

In one embodiment, the third signaling comprises all or part of a higher layer signaling.

In one embodiment, the third signaling comprises a MAC layer signaling.

In one embodiment, the third signaling comprises all or partial fields in a MAC layer signaling.

In one embodiment, the third signaling is a MAC CE.

In one embodiment, the third signaling is a MAC PDU.

In one embodiment, a receiver of the third signaling includes a serving base station of a SCell.

In one subembodiment, the third signaling is transmitted through a PUSCH.

In one embodiment, a receiver of the third signaling includes a serving base station of a neighboring cell of the first cell.

In one subembodiment, the third signaling is transmitted via an Msg3 or MsgA.

In one subembodiment, the neighboring cell is not a serving cell of the first node U01B.

In one embodiment, a field in the third signaling comprises a cell identifier to which the first candidate beam belongs.

In one embodiment, a field in the third signaling comprises a beam identifier of the first candidate beam.

In one embodiment, a field in the third signaling indicates that a Beam Failure Recovery (BFR) failure occurs to the first node U01B in the first cell.

In one embodiment, the third signaling explicitly indicates the target reference signal set.

In one embodiment, the third signaling implicitly indicates the target reference signal set.

In one embodiment, one or multiple fields in the third signaling indicates/indicate the target reference signal set.

In one embodiment, the third signaling comprises identifier(s) of reference signal(s) in the target reference signal set.

In one embodiment, the target reference signal set is associated with the first cell.

In one embodiment, the target reference signal set is associated with the second cell.

In one embodiment, a reference signal in the target reference signal set comprises an SSB or a CSI_RS.

In one embodiment, a reference signal in the target reference signal set is associated with a Physical Random Access Channel (PRACH) resource.

In one embodiment, a reference signal in the target reference signal set is not associated with a PRACH resource.

In one embodiment, a PRACH resource associated with a reference signal comprises a ra-PreambleIndex.

In one embodiment, a PRACH resource associated with a reference signal comprises a Random Access (RA) Occasion.

In one embodiment, the third signaling comprises the measurement report.

In one subembodiment, the measurement report comprises a measurement result for the first reference signal set.

In one subembodiment, the measurement report comprises a measurement result for the second reference signal set.

In one subembodiment, the measurement report comprises a beam identifier.

In one subembodiment, the measurement report comprises a cell identifier.

In one subembodiment, the measurement report comprises identifier(s) of a positive integer number of reference signal(s) in a target reference signal set.

In one subembodiment, the measurement report comprises identifier(s) of reference signal(s) satisfying the second condition in the second cell determined by performing a measurement on the second reference signal set.

In one embodiment, a transmitter of the fourth signaling includes a maintenance base station for the first cell.

In one embodiment, the fourth signaling is transmitted via an air interface.

In one embodiment, the fourth signaling is transmitted via an antenna port.

In one embodiment, the fourth signaling is transmitted via an upper layer signaling.

In one embodiment, the fourth signaling is transmitted via a higher layer signaling.

In one embodiment, the fourth signaling comprises a Downlink (DL) signal.

In one embodiment, the fourth signaling comprises a MAC layer signaling.

In one embodiment, the fourth signaling comprises all or partial fields in a MAC layer signaling.

In one embodiment, the fourth signaling comprises a MAC Protocol Data Unit (PDU).

In one embodiment, the fourth signaling comprises a MAC CE.

In one embodiment, the fourth signaling comprises a PDCCH.

In one embodiment, a field in the fourth signaling indicates a search space identifier.

In one embodiment, a field in the fourth signaling indicates a random-access preamble sequence index.

In one embodiment, a field in the fourth signaling indicates a first subcarrier spacing.

In one embodiment, a field in the fourth signaling indicates a preamble root sequence.

In one embodiment, a field in the fourth signaling indicates a RA Occasion.

In one embodiment, a field in the fourth signaling indicates a DRBID.

In one embodiment, the fourth signaling carries information of a random access to the second cell.

In one embodiment, the fourth signaling carries DRB configuration of the second cell.

In one embodiment, the fourth signaling indicates information needed for L1/L2 inter-cell mobility.

In one embodiment, the fourth signaling carries a cell identifier of the second cell.

In one embodiment, the fourth signaling carries resource configuration for accessing the second cell.

In one embodiment, the phrase that the fourth signaling carries configuration information of the target reference signal set comprises: the fourth signaling comprising configuration information of the target reference signal set.

In one embodiment, the phrase that the fourth signaling carries configuration information of the target reference signal set comprises: configuration information of the target reference signal set being one or more fields in the fourth signaling.

In one embodiment, configuration information of the target reference signal set comprises random access resources.

In one embodiment, configuration information of the target reference signal set comprises uplink or downlink time-frequency resources.

In one embodiment, configuration information of the target reference signal set comprises reference signal(s) used for measurement.

In one embodiment, configuration information of the target reference signal set comprises PDCP layer configuration.

In one embodiment, configuration information of the target reference signal set comprises RLC layer configuration.

In one embodiment, the phrase that the first expiration value is used to determine a maximum time interval of a first-type beam recovery comprises that the first expiration value is equal to a maximum time interval that is allowable for the first-type beam recovery.

In one embodiment, the phrase that the first expiration value is used to determine a maximum time interval of a first-type beam recovery comprises that when the time interval of the first beam recovery reaches the first expiration value, the first beam recovery cannot be continued.

In one embodiment, the phrase that the target reference signal set is related to the first-type beam recovery comprises that the target reference signal set is used for the first-type beam recovery.

In one embodiment, the phrase that the target reference signal set is related to the first-type beam recovery comprises that a reference signal in the target reference signal set is used for performing the first-type beam recovery.

In one embodiment, the phrase that the target reference signal set is related to the first-type beam recovery comprises that beam resources of the first-type beam recovery are selected from the target reference signal set.

In one embodiment, the first-type beam recovery is performed on the second cell.

In one embodiment, the first-type beam recovery is not BFR.

In one embodiment, the first-type beam recovery is BFR.

In one embodiment, the first-type beam recovery is performed on another TRP in the first cell.

In one embodiment, the first-type beam recovery is performed on another cell other than the first cell.

### Embodiment 7A

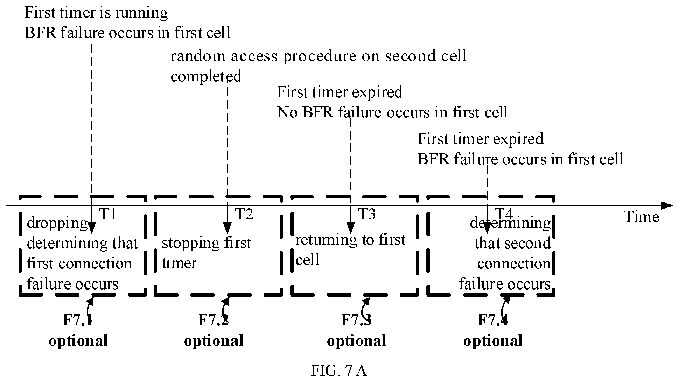

Embodiment 7A illustrates a schematic diagram of a first node's behavior after a first timer is started according to one embodiment of the present application. In FIG. 7A, the horizontal axis represents time, where T1, T2, T3 and T4 are four instances of time on the time axis; At the T1, the first timer is running, and a Beam Failure Recovery (BFR) failure occurs in a first cell; at the T2, a random access procedure on a second cell is completed; at the T3, the first timer is expired, and the BFR failure does not occur in the first cell; at the T4, the first timer is expired, and a BFR failure occurs in the first cell; the T 1, the T2, the T3 and the T4 are four instances of time that are optional.

In Embodiment 7A, when a Beam Failure Recovery (BFR) failure occurs in the first cell, dropping determining that a first connection failure occurs if the first timer is running; and/or when the first timer is expired, returning to the first cell if the BFR failure does not occur in the first cell; and/or when the first timer is expired, determining that a second connection failure occurs if the BFR failure occurs in the first cell.

In one embodiment, performing the random access procedure on the second cell has no impact on a Beam Failure Recovery (BFR) procedure on the first cell.

In one embodiment, while performing the random access procedure on the second cell, the first counter continues counting.

In one embodiment, during the time while the first timer is running, the first counter continues counting.

In one embodiment, the first timer is configured with a DAPS bearer during the running time.

In one embodiment, during a time while the first timer is running, the first node is simultaneously connected to the first cell and the second cell through Dual Stack.

In one embodiment, when completing the random access procedure on the second cell, stopping the first timer.

In one subembodiment, when completing the random access procedure on the second cell, the BFR failure occurs in the first cell.

In one subembodiment, when completing the random access procedure on the second cell, the BFR failure does not occur in the first cell.

In one embodiment, the phrase that the BFR failure occurs in the first cell comprises that a beam failure occurs on the first cell and a recovery for the beam failure is failed.

In one embodiment, the phrase that the BFR failure occurs in the first cell comprises that a random access procedure initiated for the BFR on the first cell is not successfully completed.

In one embodiment, the phrase that the BFR failure occurs in the first cell comprises that the first counter on the first cell reaches the second counting threshold, and a random access procedure is initiated by transmitting the first radio signal on the first cell, the random access procedure being used for recovery of the beam failure, and the random access procedure is failed.

In one subembodiment, the phrase that the random access procedure is failed comprises: not receiving a Radom Access Response (RAR) for a preamble sequence.

In one subembodiment, the phrase that the random access procedure is failed comprises: not a PDCCH being received after the first radio signal is transmitted.

In one subembodiment, the phrase that the random access procedure is failed comprises: after the first radio signal is transmitted, receiving an RAR and transmitting an Msg3, but not a PDCCH for the Msg3 being received.

In one subembodiment, the phrase that the random access procedure is failed comprises: not completing the random access procedure.

In one subembodiment, the phrase that the random access procedure is failed comprises: a number of times a preamble sequence is transmitted reaches or exceeds a maximum value that is allowable.

In one subembodiment, the phrase that the random access procedure is failed comprises: after the first radio signal is transmitted, receiving a PDCCH in a search space indicated by a recoverySearchSpaceId, the PDCCH being not addressed to a C_RNTI.

In one subembodiment, the phrase that the random access procedure is failed comprises: the first radio signal comprising a C-RNTI MAC CE, receiving a PDCCH after the first radio signal is transmitted, the PDCCH not being addressed to a C_RNTI.

In one subembodiment, the phrase that the BFR is successful comprises: after the first radio signal is transmitted, receiving an RAR and transmitting an Msg3, the Msg3 comprising a C-RNTI MAC CE, and after the Msg3 is transmitted, receiving a PDCCH, the PDCCH not being addressed to a C_RNTI.

In one embodiment, the phrase that the first timer is running comprises that: the first timer is keeping time.

In one embodiment, the phrase that the first timer is running comprises that: the first timer does not reach a maximum value, and is not stopped or suspended.

In one embodiment, the action of dropping determining that a first connection failure occurs comprises: being uncertain of an occurrence of the first connection failure.

In one embodiment, the action of dropping determining that a first connection failure occurs comprises: not triggering an occurrence of the first connection failure.

In one embodiment, the action of dropping determining that a first connection failure occurs comprises: dropping transmitting a third indication to an upper layer.

In one subembodiment, the third indication is used to determine to transmit the first connection failure.

In one subembodiment, the third indication is used to indicate that there occurs the first connection failure.

In one subembodiment, the third indication is used indicate that there occurs a random access problem, which further indicates that a BFR of a SpCell is failed.

In one subembodiment, the third indication is transmitted via a MAC layer to an RRC layer.

In one subembodiment, the third indication comprises an inter-layer message of the first node.

In one subembodiment, the third indication is transmitted to a higher layer by the first node.

In one subembodiment, the third indication is generated in a MAC layer.

In one embodiment, the radio connection failure comprises a radio link failure.

In one embodiment, the first connection failure is for the first cell.

In one embodiment, the first connection failure is for an RRC layer.

In one embodiment, the first connection failure is for a higher layer.

In one embodiment, when a BFR in the first cell is failed, if the first timer is running, dropping determining that a first connection failure occurs, and as a response to the action of dropping determining that a first connection failure occurs, continuing to perform the random access procedure on the second cell.

In one embodiment, the phrase that the first timer is expired comprises: the first timer reaching the first expiration value.

In one embodiment, the phrase that the first timer is expired comprises: a running time of the first timer reaching a maximum running time.

In one embodiment, the word reaching includes "being equal to".

In one embodiment, the word reaching includes "being larger than".

In one embodiment, the phrase that the BFR failure does not occur in the first cell comprises that during the time while the first timer is running, a first counter of the first cell does not reach the second counting threshold.

In one embodiment, the phrase that the BFR failure does not occur in the first cell comprises that during the time while the first timer is running, a first counter of the first cell reaches the second counting threshold, which triggers a beam failure, a BFR is performed, and the BFR is successful.

In one subembodiment, the phrase that the BFR is successful comprises: the random access procedure is deemed as being completed successfully.

In one subembodiment, the phrase that the BFR is successful comprises: receiving a PDCCH.

In one subembodiment, the phrase that the BFR is successful comprises: after the first radio signal is transmitted, receiving a PDCCH in a search space indicated by a recoverySearchSpaceId, the PDCCH being addressed to a C_RNTI.

In one subembodiment, the phrase that the BFR is successful comprises: the first radio signal comprising a C-RNTI MAC CE, receiving a PDCCH after the first radio signal is transmitted, the PDCCH being addressed to a C_RNTI.

In one subembodiment, the phrase that the BFR is successful comprises: after the first radio signal is transmitted, receiving an RAR and transmitting an Msg3, the Msg3 comprising a C-RNTI MAC CE, and after the Msg3 is transmitted, receiving a PDCCH, the PDCCH being addressed to a C_RNTI.

In one embodiment, the action of returning to the first cell comprises: continuing to stay in the first cell.

In one embodiment, the action of returning to the first cell comprises: continuing to use a beam in the first cell to keep communications.

In one embodiment, the action of returning to the first cell comprises: releasing a DAPS DRB.

In one embodiment, the action of returning to the first cell comprises: releasing a configuration for the second cell.

In one subembodiment, the configuration for the second cell includes a DRB configuration.

In one subembodiment, the configuration for the second cell includes a measurement configuration.

In one embodiment, the sentence that "when the first timer is expired, determining that a second connection failure occurs if the BFR failure occurs in the first cell" comprises that only when the first timer is expired and a BFR failure occurs during the time while the first timer is running will the second connection failure be triggered.

In one embodiment, the sentence that "when the first timer is expired, determining that a second connection failure occurs if the BFR failure occurs in the first cell" comprises that when the first timer is expired, and a BFR failure occurs during the time while the first timer is running, it is assumed that the second connection failure occurs.

In one embodiment, the second connection failure comprises: a Handover Failure.

In one embodiment, the second connection failure comprises: L1/L2 Mobility Failure.

In one embodiment, the second connection failure comprises: an RLF.

In one embodiment, when the first timer is expired, if a BFR failure occurs in the first cell, it is determined that a second connection failure occurs, as a response to the action of determining that a second connection failure occurs, the third indication is transmitted.

In one embodiment, when the first timer is expired, if a BFR failure occurs in the first cell, it is determined that a second connection failure occurs, as a response to the action of determining that a second connection failure occurs, a fourth indication is transmitted.

In one subembodiment, the fourth indication is transmitted via a MAC layer to an RRC layer.

In one subembodiment, the fourth indication comprises an inter-layer message of the first node.

In one subembodiment, the fourth indication is transmitted to a higher layer by the first node.

In one subembodiment, the fourth indication is generated in a MAC layer.

In one subembodiment, the fourth indication is used to determine that there occur the first connection failure and the second connection failure.

In one subembodiment, the fourth indication is used to determine that there occurs the second connection failure.

In one embodiment, the dotted-line box F7.1 is optional.

In one embodiment, the dotted-line box F7.2 is optional.

In one embodiment, the dotted-line box F7.3 is optional.

In one embodiment, the dotted-line box F7.4 is optional.

In one embodiment, when the dotted-line box F7.2 exists, the dotted-line box F7.1 exists, while the dotted-line boxes F7.3 and F7.4 do not exist.

In one embodiment, when the dotted-line box F7.2 exists, the dotted-line box F7.1 does not exist, and the dotted-line boxes F7.3 and F7.4 do not exist.

In one embodiment, when the dotted-line box F7.4 exists, the dotted-line box F7.1 exists, while the dotted-line boxes F7.2 and F7.3 do not exist.

In one embodiment, when the dotted-line box F7.3 exists, the dotted-line boxes F7.1, F7.2 and F7.4 do not exist.

### Embodiment 7B

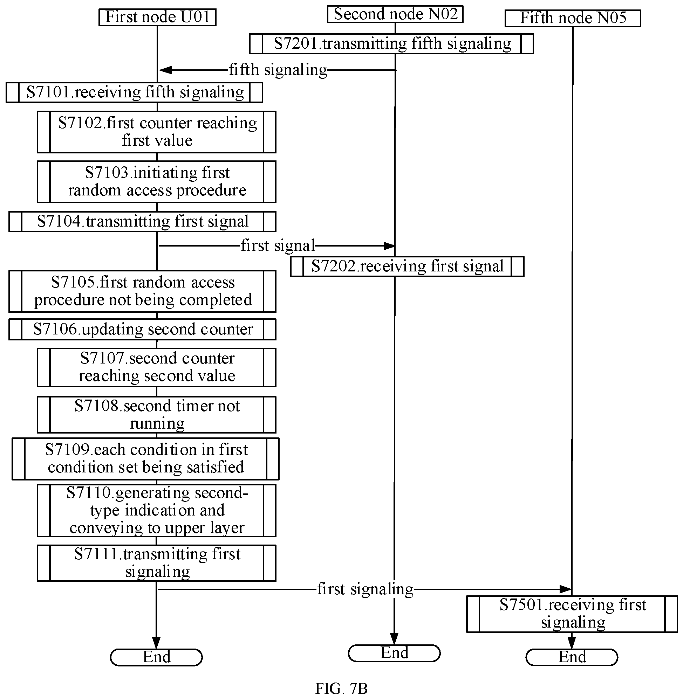

Embodiment 7B illustrates a flowchart of signal transmission according to another embodiment of the present application, as shown in FIG. 7B. It should be particularly noted that the sequence illustrated herein does not set any limit to the signal transmission order or implementation order in the present application.

The **first node U01** receives a fifth signaling in step S7101; determines that a first counter reaches a first value in step S7102; and in step S7103, initiates a first random access procedure when the first counter reaches the first value; transmits a first signal in step S7104; determines that the first random access procedure is not successfully completed in step S7105; and in step S7106, when the first random access procedure is not successfully completed, updates a second counter; determines that the second counter reaches a second value in step S7107; determines that a second timer is not running in step S7108; determines that each condition in a first condition set is satisfied in step S7109; and in step S7110, as a response to each condition in the first condition set being satisfied, generates a second-type indication to be conveyed to an upper layer; and in step S7111, as a response to the action of generating the second-type indication to be conveyed to an upper layer, transmits a first signaling.

The **second node N02** transmits the fifth signaling in step S7201; and receives the first signal in step S7202.

The **fifth node N05** receives the first signaling in step S7501.

In Embodiment 7B, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer; the first signaling is used for an update of radio connection; the first signaling comprises an RRC message; the fifth signaling indicates a second expiration value of a second timer; the second expiration value is used to determine a maximum time interval of inter-cell mobility; the second timer reaching the second expiration value is used to determine that the inter-cell mobility is failed; another condition in the first condition set is: the second timer not being running.

In one embodiment, the fifth node N05 is determined by Cell Selection.

In one embodiment, the fifth node N05 comprises a maintenance base station for a PSCell.

In one embodiment, the fifth node N05 comprises a maintenance base station for a serving cell of an SCG.

In one embodiment, the fifth node N05 comprises the second node N02.

In one embodiment, the first node U01 is configured with Dual Active Protocol Stack (DAPS).

In one embodiment, when the first node U01 begins to establish a connection to the second cell, the first counter reaches the first value.

In one embodiment, when the first node U01 begins to establish a connection to the second cell, the first counter does not reach the first value.

In one embodiment, when the first node U01 begins to establish a connection to the second cell, the first node U01 keeps its RRC connection with the first cell.

In one embodiment, the phrase of inter-cell mobility refers to L1/L2 inter-cell mobility.

In one embodiment, the phrase of inter-cell mobility is not L3 handover.

In one embodiment, when the second counter reaches the second value, if the second timer is not running, the second-type indication is generated and conveyed to the upper layer; when the second counter reaches the second value, if the second timer is running, generation of the second-type indication is dropped.

In one embodiment, a transmitter of the fifth signaling includes a maintenance base station for the first cell.

In one embodiment, the fifth signaling is transmitted via an air interface.

In one embodiment, the fifth signaling is transmitted via an antenna port.

In one embodiment, the fifth signaling is transmitted via an upper layer signaling.

In one embodiment, the fifth signaling is transmitted via a higher layer signaling.

In one embodiment, the fifth signaling comprises a Downlink (DL) signal.

In one embodiment, the fifth signaling comprises all or part of an upper layer signaling.

In one embodiment, the fifth signaling comprises all or part of a higher layer signaling.

In one embodiment, the fifth signaling comprises an RRC message.

In one embodiment, the fifth signaling comprises all or partial Information Elements (IEs) in an RRC message.

In one embodiment, the fifth signaling comprises all or partial fields in an IE in an RRC message.

In one embodiment, the fifth signaling comprises a RRCReconfiguration message.

In one embodiment, the fifth signaling comprises a RRCResume message.

In one embodiment, the fifth signaling comprises a RRCSetup message.

In one embodiment, the fifth signaling comprises a SIB1.

In one embodiment, the fifth signaling comprises an IE in an RRC message, where names of the IE include BeamFailureRecoveryConfig.

In one embodiment, the fifth signaling comprises an IE in an RRC message, the IE being used for configuring for parameters relating to L1/L2 inter-cell mobility.

In one embodiment, the fifth signaling comprises an IE in an RRC message, where names of the IE include xxxConfig.

In one embodiment, the second timer is used to determine a maximum time interval of performing L1/L2 inter-cell mobility.

In one embodiment, the second timer is a MAC layer timer.

In one embodiment, the second timer is an RRC layer timer.

In one embodiment, the second timer includes T304.

In one embodiment, the second timer includes a beamFailureRecoveryTimer.

In one embodiment, the second timer includes a xxxTimer.

In one embodiment, the second timer reaching the second expiration value is used to determine that the second timer expires.

In one embodiment, when a mobility configuration signaling is received, start the second timer.

In one subembodiment, the mobility configuration signaling is transmitted via a higher layer signaling.

In one subembodiment, the mobility configuration signaling comprises a Downlink (DL) signal.

In one subembodiment, the mobility configuration signaling comprises a MAC CE.

In one subembodiment, the mobility configuration signaling carries information of a random access to the second cell.

In one subembodiment, the mobility configuration signaling carries a DRB configuration of the second cell.

In one subembodiment, the mobility configuration signaling indicates information needed for L1/L2 inter-cell mobility.

In one subembodiment, the mobility configuration signaling carries a cell identifier of the second cell.

In one subembodiment, the mobility configuration signaling carries resource configuration for accessing the second cell.

In one embodiment, when starting to establish a connection to the second cell, the second timer is started.

In one embodiment, when establishing a connection to the second cell is successfully completed, and the second timer is smaller than a second expiration value, the second timer is stopped.

In one subembodiment, the phrase that establishing a connection to the second cell is successfully completed comprises: completing a random access procedure on the second cell.

In one subembodiment, the phrase that establishing a connection to the second cell is successfully completed comprises: acquiring an uplink synchronization with the second cell.

In one subembodiment, the phrase that establishing a connection to the second cell is successfully completed comprises: acquiring a downlink synchronization with the second cell.

In one embodiment, the second timer is used for L1/L2 inter-cell mobility.

In one embodiment, the second timer is a MAC layer timer.

In one embodiment, the second expiration value is configured by RRC.

In one embodiment, the second expiration value comprises a positive integer number of slot(s).

In one embodiment, the slot in the present application comprises at least one of slot(s), or subframe(s), or Radio Frame(s), or multiple Orthogonal Frequency Division Multiplexing (OFDM) symbols, or multiple Single Carrier Frequency Division Multiple Access (SC-FDMA) symbols.

In one embodiment, the phrase of establishing a connection to the second cell comprises: performing a random access on the second cell.

In one embodiment, the phrase of establishing a connection to the second cell comprises: performing an uplink synchronization with the second cell.

In one embodiment, the phrase of establishing a connection to the second cell comprises: performing a downlink synchronization with the second cell.

In one embodiment, the phrase of establishing a connection to the second cell comprises: receiving system information of the second cell.

In one embodiment, the phrase that the second timer reaching the second expiration value is used to determine that the inter-cell mobility is failed comprises that when the second timer reaches the second expiration value, it is determined that the inter-cell mobility is failed.

In one embodiment, the phrase that the second timer is not running comprises that: the first node U01 does not perform a random access procedure on the second cell.

In one embodiment, the phrase that the second timer is not running comprises that: the second timer is not keeping time.

In one embodiment, the second timer being not running comprises that: the second timer is no larger than zero or the second timer is larger than the second expiration value.

In one embodiment, the second timer being not running comprises that: the second timer is equal to zero.

In one embodiment, the second timer being not running comprises that: the second timer is not started.

In one embodiment, the second timer being not running comprises that: the second timer is equal to the second expiration value.

In one embodiment, the second timer being not running comprises that: the second timer is not keeping time.

In one embodiment, the second timer being not running comprises that: the second timer is larger than the second expiration value.

In one embodiment, the second timer being not running comprises that: the second timer is no smaller than the second expiration value.

In one embodiment, the second timer being not running comprises that: the second timer is expired.

In one embodiment, the second timer being not running comprises that: the second timer is suspended.

In one embodiment, the second timer being not running comprises that: the second timer is not triggered.

In one embodiment, the second timer being not running comprises that: the second timer is started, and the running time of the second timer reaches the second expiration value.

In one embodiment, the second timer being not running comprises that: the second timer is started, and after reaching a given running time the second timer is suspended, where the given running time is not greater than the second expiration value, and being suspended means that the second timer can continue to keep time on the basis of the given running time.

In one embodiment, the second timer being not running comprises that: the second timer is started, and after reaching a given running time the second timer is stopped, where the given running time is not greater than the second expiration value, and being stopped means that the second timer can no longer keep time on the basis of the given running time.

In one embodiment, the condition in the first condition set and the other condition in the first condition set being both satisfied is used to determine that each condition in the first condition set is satisfied.

In one embodiment, each condition in a first condition set being satisfied means that the condition and the other condition are both satisfied.

In one embodiment, each condition in a first condition set being satisfied means that the second counter reaches the second value, and the second timer is not running.

### Embodiment 8A

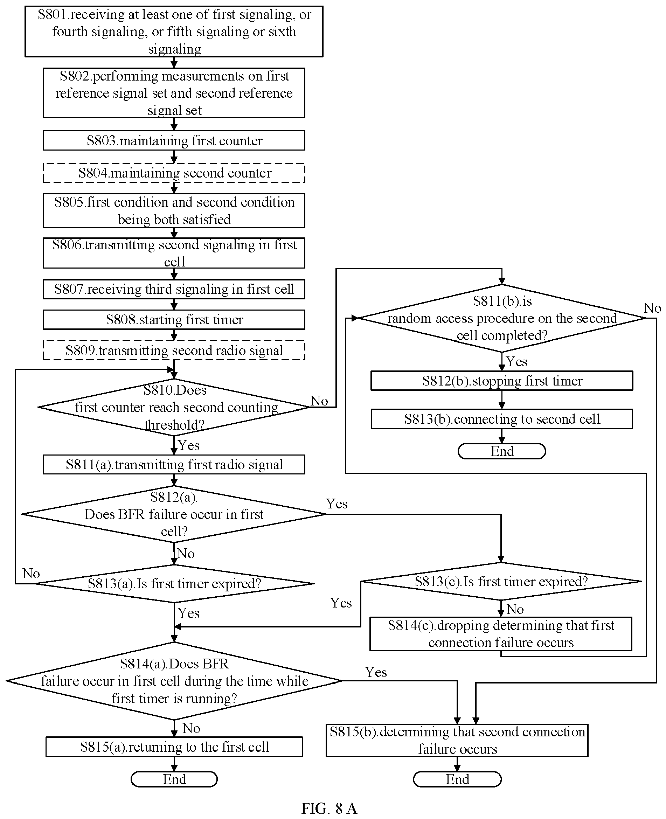

Embodiment 8A illustrates a schematic diagram of operating procedures of a first node according to one embodiment of the present application, as shown in FIG. 8A. It should be particularly noted that the sequence illustrated herein does not set any limit to the signal transmission order or implementation order in the present application.

In Embodiment 8A, the first node receives at least one of a first signaling, or a fourth signaling, or a fifth signaling, or a sixth signaling in step S801; and performs measurements on a first reference signal set and a second reference signal set in step S802; and maintains a first counter in step S803; a relative magnitude of a result of the measurement on the first reference signal set and a first measurement threshold is used for generating a first indication, the first indication being used to determine an update of the first counter; and maintains a second counter in step S804; a relative magnitude of a result of the measurement on the second reference signal set and a second measurement threshold is used for generating a second indication, the second indication being used to determine an update of the second counter; and in step S805, both a first condition and a second condition are satisfied; in step S806, transmits a second signaling when a first condition and a second condition are both satisfied; receives a third signaling in step S807; and in step S808, as a response to receiving the third signaling, starts a first timer; and in step S809, as a response to receiving the third signaling, transmits a second radio signal on the second cell; determines whether a first counter reaches a second counting threshold in step S810; when the first counter reaches the second counting threshold, it is determined that a beam failure occurs in the first cell, entering step S811(a), otherwise, entering step S811(b); in step S811(a), as a response to the action of determining that a beam failure occurs in the first cell, transmits a first radio signal; and in step S812(a), determines whether a BFR failure occurs in a first cell; when the BFR failure occurs in the first cell, entering step S813(c), otherwise, entering step S813(a); in step S813(a), determines whether a first timer is expired, and when the first timer reaches a first expiration value, determines that a random access procedure performed on the second cell is failed, entering step S814(a), otherwise, entering step S810; and in step S814(a), determines whether a BFR failure occurs in a first cell during a time while a first timer is running; if the BFR failure does not occur in the first cell, entering step S815(a), otherwise, entering step S815(b); in step S815(a), when the first timer is expired, and the BFR failure does not occur in the first cell, returning to the first cell; in step S811(b), determines whether a random access procedure performed on the second cell is completed, when the random access procedure on the second cell is completed, entering step S812(b), otherwise, entering step S815(b); and in step S812(b), after completing the random access procedure on the second cell, and when the first timer is smaller than the first expiration value, stopping the first timer; connects to the second cell in step S813(b); and in step S813(c), determines whether the first timer is expired, when the first timer is expired, entering step S814(a), otherwise, entering step S814(c); in step S814(c), when a BFR failure occurs in the first cell, drops determining that a first connection failure occurs if the first timer is running; and in step S815(b), when the first timer is expired, determines that a second connection failure occurs if the BFR failure occurs in the first cell.

In one embodiment, the third signaling carries information for accessing to a second cell; the second signaling indicating a target reference signal set, the target reference signal set being a subset in the second reference signal set; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied; the fourth signaling is used to determine at least one of a first counting threshold or a second counting threshold of a first counter; the first condition is related to the first counter satisfying the first counting threshold; the first radio signal is used for initiating a random access procedure; the first counting threshold is not greater than the second counting threshold; the fifth signaling is used to determine a third counting threshold of a second counter; the second condition is related to the second counter satisfying the third counting threshold; the second radio signal is used for initiating a random access procedure, the second radio signal comprising a preamble sequence; the sixth signaling indicates the first expiration value of the first timer.

In one embodiment, the phrase of receiving at least one of a first signaling, or a fourth signaling, or a fifth signaling, or a sixth signaling comprises: receiving one or more of the first signaling, the fourth signaling, the fifth signaling or the sixth signaling.

In one embodiment, the first signaling, the fourth signaling, the fifth signaling, and the sixth signaling are received in different RRC messages.

In one embodiment, at least two of the first signaling, the fourth signaling, the fifth signaling, and the sixth signaling are received in a same RRC message.

In one embodiment, at least three of the first signaling, the fourth signaling, the fifth signaling, and the sixth signaling are received in a same RRC message.

In one embodiment, the first signaling, the fourth signaling, the fifth signaling, and the sixth signaling are received in a same RRC message.

In one embodiment, the first condition is related to the first counter, while the second condition is related to the second counter.

In one embodiment, the first condition is related to the first counter, while the second condition is unrelated to the second counter.

In one embodiment, the first condition is unrelated to the first counter, while the second condition is related to the second counter.

In one embodiment, the first condition is unrelated to the first counter, while the second condition is unrelated to the second counter.

In one embodiment, the step S804 is optional.

In one subembodiment, when the step S804 exists, the second condition is related to the second counter.

In one subembodiment, when the step S804 does not exist, the second condition is unrelated to the second counter.

In one embodiment, the step S809 is optional.

In one subembodiment, when the step S809 exists, the second radio signal is transmitted.

In one subembodiment, when the step S809 does not exist, the second radio signal is not transmitted.

### Embodiment 8B

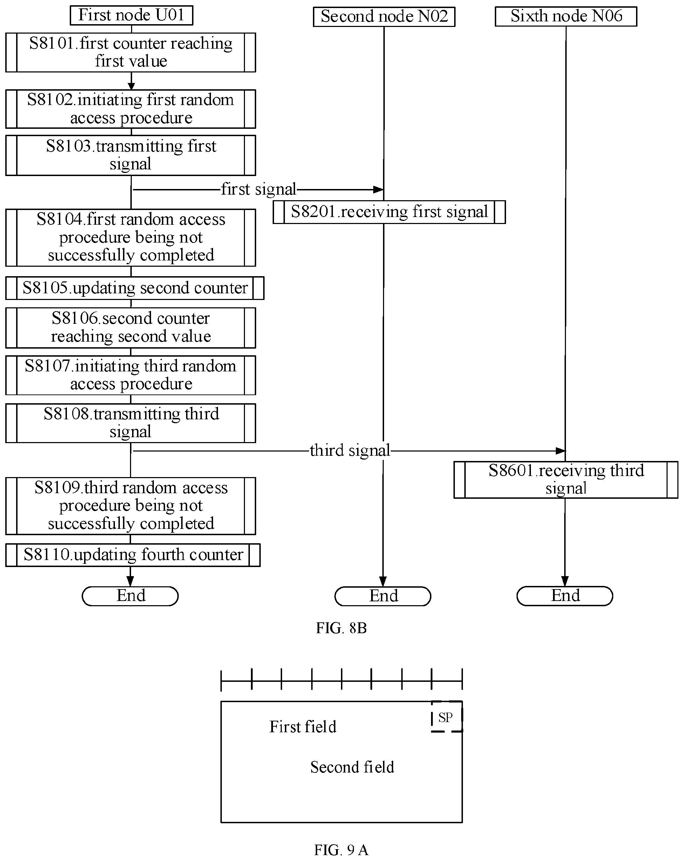

Embodiment 8B illustrates a flowchart of radio signal transmission according to a third embodiment of the present application, as shown in FIG. 8B. It should be particularly noted that the sequence illustrated herein does not set any limit to the signal transmission order or implementation order in the present application.

The **first node U01** determines that a first counter reaches a first value in step S8101; and in step S8102, initiates a first random access procedure when the first counter reaches the first value; transmits a first signal in step S8103; determines that the first random access procedure is not successfully completed in step S8104; and in step S8105, when the first random access procedure is not successfully completed, updates a second counter; and in step S8106, when the first random access procedure is not successfully completed, updates the second counter; in step S8107, when one condition in the first condition set is satisfied and another one condition in the first condition set is not satisfied, initiates a third random access procedure; and transmits a third signal in step S8108; determines that the third random access procedure is not successfully completed in step S8109; and in step S8110, when the third random access procedure is not successfully completed, updates a fourth counter.

The **second node N02** receives the first signal in step S8201.

The **sixth node N06** receives the third signal in step S8601.

In Embodiment 8B, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer; the other one condition comprises that a first resource set does not exist, the first resource set being related to the third random access procedure; the third signal is used for random access; the fourth value is a positive integer; the first signaling is used for an update of radio connection; the first signaling comprises an RRC message.

In one embodiment, the sixth node N06 comprises a base station.

In one embodiment, the sixth node N06 is the same as the second node N02.

In one embodiment, the sixth node N06 is different from the second node N02.

In one embodiment, the sixth node N06 and the second node N02 are respectively two TRPs of the first cell.

In one embodiment, when the second counter reaches the second value, and the fourth counter reaches the fifth value, it is determined that each condition in the first condition set is satisfied.

In one embodiment, the phrase that a condition in the first condition set is satisfied and another condition in the first condition set is not satisfied comprises: the second counter reaching the second value and there existing the first resource set.

In one embodiment, when the second counter reaches the second value, the condition in the first condition set is satisfied.

In one embodiment, when the second counter does not reach the second value, the condition in the first condition set is unsatisfied.

In one embodiment, when the first resource set exists, the other condition in the first condition set is not satisfied.

In one embodiment, when the first resource set does not exist, the other condition in the first condition set is satisfied.

In one embodiment, the third random access procedure refers to a random access procedure triggered by the first counter reaching the first value.

In one embodiment, the third random access procedure is used for a Beam Failure Recovery (BFR).

In one embodiment, the third random access procedure is used for BFR for the first cell.

In one embodiment, the third random access procedure comprises 4-stepRA.

In one embodiment, the third random access procedure comprises 2-stepRA.

In one embodiment, the third random access procedure comprises Contention Based Random Access (CBRA).

In one embodiment, the third random access procedure comprises Contention Free Random Access (CFRA).

In one embodiment, the third random access procedure is performed on the first cell.

In one embodiment, the third random access procedure is performed on the second cell.

In one embodiment, the third signal is transmitted via an air interface.

In one embodiment, the third signal is transmitted via an antenna port.

In one embodiment, the third signal is transmitted via a physical layer signaling.

In one embodiment, the third signal is transmitted via a higher layer signaling.

In one embodiment, the third signal comprises an Uplink (UL) signal.

In one embodiment, the third signal comprises a Preamble.

In one embodiment, the third signal carries the preamble sequence.

In one embodiment, the third signal comprises a Preamble and a PUSCH.

In one embodiment, the third signal is transmitted on a PRACH.

In one embodiment, the third signal is transmitted on a PUSCH.

In one embodiment, the third signal comprises at least one of a PRACH or a PUSCH.

In one embodiment, the third signal is transmitted in a first cell.

In one embodiment, the third signal is transmitted in the first random access procedure.

In one embodiment, the third signal comprises K1 first sub-signal(s), K1 being a positive integer.

In one embodiment, an initial value of the fourth counter equals zero.

In one embodiment, an initial value of the fourth counter is greater than zero.

In one embodiment, the fourth counter is for the first cell.

In one embodiment, the fourth counter is for the first cell and the second cell.

In one embodiment, the fourth counter comprises a PREAMBLE_TRANSMISSION_COUNTER.

In one embodiment, when the preamble sequence is transmitted and the third random access procedure is not successfully completed, the fourth counter is incremented by 1.

In one embodiment, the fifth value is configurable.

In one embodiment, the fifth value is pre-configured.

In one embodiment, the fifth value is configured via an RRC signaling.

In one embodiment, the fifth value is configured via an IE in an RRC signaling, where names of the IE in the RRC signaling include RACH-ConfigGeneric, or RACH-ConfigGenericTwoStepRA, or RACH-ConfigDedicated.

In one embodiment, the fifth value comprises preambleTransMax.

In one embodiment, the fifth value comprises (preambleTransMax + 1).

In one embodiment, the fifth value is a positive integer.

In one embodiment, the fifth value is greater than 0.

In one embodiment, the phrase that the other one condition comprises that a first resource set does not exist comprises that the first resource set not existing is the other one condition in the first condition set.

In one embodiment, the phrase that the other one condition comprises that a first resource set does not exist comprises that the other condition in the first condition set is that a first resource set does not exist.

In one embodiment, the phrase that a first resource set does not exist means that the first resource set cannot be used.

In one embodiment, the phrase that a first resource set does not exist means that the first resource set is unavailable.

In one embodiment, the phrase that a first resource set does not exist means that the first resource set is not configured.

In one embodiment, the phrase of the first resource set being related to the third random access procedure comprises: the first resource set being used for the third random access procedure.

In one embodiment, the phrase of the first resource set being related to the third random access procedure comprises: the first resource set being configured for the third random access procedure.

In one embodiment, the first resource set comprises a BWP configured with random access resources.

In one embodiment, the first resource set comprises a TRP configured with random access resources.

In one embodiment, the first resource set comprises a cell configured with random access resources.

In one embodiment, the first resource set comprises an SSB configured with random access resources.

In one embodiment, the first resource set comprises a CSI-RS configured with random access resources.

In one embodiment, the random access resources comprise an SSB.

In one embodiment, the random access resources comprise a CSI-RS.

In one embodiment, the random access resources comprise a random access type.

In one embodiment, the random access resources comprise a random access occasion.

In one embodiment, the random access resources comprise a random access preamble index.

In one embodiment, the random access resources comprise random access time-frequency resources.

In one embodiment, the random access resources are not totally the same as the random access resources of the first random access procedure.

In one embodiment, the phrase that the first resource set is used for initiating the third random access procedure comprises: the third random access procedure being performed on the first resource set.

In one embodiment, the phrase that the first resource set is used for initiating the third random access procedure comprises: the first resource set being configured for the third random access procedure.

In one embodiment, the phrase that the first resource set is used for initiating the third random access procedure comprises: the first resource set being specific to the third random access procedure.

### Embodiment 9A

Embodiment 9A illustrates a schematic diagram of structure of a second signaling according to one embodiment of the present application, as shown in FIG. 9A. In FIG. 9A, the solid-line box represents a MAC CE comprised in the second signaling; the dotted-line box represents a field in the MAC CE, that is, a SP field; the horizontal width of the solid-line box represents a byte, the byte comprising 8 bits; the vertical height of the solid-line box represents a positive integer number of byte(s).

In Embodiment 9A, the MAC CE in the second signaling comprises a first field and a second field.

In one embodiment, the first field is no larger than a byte.

In one subembodiment, all bits in the first field belong to a same byte.

In one subembodiment, all bits in the first field belong to different bytes.

In one embodiment, the first field is larger than a byte.

In one embodiment, the first field is used to indicate a cell identifier of a neighboring cell.

In one subembodiment, the cell identifier is a cell identifier of a MAC.

In one subembodiment, the cell identifier is different from a PhysCellId.

In one subembodiment, the cell identifier is used to determine an identifier of a TRP.

In one subembodiment, the cell identifier is used to determine an identifier of a TRP link in a physical cell.

In one subembodiment, the cell identifier comprises a PhysCellId.

In one subembodiment, the cell identifier comprises a NeighborCellId.

In one subembodiment, the cell identifier comprises a InterCellId.

In one subembodiment, the cell identifier occupies at least one bit.

In one subembodiment, the cell identifier occupies 5 bits.

In one subembodiment, the cell identifier occupies 6 bits.

In one subembodiment, the cell identifier occupies 10 bits.

In one subembodiment, the second cell is one said neighboring cell.

In one embodiment, the second field is no larger than a byte.

In one subembodiment, all bits in the second field belong to a same byte.

In one subembodiment, all bits in the second field belong to different bytes.

In one embodiment, the second field is larger than a byte.

In one embodiment, the second field is used to indicate a beam identifier of a beam in a neighbor cell.

In one subembodiment, the beam identifier includes identifier(s) of the K3 second-type reference signal(s) in the target reference signal set.

In one subembodiment, the beam identifier includes a Candidate RS Identity (ID).

In one subembodiment, the beam identifier occupies at least one bit.

In one subembodiment, the beam identifier occupies 6 bits.

In one embodiment, the first field and the second field belong to a same field, the same field being used to indicate a cell identifier of a neighbor cell as well as a beam identifier of a beam in a neighbor cell.

In one subembodiment, the beam identifier implicitly indicates the cell identifier.

In one subembodiment, the beam identifier is associated with a cell.

In one embodiment, the dotted-line box is optional.

In one embodiment, when the dotted-line box exists, the MAC CE comprises a BFR MAC CE, or a Truncated BFR MAC CE.

In one subembodiment, the MAC CE comprises a SP field, the SP field being used to indicate that a beam failure occurs in a SpCell, or that a beam failure occurs in an SCell, or that there is a beam of a neighboring cell that satisfies L1/L2 inter-cell mobility.

In one subembodiment, when the first cell is a SpCell, and the first counter of the first cell reaches the second counting threshold, a random access procedure is triggered, and in the random access procedure the MAC CE is transmitted, the SP field being set to 1.

In one subembodiment, when the first cell is an SCell, and the first counter of the first cell reaches the second counting threshold, the MAC CE is transmitted on a PUSCH, the SP field being set to 0.

In one subembodiment, when the first cell is a SpCell, and the first counter of the first cell reaches the first counting threshold, the MAC CE is transmitted on a PUSCH, the SP field being set to 1.

In one embodiment, when the dotted-line box does not exist, the MAC CE comprises neither a BFR MAC CE, nor a Truncated BFR MAC CE.

In one subembodiment, the MAC CE does not comprise the SP field.

In one subembodiment, the MAC CE comprises a new MAC CE, the new MAC CE being used for reporting a beam of a neighboring cell used for L1/L2 inter-cell mobility.

In one subembodiment, the new MAC CE includes a L1/L2 inter-cell mobility MAC CE.

In one subembodiment, the new MAC CE includes a beam level inter-cell mobility MAC CE.

### Embodiment 9B

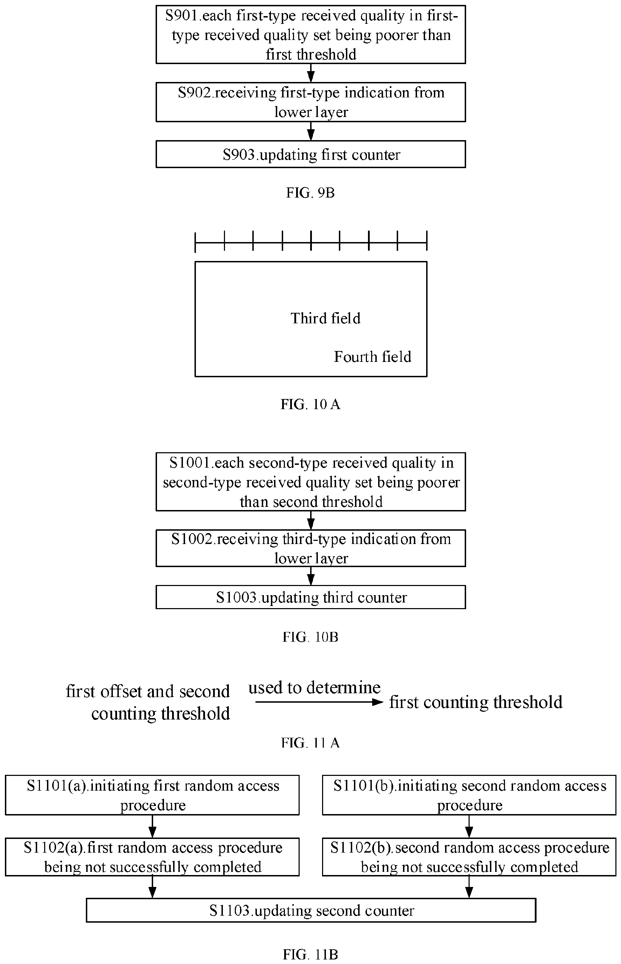

Embodiment 9B illustrates a schematic diagram of a first-type indication being used to determine an update of a first counter according to one embodiment of the present application, as shown in FIG. 9B.

In Embodiment 9B, the first node in the present application determines that each first-type received quality in a first-type received quality set is poorer than a first threshold in step S901; and in step S902, when each first-type received quality in a first-type received quality set is poorer than a first threshold, receives the first-type indication(s) from a lower layer; and in step S903, as a response to the action of receiving the first-type indication(s) from a lower layer, updates the first counter.

In one embodiment, the first-type indication comprises a beam failure instance indication; a measurement on a first reference signal set is used to determine the first-type received quality set.

In one embodiment, the first reference signal set is associated with the first cell.

In one embodiment, a reference signal resource in the first reference signal set is associated with the first cell.

In one embodiment, any reference signal resource in the first reference signal set is indicated by a TCI-state of a signaling, where a TCI-state in the signaling indicates a cell identifier of the first cell.

In one embodiment, when a Physical Cell Identity (PCI) of a cell is used for generating a reference signal resource, the reference signal resource is associated with the cell.

In one embodiment, when a reference signal resource is QCL with an SSB of a cell, the reference signal resource is associated with the cell.

In one embodiment, when a reference signal resource is transmitted by a cell, the reference signal resource is associated with the cell.

In one embodiment, a radio resource occupied by a reference signal resource is indicated by a configuration signaling, where a Radio Link Control (RLC) Bearer through which the configuration signaling is conveyed is configured by a CellGroupConfig Information Element (IE), when a Special cell (Spcell) configured by the CellGroupConfig IE comprises a cell, the reference signal resource is associated with the cell.

In one embodiment, the configuration signaling comprises an RRC signaling.

In one embodiment, the radio resource comprises a time-frequency resource.

In one embodiment, the radio resource comprises an RS sequence.

In one embodiment, the radio resource comprises a code-domain resource.

In one embodiment, the sentence that each first-type received quality in a first-type received quality set is poorer than a first threshold comprises that all first-type received qualities in the first-type received quality set are poorer than the first threshold.

In one embodiment, the sentence that each first-type received quality in a first-type received quality set is poorer than a first threshold comprises that any first-type received quality in the first-type received quality set is poorer than the first threshold.

In one embodiment, the phrase "poorer than" means being no larger than.

In one embodiment, the phrase "poorer than" means being smaller than.

In one embodiment, the phrase "poorer than" means being equal to.

In one embodiment, when each first-type received quality in the first-type received quality set is poorer than the first threshold, a lower layer of the first node transmits the first-type indication to a MAC layer of the first node, the MAC layer receiving the first-type indication from the lower layer.

In one embodiment, the sentence that "as a response to the action of receiving the first-type indication(s) from a lower layer, updating the first counter" comprises that: receiving the first-type indication from the lower layer is used to determine that the first counter is updated.

In one embodiment, the sentence that "as a response to the action of receiving the first-type indication(s) from a lower layer, updating the first counter" comprises that: upon reception of the first-type indication from the lower layer, the first counter is updated.

In one embodiment, the phrase that "a measurement on a first reference signal set is used to determine the first-type received quality set" comprises that: for any given reference signal in the first reference signal set, measuring the given reference signal within a first time interval is used to determine a first-type received quality corresponding to the given reference signal.

In one embodiment, the phrase that "a measurement on a first reference signal set is used to determine the first-type received quality set" comprises that: for any given reference signal in the first reference signal set, the first node obtains a measurement used for computing a first-type received quality corresponding to the given reference signal only according to the given reference signal received within a first time interval.

In one embodiment, the phrase that "a measurement on a first reference signal set is used to determine the first-type received quality set" comprises that: a measurement for any given reference signal in the first reference signal set is used to determine a first-type received quality corresponding to the given reference signal in the first-type received quality set.

In one embodiment, the measurement includes a channel measurement.

In one embodiment, the measurement includes an interference measurement.

In one embodiment, the first time interval is a consecutive duration.

In one embodiment, a length of the first time interval is TEvaluate_BFD_SSB ms or TEvaluate_BFD_CSI-RS ms.

In one embodiment, the definitions of TEvaluate_BFD_SSB and TEvaluate_BFD_CSI-RS can be found in 3GPP TS38.133.

In one embodiment, the first reference signal set comprises a positive integer number of reference signal(s).

In one embodiment, the first reference signal set only comprises one reference signal.

In one embodiment, the first reference signal set comprises more than one reference signal.

In one embodiment, the first reference signal set comprises a Channel State Information-Reference Signal (CSI-RS).

In one embodiment, the first reference signal set comprises a Synchronisation Signal/physical broadcast channel Block (SSB).

In one embodiment, the first reference signal set comprises a Sounding Reference Signal (SRS).

In one embodiment, any reference signal in the first reference signal set includes a CSI-RS or an SSB.

In one embodiment, any reference signal in the first reference signal set is a periodic reference signal.

In one embodiment, any reference signal in the first reference signal set is a periodic reference signal or a semi-persistent reference signal.

In one embodiment, there is a reference signal in the first reference signal set being a semi-persistent reference signal or an aperiodic reference signal.

In one embodiment, all reference signals in the first reference signal set belong to a same Bandwidth Part (BWP) in frequency domain.

In one embodiment, there are two reference signals in the first reference signal set belonging to different BWPs in frequency domain.

In one embodiment, any reference signal in the first reference signal set is associated with a first cell.

In one embodiment, the first reference signal set is configured for the first cell.

In one embodiment, transmitters of all reference signals in the first reference signal set are a same cell.

In one embodiment, there are two reference signals in the first reference signal set of which transmitters are different cells.

In one embodiment, a transmitter of any reference signal in the first reference signal set is a serving cell of the first node.

In one embodiment, there is a reference signal in the first reference signal set of which a transmitter is a non-serving cell of the first node.

In one embodiment, any two reference signals in the first reference signal set are not Quasi-Co-Located (QCL).

In one embodiment, any two reference signals in the first reference signal set are not QCL with QCL-TypeD.

In one embodiment, the first reference signal set is configured by an Information Element (IE).

In one embodiment, names of an IE for configuring the first reference signal set include RadioLinkMonitoringConfig.

In one embodiment, the first reference signal group is configured by a higher layer parameter.

In one embodiment, a higher layer parameter for configuring the first reference signal set comprises all or partial information in a failureDetectionResourcesToAddModList field in a RadioLinkMonitoringConfig IE.

In one embodiment, a higher layer parameter for configuring the first reference signal set comprises all or partial information in a tci-StatesPDCCH-ToAddList field in a ControlResourceSet IE.

In one embodiment, any first-type received quality in the first-type received quality group is a Reference Signal Received Power (RSRP).

In one embodiment, any first-type received quality in the first-type received quality group is a L1-RSRP.

In one embodiment, any first-type received quality in the first-type received quality group is a Signal-to-noise and interference ratio (SINR).

In one embodiment, any first-type received quality in the first-type received quality group is a L1-SINR.

In one embodiment, any first-type received quality in the first-type received quality group is a BLock Error Rate (BLER).

In one embodiment, the first threshold is a real number.

In one embodiment, the first threshold is a non-negative real number.

In one embodiment, the first threshold is a non-negative real number not greater than 1.

In one embodiment, the first threshold is one of Qout L, Qout_LR_SSB or Qout_LR_CSI-RS.

In one embodiment, for definitions of the Qout_L, Qout LR SSB and Qout_LR_CSI-RS, refer to 3GPP TS38.133.

In one embodiment, the first threshold is determined by a higher layer parameter rlmInSyncOutOfSyncThreshold.

In one embodiment, as a response to the action of receiving the first-type indication from a lower layer, starting a beamFailureDetectionTimer and updating the first counter.

### Embodiment 10A

Embodiment 10A illustrates a schematic diagram of structure of a third signaling according to one embodiment of the present application, as shown in FIG. 10A. In FIG. 10A, the dotted-line box represents another MAC CE comprised in the third signaling; the horizontal width of the solid-line box represents a byte, the byte comprising 8 bits; the vertical height of the solid-line box represents a positive integer number of byte(s).

In Embodiment 10A, the other MAC CE in the third signaling comprises a third field and a fourth field.

In one embodiment, the phrase that the other MAC CE in the third signaling comprises a third field and a fourth field comprises that the other MAC CE in the third signaling at least comprises the third field and the fourth field.

In one embodiment, the phrase that the other MAC CE in the third signaling comprises a third field and a fourth field comprises that the third field and the fourth field are two of the fields in the other MAC CE in the third signaling.

In one embodiment, the third field in the third signaling is no larger than a byte.

In one subembodiment, all bits in the third field belong to a same byte.

In one subembodiment, all bits in the third field belong to different bytes.

In one embodiment, the third field in the third signaling is larger than a byte.

In one embodiment, a sub-field in the third field indicates a cell identifier of the second cell.

In one embodiment, a sub-field in the third field indicates a Transmission Configuration Indicator (TCI) State identifier.

In one embodiment, a sub-field in the third field indicates a Data Radio Bearer (DRB) ID.

In one embodiment, a sub-field in the third field indicates a DAPS Data Radio Bearer (DRB) Identity (ID).

In one embodiment, a sub-field in the third field indicates whether a DAPS bearer is enabled or not.

In one subembodiment, the sub-field being set to 1 indicates that a DAPS bearer is enabled.

In one subembodiment, the sub-field being set to 0 indicates that a DAPS bearer is not enabled.

In one embodiment, the third field in the third signaling exists.

In one embodiment, the third field in the third signaling does not exist.

In one embodiment, the fourth field in the third signaling is no larger than a byte.

In one subembodiment, all bits in the fourth field belong to a same byte.

In one subembodiment, all bits in the fourth field belong to different bytes.

In one embodiment, the fourth field in the third signaling is larger than a byte.

In one embodiment, the fourth field in the third signaling is used to indicate random access (RA)-related information.

In one subembodiment, the fourth field comprises a first sub-field, the first sub-field comprising a search space identifier, the search space identifier being used to determine a search space receiving an RAR for the second radio signal.

In one subsidiary embodiment of the above subembodiment, the search space identifier comprises an integer not less than 0 and not greater than 39.

In one subsidiary embodiment of the above subembodiment, the search space identifier occupies 8 bits.

In one subsidiary embodiment of the above subembodiment, the search space identifier is associated with a CORESET.

In one subsidiary embodiment of the above subembodiment, the search space identifier is associated with the second cell.

In one subsidiary embodiment of the above subembodiment, the search space identifier is associated with a BWP.

In one subsidiary embodiment of the above subembodiment, the search space identifier occupies a positive integer number of bit(s).

In one subembodiment, the fourth field comprises a first sub-field, the first sub-field comprising a first sequence index, the first sequence index being used to determine a root sequence of the second radio signal.

In one subsidiary embodiment of the above subembodiment, the first sequence index comprises a positive integer.

In one subsidiary embodiment of the above subembodiment, the first sequence index occupies 10 bits.

In one subsidiary embodiment of the above subembodiment, the first sequence index occupies a positive integer number of bit(s).

In one subembodiment, the fourth field comprises a first sub-field, the first sub-field comprising a first subcarrier spacing, the first subcarrier spacing being used to determine a subcarrier spacing used by the second radio signal.

In one subsidiary embodiment of the above subembodiment, the first subcarrier spacing occupies 1 or 2 bits.

In one subsidiary embodiment of the above subembodiment, the first subcarrier spacing indicates 15 kHz(FR1), or 30 kHz (FR1), or 60 kHz(FR2), or 120 kHz (FR2).

In one subsidiary embodiment of the above subembodiment, the first subcarrier spacing occupies a positive integer number of bit(s).

In one subembodiment, the fourth field comprises a first sub-field, the first sub-field comprising a first preamble sequence, the first preamble sequence being used to determine an index of a preamble of a random access initiated by the second radio signal.

In one subsidiary embodiment of the above subembodiment, the first preamble sequence comprises an integer not less than 0 and not greater than 63.

In one subsidiary embodiment of the above subembodiment, the first preamble sequence occupies 8 bits.

In one subsidiary embodiment of the above subembodiment, the first preamble sequence occupies a positive integer number of bit(s).

In one embodiment, the fourth field in the third signaling exists.

In one embodiment, the fourth field in the third signaling does not exist.

### Embodiment 10B

Embodiment 10B illustrates a schematic diagram of a third-type indication being used to determine an update of a third counter according to one embodiment of the present application, as shown in FIG. 10B.

In Embodiment 10B, the first node in the present application determines in step S1001 that each second-type received quality in a second-type received quality set is poorer than a second threshold; in step S1002, when each second-type received quality in a second-type received quality set is poorer than a second threshold, receives the third-type indication(s) from a lower layer; and in step S1003, as a response to the action of receiving the third-type indication(s) from a lower layer, updates the third counter.

In one embodiment, the first reference signal set is associated with the first cell.

In one embodiment, a reference signal resource in the first reference signal set is associated with the first cell.

In one embodiment, the third-type indication comprises a beam failure instance indication; a measurement on a second reference signal set is used to determine the second-type received quality set.

In one embodiment, the sentence that each second-type received quality in a second-type received quality set is poorer than a second threshold comprises that all second-type received qualities in the second-type received quality set are poorer than the second threshold.

In one embodiment, the sentence that each second-type received quality in a second-type received quality set is poorer than a second threshold comprises that any second-type received quality in the second-type received quality set is poorer than the second threshold.

In one embodiment, when each second-type received quality in the second-type received quality set is poorer than the second threshold, a lower layer of the first node transmits the third-type indication to a MAC layer of the first node, the MAC layer receiving the third-type indication from the lower layer.

In one embodiment, the sentence that "as a response to the action of receiving the third-type indication(s) from a lower layer, updating the third counter" comprises that: receiving the third-type indication from the lower layer is used to determine that the third counter is updated.

In one embodiment, the sentence that "as a response to the action of receiving the third-type indication(s) from a lower layer, updating the third counter" comprises that: upon reception of the third-type indication from the lower layer, the third counter is updated.

In one embodiment, the phrase that "a measurement on a second reference signal set is used to determine the second-type received quality set" comprises that: for any given reference signal in the second reference signal set, measuring the given reference signal within a second time interval is used to determine a second-type received quality corresponding to the given reference signal.

In one embodiment, the phrase that "a measurement on a second reference signal set is used to determine the second-type received quality set" comprises that: for any given reference signal in the second reference signal set, the first node obtains a measurement used for computing a second-type received quality corresponding to the given reference signal only according to the given reference signal received within a second time interval.

In one embodiment, the phrase that "a measurement on a second reference signal set is used to determine the second-type received quality set" comprises that: a measurement for any given reference signal in the second reference signal set is used to determine a second-type received quality corresponding to the given reference signal in the second-type received quality set.

In one embodiment, the second time interval is a consecutive duration.

In one embodiment, a length of the second time interval is TEvaluate_BFD_SSB ms or TEvaluate_BFD_CSI-RS ms.

In one embodiment, the second reference signal set comprises a positive integer number of reference signal(s).

In one embodiment, the second reference signal set only comprises one reference signal.

In one embodiment, the second reference signal set comprises more than one reference signal.

In one embodiment, the second reference signal set comprises a Channel State Information-Reference Signal (CSI-RS).

In one embodiment, the second reference signal set comprises a Synchronisation Signal/physical broadcast channel Block (SSB).

In one embodiment, the second reference signal set comprises a Sounding Reference Signal (SRS).

In one embodiment, any reference signal in the second reference signal set includes a CSI-RS or an SSB.

In one embodiment, any reference signal in the second reference signal set is a periodic reference signal.

In one embodiment, any reference signal in the second reference signal set is a periodic reference signal or a semi-persistent reference signal.

In one embodiment, there is a reference signal in the second reference signal set being a semi-persistent reference signal or an aperiodic reference signal.

In one embodiment, all reference signals in the second reference signal set belong to a same Bandwidth Part (BWP) in frequency domain.

In one embodiment, there are two reference signals in the second reference signal set belonging to different BWPs in frequency domain.

In one embodiment, any reference signal in the second reference signal set is associated with a second cell.

In one embodiment, the second reference signal set is configured for the second cell.

In one embodiment, transmitters of all reference signals in the second reference signal set are a same cell.

In one embodiment, there are two reference signals in the second reference signal set of which transmitters are different cells.

In one embodiment, a transmitter of any reference signal in the second reference signal set is a serving cell of the first node.

In one embodiment, there is a reference signal in the second reference signal set of which a transmitter is a non-serving cell of the first node.

In one embodiment, any two reference signals in the second reference signal set are not Quasi-Co-Located (QCL).

In one embodiment, any two reference signals in the second reference signal set are not QCL with QCL-TypeD.

In one embodiment, the second reference signal set is configured by an Information Element (IE).

In one embodiment, names of an IE for configuring the second reference signal set include RadioLinkMonitoringConfig.

In one embodiment, the second reference signal group is configured by a higher layer parameter.

In one embodiment, a higher layer parameter for configuring the second reference signal set comprises all or partial information in a failureDetectionResourcesToAddModList field in a RadioLinkMonitoringConfig IE.

In one embodiment, a higher layer parameter for configuring the second reference signal set comprises all or partial information in a tci-StatesPDCCH-ToAddList field in a ControlResourceSet IE.

In one embodiment, any second-type received quality in the second-type received quality group is a Reference Signal Received Power (RSRP).

In one embodiment, any second-type received quality in the second-type received quality group is a L1-RSRP.

In one embodiment, any second-type received quality in the second-type received quality group is a Signal-to-noise and interference ratio (SINR).

In one embodiment, any second-type received quality in the second-type received quality group is a L1-SINR.

In one embodiment, any second-type received quality in the second-type received quality group is a BLock Error Rate (BLER).

In one embodiment, the second threshold is a real number.

In one embodiment, the second threshold is a non-negative real number.

In one embodiment, the second threshold is a non-negative real number not greater than 1.

In one embodiment, the second threshold is one of Qout_L, Qout_LR_SSB or Qout_LR_CSI-RS.

In one embodiment, for definitions of the Qout_L, Qout_LR_SSB and Qout_LR_CSI-RS, refer to 3GPP TS38.133.

In one embodiment, the second threshold is determined by a higher layer parameter rlmInSyncOutOfSyncThreshold.

In one embodiment, as a response to the action of receiving the third-type indication from a lower layer, starting a beamFailureDetectionTimer and updating the third counter.

### Embodiment 11A

Embodiment 11A illustrates a schematic diagram of a first offset and a second counting threshold being used to determine a first counting threshold according to one embodiment of the present application, as shown in FIG. 11A.

In one embodiment, the fourth signaling indicates a first offset and the second counting threshold, the first offset and the second counting threshold being used to determine the first counting threshold.

In one embodiment, the phrase of the first offset and the second counting threshold being used to determine the first counting threshold comprises that: a sum of the first offset and the second counting threshold is used to determine the first counting threshold.

In one embodiment, the phrase of the first offset and the second counting threshold being used to determine the first counting threshold comprises that: a difference between the second counting threshold and the first offset is used to determine the first counting threshold.

In one embodiment, the phrase of the first offset and the second counting threshold being used to determine the first counting threshold comprises that: the first offset and the second counting threshold are used together to determine the first counting threshold.

In one embodiment, the phrase of the first offset and the second counting threshold being used to determine the first counting threshold comprises that: the first counting threshold is related to the first offset and the second counting threshold.

In one embodiment, the first offset is configurable.

In one embodiment, the first offset is pre-configured.

In one embodiment, the first offset is equal to 0.

In one embodiment, the first offset is a positive integer greater than 0.

In one embodiment, the phrase that the fourth signaling indicates a first offset and the second counting threshold comprises that the first offset and the second counting threshold are two different fields in a same IE in the fourth signaling.

In one embodiment, the phrase that the fourth signaling indicates a first offset and the second counting threshold comprises that the first offset and the second counting threshold are respectively two different fields in two different IEs in the fourth signaling.

In one embodiment, the first offset comprises a beamFailureInstanceOffset.

In one embodiment, the first offset comprises a beamFailureInstanceMaxCountOffset.

### Embodiment 11B

Embodiment 11B illustrates a schematic diagram of a second counter relating to a first random access procedure and a second random access procedure according to one embodiment of the present application, as shown in FIG. 11B.

In Embodiment 11B, in step S1101(a), initiating a first random access procedure, and in step S1102(a), determining that the first random access procedure is not successfully completed; in step S1101(b), initiating a second random access procedure, and in step S1102(b), determining that the second random access procedure is not successfully completed; when the first random access procedure is not successfully completed, or when the second random access procedure is not successfully completed, updating the second counter.

In one embodiment, when a first counter reaches a first value, initiating a first random access procedure, and transmitting a first signal; when the first random access procedure is not successfully completed, updating a second counter; when a third counter reaches a third value, initiating a second random access procedure, and transmitting a second signal; when the second random access procedure is not successfully completed, updating the second counter; as a response to each condition in a first condition set being satisfied, generating a second-type indication to be conveyed to an upper layer.

In one embodiment, a condition in the first condition set is that the second counter reaches a second value.

In one embodiment, another condition in the first condition set comprises that neither of the first random access procedure and the second random access is being performed.

In one embodiment, the phrase that each condition in a first condition set is satisfied means that the condition is being satisfied.

In one embodiment, the phrase that each condition in a first condition set is satisfied means that the condition and the other condition are being satisfied.

In one embodiment, the phrase that each condition in a first condition set is satisfied means that the second counter reaches the second value.

In one embodiment, the phrase that each condition in a first condition set is satisfied means that the second counter reaches the second value, and neither of the first random access procedure and the second random access is being performed.

### Embodiment 12A

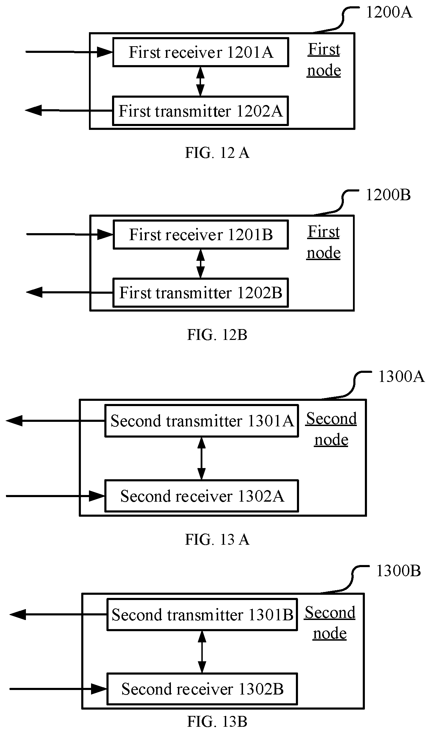

Embodiment 12A illustrates a structure block diagram of a processing device used in a first node according to one embodiment of the present application; as shown in FIG. 12A. In FIG. 12A, a processing device 1200A in a first node comprises a first receiver 1201A and a first transmitter 1202A.

The first receiver 1201A receives a first signaling; and receives a third signaling; the third signaling carrying information for accessing to a second cell; and performs measurements on a first reference signal set and a second reference signal set; and
the first transmitter 1202A transmits a second signaling when a first condition and a second condition are both satisfied; the second signaling indicating a target reference signal set, the target reference signal set being a subset in the second reference signal set.

In Embodiment 12A, the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the first receiver 1201A receives a fourth signaling, the fourth signaling being used to determine at least one of a first counting threshold or a second counting threshold of a first counter; a relative magnitude of a result of the measurement on the first reference signal set and a first measurement threshold is used for generating a first indication, the first indication being used to determine an update of the first counter; the first transmitter 1202A, when the first counter reaches the second counting threshold, determines that a beam failure occurs in the first cell; and as a response to the action of determining that a beam failure occurs in the first cell, transmits a first radio signal; herein, the first condition is related to the first counter satisfying the first counting threshold; the first radio signal is used for initiating a random access procedure; the first counting threshold is not greater than the second counting threshold.

In one embodiment, the first receiver 1201A receives a fourth signaling, the fourth signaling being used to determine a second counting threshold of a first counter; a relative magnitude of a result of the measurement on the first reference signal set and a first measurement threshold is used for generating a first indication, the first indication being used to determine an update of the first counter; when the first counter reaches the second counting threshold, determining that a beam failure occurs in the first cell; the first transmitter 1202A, as a response to the action of determining that a beam failure occurs in the first cell, transmits a first radio signal; the first radio signal is used for initiating a random access procedure.

In one embodiment, the first receiver 1201A receives a fifth signaling; the fifth signaling is used to determine a third counting threshold of a second counter; a relative magnitude of a result of the measurement on the second reference signal set and a second measurement threshold is used for generating a second indication, the second indication being used to determine an update of the second counter; herein, the second condition is related to the second counter satisfying the third counting threshold.

In one embodiment, the first transmitter 1202A, as a response to receiving the third signaling, transmits a second radio signal on the second cell; herein, the second radio signal is used for initiating a random access procedure, the second radio signal comprising a preamble sequence.

In one embodiment, the first receiver 1201A receives a sixth signaling; and as a response to receiving the third signaling, starting a first timer; when the first timer reaches a first expiration value, determines that a random access procedure performed on the second cell is failed; and after completing the random access procedure on the second cell, and when the first timer is smaller than the first expiration value, stops the first timer; herein, the sixth signaling indicates the first expiration value of the first timer.

In one embodiment, the first receiver 1201A, when a Beam Failure Recovery (BFR) failure occurs in the first cell, drops determining that a first connection failure occurs if the first timer is running; and/or when the first timer is expired, returns to the first cell if the BFR failure does not occur in the first cell; and/or when the first timer is expired, determines that a second connection failure occurs if the BFR failure occurs in the first cell.

In one embodiment, the fourth signaling indicates a first offset and the second counting threshold, the first offset and the second counting threshold being used to determine the first counting threshold.

In one embodiment, the first receiver 1201A comprises the antenna 452, the receiver 454, the multi-antenna receiving processor 458, the receiving processor 456, the controller/processor 459, the memory 460 and the data source 467 in FIG. 4 of the present application.

In one embodiment, the first receiver 1201A comprises the antenna 452, the receiver 454, the multi-antenna receiving processor 458 and the receiving processor 456 in FIG. 4 of the present application.

In one embodiment, the first receiver 1201A comprises the antenna 452, the receiver 454 and the receiving processor 456 in FIG. 4 of the present application.

In one embodiment, the first transmitter 1202A comprises the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter 1202A comprises the antenna 452, the transmitter 454, the multi-antenna transmitting processor 457 and the transmitting processor 468 in FIG. 4 of the present application.

In one embodiment, the first transmitter 1202A comprises the antenna 452, the transmitter 454 and the transmitting processor 468 in FIG. 4 of the present application.

### Embodiment 12B

Embodiment 12B illustrates a structure block diagram of a processing device used in a first node according to one embodiment of the present application; as shown in FIG. 12B. In FIG. 12B, a processing device 1200B in a first node comprises a first receiver 1201B and a first transmitter 1202B.

The first transmitter 1202B, when a first counter reaches a first value, initiates a first random access procedure, and transmits a first signal; when the first random access procedure is not successfully completed, updates a second counter;
the first receiver 1201B, as a response to each condition in a first condition set being satisfied, generates a second-type indication to be conveyed to an upper layer.

In Embodiment 12B, the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

In one embodiment, the first transmitter 1202B, when a third counter reaches a third value, initiates a second random access procedure and transmits a second signal; when the second random access procedure is not successfully completed, updates the second counter; herein, the third counter indicates a number of times that third-type indication(s) from lower layer(s) is(are) received; the second signal is used for random access; the third value is a positive integer.

In one embodiment, the first signal is transmitted before the second signal; when the first random access procedure is ongoing and the second counter hasn't reached a fourth value yet, the second random access procedure is initiated, where the fourth value is a positive integer not greater than the second value.

In one embodiment, another condition in the first condition set comprises that neither of the first random access procedure and the second random access is being performed.

In one embodiment, the first transmitter 1202B, as a response to the action of generating a second-type indication to be conveyed to an upper layer, transmits a first signaling; herein, the first signaling is used for an update of radio connection; the first signaling comprises an RRC message.

In one embodiment, the first receiver 1201B receives a second signaling; the first transmitter 1202B, as a response to a given condition in the first condition set not being satisfied, drops generating the second-type indication, and transmits a third signaling; and as a response to the third signaling being transmitted, starts a first timer; the first receiver 1201B receives a fourth signaling; and as a response to receiving the fourth signaling, stops the first timer; when the first timer reaches a first expiration value, determines that a first-type radio connection failure occurs; herein, the second signaling indicates the first expiration value of the first timer; the first expiration value is used to determine a maximum time interval of a first-type beam recovery; the third signaling indicates a target reference signal set; the target reference signal set is related to the first-type beam recovery; the fourth signaling carries configuration information of the target reference signal set.

In one embodiment, the first receiver 1201B receives a fifth signaling; herein, the fifth signaling indicates a second expiration value of a second timer; the second expiration value is used to determine a maximum time interval of inter-cell mobility; the second timer reaching the second expiration value is used to determine that the inter-cell mobility is failed; another condition in the first condition set is: the second timer not being running.

In one embodiment, the first receiver 1201B, when each first-type received quality in a first-type received quality set is poorer than a first threshold, receives the first-type indication(s) from a lower layer; and as a response to the action of receiving the first-type indication(s) from a lower layer, updates the first counter; herein, the first-type indication(s) comprises(comprise) an indication of a beam failure instance; a measurement on a first reference signal set is used to determine the first-type received quality set.

In one embodiment, the first receiver 1201B, when each second-type received quality in a second-type received quality set is poorer than a second threshold, receives the third-type indication(s) from a lower layer; and as a response to the action of receiving the third-type indication(s) from a lower layer, updates the third counter; herein, the third-type indication(s) comprises(comprise) an indication of a beam failure instance; a measurement on a second reference signal set is used to determine the second-type received quality set.

In one embodiment, the first transmitter 1202B, when one condition in the first condition set is satisfied and another one condition in the first condition set is not satisfied, initiates a third random access procedure, and transmits a third signal; when the third random access procedure is not successfully completed, updates a fourth counter;

herein, the other one condition comprises that a first resource set does not exist, the first resource set being related to the third random access procedure; the third signal is used for random access; the fourth value is a positive integer.

In one embodiment, the first receiver 1201B comprises at least one of the antenna 452, or the receiver 454, or the multi-antenna receiving processor 458, or the receiving processor 456, or the controller/processor 459, or the memory 460, or the data source 467 in FIG. 4 of the present application.

In one embodiment, the first transmitter 1202B comprises at least one of the antenna 452, or the transmitter 454, or the multi-antenna transmitting processor 457, or the transmitting processor 468, or the controller/processor 459, or the memory 460, or the data source 467 in FIG. 4 of the present application.

### Embodiment 13A

Embodiment 13A illustrates a structure block diagram of a processing device used in a second node according to one embodiment of the present application; as shown in FIG. 13A. In FIG. 13A, a processing device 1300A in the second node comprises a second transmitter 1301A and a second receiver 1302A.

The second transmitter 1301A transmits a first signaling; and transmits a third signaling; the third signaling carrying information for accessing to a second cell; and performs measurements on a first reference signal set and a second reference signal set; and
the second receiver 1302A receives a second signaling; the second signaling indicating a target reference signal set, the target reference signal set being a subset in the second reference signal set.

In Embodiment 13A, a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

In one embodiment, the second transmitter 1301A transmits a fourth signaling, the fourth signaling being used to determine at least one of a first counting threshold or a second counting threshold of a first counter; the second receiver 1302A, when the first counter reaches the second counting threshold, determines that a beam failure has occurred in the first cell; as a response to the phrase that it is determined that a beam failure occurs in the first cell, receives a first radio signal; herein, a relative magnitude of a result of the measurement on the first reference signal set and a first measurement threshold is used for generating a first indication, the first indication being used to determine an update of the first counter; the first condition is related to the first counter satisfying the first counting threshold; the first radio signal is used for initiating a random access procedure; the first counting threshold is not greater than the second counting threshold.

In one embodiment, the second transmitter 1301A transmits a fourth signaling, the fourth signaling being used to determine a second counting threshold of a first counter; a relative magnitude of a result of the measurement on the first reference signal set and a first measurement threshold is used for generating a first indication, the first indication being used to determine an update of the first counter; the second receiver 1302A, when the first counter reaches the second counting threshold, determines that a beam failure has occurred in the first cell; and as a response to the action of determining that a beam failure occurs in the first cell, receiving a first radio signal; the first radio signal is used for initiating a random access procedure.

In one embodiment, the second transmitter 1301A transmits a fifth signaling; the fifth signaling is used to determine a third counting threshold of a second counter; herein, a relative magnitude of a result of the measurement on the second reference signal set and a second measurement threshold is used for generating a second indication, the second indication being used to determine an update of the second counter; the second condition is related to the second counter satisfying the third counting threshold.

In one embodiment, as a response to receiving the third signaling, a second radio signal is received on the second cell; herein, the second radio signal is used for initiating a random access procedure, the second radio signal comprising a preamble sequence.

In one embodiment, the second transmitter 1301A transmits a sixth signaling; herein, the sixth signaling indicates a first expiration value of a first timer; and as a response to receiving the third signaling, the first timer is started; when the first timer reaches the first expiration value, a random access procedure performed on the second cell is determined to be failed; and after completing the random access procedure on the second cell, and when the first timer is smaller than the first expiration value, the first timer is stopped.

In one embodiment, when a Beam Failure Recovery (BFR) failure occurs in the first cell, determining an occurrence of a first connection failure is dropped if the first timer is running; or when the first timer is expired, the first cell is returned if the BFR failure does not occur in the first cell; or when the first timer is expired, an occurrence of a second connection failure is determined if the BFR failure occurs in the first cell.

In one embodiment, the fourth signaling indicates a first offset and the second counting threshold, the first offset and the second counting threshold being used to determine the first counting threshold.

In one embodiment, the second transmitter 1301A comprises the antenna 420, the transmitter 418, the multi-antenna transmitting processor 471, the transmitting processor 416, the controller/processor 475 and the memory 476 in FIG. 4 of the present application.

In one embodiment, the second transmitter 1301A comprises the antenna 420, the transmitter 418, the multi-antenna transmitting processor 471and the transmitting processor 416 in FIG. 4 of the present application.

In one embodiment, the second transmitter 1301A comprises the antenna 420, the transmitter 418 and the transmitting processor 416 in FIG. 4 of the present application.

In one embodiment, the second receiver 1302A comprises the antenna 420, the receiver 418, the multi-antenna receiving processor 472, the receiving processor 470, the controller/processor 475 and the memory 476 in FIG. 4 of the present application.

In one embodiment, the second receiver 1302A comprises the antenna 420, the receiver 418, the multi-antenna receiving processor 472 and the receiving processor 470 in FIG. 4 of the present application.

In one embodiment, the second receiver 1302A comprises the antenna 420, the receiver 418 and the receiving processor 470 in FIG. 4 of the present application.

### Embodiment 13B

Embodiment 13B illustrates a structure block diagram of a processing device used in a second node according to one embodiment of the present application; as shown in FIG. 13B. In FIG. 13B, a processing device 1300B in a second node comprises a second transmitter 1301B and a second receiver 1302B.

The second receiver 1302B receives a first signal.

In Embodiment 13B, when a first counter reaches a first value, a first random access procedure is initiated; when the first random access procedure is not successfully completed, a second counter is updated; as a response to each condition in a first condition set being satisfied, a second-type indication is generated and conveyed to an upper layer; the first counter indicates a number of times that first-type indication(s) from lower layer(s) is(are) received; the first signal is used for random access; the second counter indicates a number of transmissions of a preamble sequence; a condition in the first condition set is that the second counter reaches a second value; the first value is a positive integer; the second value is a positive integer.

In one embodiment, a second signal is received; when a third counter reaches a third value, a second random access procedure is initiated; when the second random access procedure is not successfully completed, the second counter is updated; the third counter indicates a number of times that third-type indication(s) from lower layer(s) is(are) received; the second signal is used for random access; the third value is a positive integer.

In one embodiment, a transmitter of the second signal includes a transmitter of the first signal.

In one embodiment, a receiver of the second signal includes a node other than the second node.

In one embodiment, a receiver of the second signal includes the second node.

In one embodiment, the first signal is transmitted before the second signal; when the first random access procedure is ongoing and the second counter hasn't reached a fourth value yet, the second random access procedure is initiated, where the fourth value is a positive integer not greater than the second value.

In one embodiment, another condition in the first condition set comprises that neither of the first random access procedure and the second random access is being performed.

In one embodiment, a first signaling is received; as a response to the action that a second-type indication is generated and conveyed to an upper layer, the first signaling is transmitted; the first signaling is used for an update of radio connection; the first signaling comprises an RRC message.

In one embodiment, a receiver of the first signaling includes a transmitter of the first signal.

In one embodiment, a transmitter of the first signaling includes a node other than the second node.

In one embodiment, a transmitter of the first signaling includes the second node.

In one embodiment, the second transmitter 1301B transmits a second signaling; herein, a third signaling is transmitted; a fourth signaling is received; as a response to a given condition in the first condition set not being satisfied, generation of the second-type indication is dropped; and as a response to the third signaling being transmitted, a first timer is started; as a response to the fourth signaling being received, the first timer is stopped; when the first timer reaches a first expiration value, an occurrence of a first-type radio connection failure is determined; the second signaling indicates the first expiration value of the first timer; the first expiration value is used to determine a maximum time interval of a first-type beam recovery; the third signaling indicates a target reference signal set; the target reference signal set is related to the first-type beam recovery; the fourth signaling carries configuration information of the target reference signal set.

In one embodiment, a receiver of the third signaling includes a transmitter of the first signal.

In one embodiment, a transmitter of the third signaling includes a node other than the second node.

In one embodiment, a transmitter of the third signaling includes the second node.

In one embodiment, a transmitter of the fourth signaling is the same as a receiver of the third signaling.

In one embodiment, the second transmitter 1301B transmits a fifth signaling; herein, the fifth signaling indicates a second expiration value of a second timer; the second expiration value is used to determine a maximum time interval of inter-cell mobility; the second timer reaching the second expiration value is used to determine that the inter-cell mobility is failed; another condition in the first condition set is: the second timer not being running.

In one embodiment, when each first-type received quality in a first-type received quality set is poorer than a first threshold, the first-type indication(s) from a lower layer is(are) received; and as a response to the action of receiving the first-type indication(s) from a lower layer, the first counter is updated; herein, the first-type indication(s) comprises(comprise) an indication of a beam failure instance; a measurement on a first reference signal set is used to determine the first-type received quality set.

In one embodiment, when each second-type received quality in a second-type received quality set is poorer than a second threshold, the third-type indication(s) from a lower layer is(are) received; and as a response to the action of receiving the third-type indication(s) from a lower layer, the third counter is updated; herein, the third-type indication(s) comprises(comprise) an indication of a beam failure instance; a measurement on a second reference signal set is used to determine the second-type received quality set.

In one embodiment, when one condition in the first condition set is satisfied and another one condition in the first condition set is not satisfied, a third random access procedure is initiated, and a third signal is transmitted; when the third random access procedure is not successfully completed, a fourth counter is updated; herein, the other one condition comprises that a first resource set does not exist, the first resource set being related to the third random access procedure; the third signal is used for random access; the fourth value is a positive integer.

In one embodiment, the second transmitter 1301B comprises at least one of the antenna 420, or the transmitter 418, or the multi-antenna transmitting processor 471, or the transmitting processor 416, or the controller/processor 475, or the memory 476 in FIG. 4 of the present application.

In one embodiment, the second receiver 1302B comprises at least one of the antenna 420, or the receiver 418, or the multi-antenna receiving processor 472, or the receiving processor 470, or the controller/processor 475, or the memory 476 in FIG. 4 of the present application.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first receiver, receiving a first signaling; and receiving a third signaling; the third signaling carrying information for accessing to a second cell; and performing measurements on a first reference signal set and a second reference signal set; and
a first transmitter, transmitting a second signaling when a first condition and a second condition are both satisfied; the second signaling indicating a target reference signal set, the target reference signal set being a subset in the second reference signal set;
wherein the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with a first cell, while the second reference signal set is associated with the second cell; the measurement on the first reference signal set is used to determine whether the first condition is satisfied; the measurement on the second reference signal set is used to determine whether the second condition is satisfied.

2. The first node according to claim 1, comprising:
the first receiver, receiving a fourth signaling, the fourth signaling being used to determine at least one of a first counting threshold or a second counting threshold of a first counter; a relative magnitude of a result of the measurement on the first reference signal set and a first measurement threshold is used for generating a first indication, the first indication being used to determine an update of the first counter;
the first transmitter, when the first counter reaches the second counting threshold, determining that a beam failure occurs in the first cell; and as a response to the action of determining that a beam failure occurs in the first cell, transmitting a first radio signal;
wherein the first condition is related to the first counter satisfying the first counting threshold; the first radio signal is used for initiating a random access procedure; the first counting threshold is not greater than the second counting threshold.

3. The first node according to claim 1 or 2, comprising:
the first receiver, receiving a fifth signaling; the fifth signaling is used to determine a third counting threshold of a second counter; a relative magnitude of a result of the measurement on the second reference signal set and a second measurement threshold is used for generating a second indication, the second indication being used to determine an update of the second counter;
wherein the second condition is related to the second counter satisfying the third counting threshold.

4. The first node according to any of claims 1-3, comprising:
the first transmitter, as a response to receiving the third signaling, transmitting a second radio signal on the second cell;
wherein the second radio signal is used for initiating a random access procedure, the second radio signal comprising a preamble sequence.

5. The first node according to any of claims 1-4, comprising:
the first receiver, receiving a sixth signaling; and as a response to receiving the third signaling, starting a first timer; when the first timer reaches a first expiration value, determining that a random access procedure performed on the second cell is failed; after completing the random access procedure on the second cell, and when the first timer is smaller than the first expiration value, stopping the first timer;
wherein the sixth signaling indicates the first expiration value of the first timer.

6. The first node according to claim 5, comprising:
the first receiver, when a Beam Failure Recovery (BFR) failure occurs in the first cell, dropping determining that a first connection failure occurs if the first timer is running; when the first timer is expired, returning to the first cell if the BFR failure does not occur in the first cell; when the first timer is expired, determining that a second connection failure occurs if the BFR failure occurs in the first cell.

7. The first node according to claim 2, wherein the fourth signaling indicates a first offset and the second counting threshold, the first offset and the second counting threshold being used to determine the first counting threshold.

8. A second node for wireless communications, comprising:
a second transmitter, transmitting a first signaling; and transmitting a third signaling; the third signaling carrying information for accessing to a second cell; and performing measurements on a first reference signal set and a second reference signal set; and
a second receiver, receiving a second signaling; the second signaling indicating a target reference signal set, the target reference signal set being a subset in the second reference signal set;
wherein a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below an RRC layer; the first reference signal set is associated with a first cell, while the second reference signal set is associated with the second cell; the measurement on the first reference signal set is used to determine whether the first condition is satisfied; the measurement on the second reference signal set is used to determine whether the second condition is satisfied.

9. The second node according to claim 8, comprising:
the second transmitter, transmitting a fourth signaling, the fourth signaling being used to determine at least one of a first counting threshold or a second counting threshold of a first counter; and
the second receiver, where when the first counter reaches the second counting threshold, it is determined that a beam failure occurs in the first cell; and as a response to the phrase that it is determined that a beam failure occurs in the first cell, receiving a first radio signal;
wherein a relative magnitude of a result of the measurement on the first reference signal set and a first measurement threshold is used for generating a first indication, the first indication being used to determine an update of the first counter; the first condition is related to the first counter satisfying the first counting threshold; the first radio signal is used for initiating a random access procedure; the first counting threshold is not greater than the second counting threshold.

10. The second node according to claim 8 or 9, comprising:
the second transmitter, transmitting a fifth signaling; the fifth signaling is used to determine a third counting threshold of a second counter;
wherein a relative magnitude of a result of the measurement on the second reference signal set and a second measurement threshold is used for generating a second indication, the second indication being used to determine an update of the second counter; the second condition is related to the second counter satisfying the third counting threshold.

11. The second node according to any of claims 8-10, comprising:
the second transmitter, transmitting a sixth signaling;
wherein the sixth signaling indicates a first expiration value of a first timer; and as a response to receiving the third signaling, the first timer is started; when the first timer reaches the first expiration value, a random access procedure performed on the second cell is determined to be failed; and after completing the random access procedure on the second cell, and when the first timer is smaller than the first expiration value, the first timer is stopped.

12. A method in a first node for wireless communications, comprising:
receiving a first signaling; and performing measurements on a first reference signal set and a second reference signal set; and
transmitting a second signaling when a first condition and a second condition are both satisfied; the second signaling indicating a target reference signal set, the target reference signal set being a subset in the second reference signal set; and
receiving a third signaling; the third signaling carrying information for accessing to a second cell;
wherein the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with a first cell, while the second reference signal set is associated with the second cell; the measurement on the first reference signal set is used to determine whether the first condition is satisfied; the measurement on the second reference signal set is used to determine whether the second condition is satisfied.

13. The method in the first node for wireless communications according to claim 12, comprising:
receiving a fourth signaling, the fourth signaling being used to determine at least one of a first counting threshold or a second counting threshold of a first counter; a relative magnitude of a result of the measurement on the first reference signal set and a first measurement threshold is used for generating a first indication, the first indication being used to determine an update of the first counter;
when the first counter reaches the second counting threshold, determining that a beam failure occurs in the first cell; and as a response to the action of determining that a beam failure occurs in the first cell, transmitting a first radio signal;
wherein the first condition is related to the first counter satisfying the first counting threshold; the first radio signal is used for initiating a random access procedure; the first counting threshold is not greater than the second counting threshold.

14. The method in the first node for wireless communications according to claim 12 or 13, comprising:
receiving a fifth signaling; the fifth signaling is used to determine a third counting threshold of a second counter; a relative magnitude of a result of the measurement on the second reference signal set and a second measurement threshold is used for generating a second indication, the second indication being used to determine an update of the second counter;
wherein the second condition is related to the second counter satisfying the third counting threshold.

15. The method in the first node for wireless communications according to any of claims 12-14, comprising:
as a response to receiving the third signaling, transmitting a second radio signal on the second cell;
wherein the second radio signal is used for initiating a random access procedure, the second radio signal comprising a preamble sequence.

16. The method in the first node for wireless communications according to any of claims 12-15, comprising:
receiving a sixth signaling; and as a response to receiving the third signaling, starting a first timer; and/or, when the first timer reaches a first expiration value, determining that a random access procedure performed on the second cell is failed; and/or, after completing the random access procedure on the second cell, and when the first timer is smaller than the first expiration value, stopping the first timer;
wherein the sixth signaling indicates the first expiration value of the first timer.

17. The method in the first node for wireless communications according to claim 16, comprising:
when a Beam Failure Recovery (BFR) failure occurs in the first cell, dropping determining that a first connection failure occurs if the first timer is running; and/or when the first timer is expired, returning to the first cell if the BFR failure does not occur in the first cell; and/or when the first timer is expired, determining that a second connection failure occurs if the BFR failure occurs in the first cell.

18. The method in the first node for wireless communications according to claim 13, wherein the fourth signaling indicates a first offset and the second counting threshold, the first offset and the second counting threshold being used to determine the first counting threshold.

19. A method in a second node for wireless communications, comprising:
transmitting a first signaling; and performing measurements on a first reference signal set and a second reference signal set; and
receiving a second signaling; the second signaling indicating a target reference signal set, the target reference signal set being a subset in the second reference signal set; and
transmitting a third signaling; the third signaling carrying information for accessing to a second cell;
wherein a first condition and a second condition are both satisfied; the first signaling comprises a measurement configuration; the first signaling indicates the first reference signal set, the second reference signal set, the first condition and the second condition; the second signaling comprises a measurement report; the second signaling and the third signaling are signalings of a layer below a Radio Resource Control (RRC) layer; the first reference signal set is associated with the first cell, while the second reference signal set is associated with the second cell; the measurement on the first reference signal set is used to determine whether the first condition is satisfied; the measurement on the second reference signal set is used to determine whether the second condition is satisfied.

20. The method in the second node for wireless communications according to claim 19, comprising:
transmitting a fourth signaling, the fourth signaling being used to determine at least one of a first counting threshold or a second counting threshold of a first counter;
when the first counter reaches the second counting threshold, it is determined that a beam failure occurs in the first cell; as a response to the phrase that it is determined that a beam failure occurs in the first cell, receiving a first radio signal;
wherein a relative magnitude of a result of the measurement on the first reference signal set and a first measurement threshold is used for generating a first indication, the first indication being used to determine an update of the first counter; the first condition is related to the first counter satisfying the first counting threshold; the first radio signal is used for initiating a random access procedure; the first counting threshold is not greater than the second counting threshold.

21. The method in the second node for wireless communications according to claim 19 or 20, comprising:
transmitting a fifth signaling; the fifth signaling is used to determine a third counting threshold of a second counter;
wherein a relative magnitude of a result of the measurement on the second reference signal set and a second measurement threshold is used for generating a second indication, the second indication being used to determine an update of the second counter; the second condition is related to the second counter satisfying the third counting threshold.

22. The method in the second node for wireless communications according to any of claims 19-21, comprising:
transmitting a sixth signaling;
wherein the sixth signaling indicates a first expiration value of a first timer; and as a response to receiving the third signaling, the first timer is started; when the first timer reaches the first expiration value, a random access procedure performed on the second cell is determined to be failed; and after completing the random access procedure on the second cell, and when the first timer is smaller than the first expiration value, the first timer is stopped.
